(19) Europäisches Patentamt
European Patent Office
Office européen des brevets

(11) EP 2 092 825 A1

(12) # EUROPÄISCHE PATENTANMELDUNG

(43) Veröffentlichungstag:
**26.08.2009 Patentblatt 2009/35**

(21) Anmeldenummer: **08003156.0**

(22) Anmeldetag: **21.02.2008**

(51) Int Cl.:
***A01N 43/68*** *(2006.01)* ***A01N 47/38*** *(2006.01)*
***A01N 47/36*** *(2006.01)* ***A01N 43/90*** *(2006.01)*
***A01N 43/80*** *(2006.01)* ***A01N 43/56*** *(2006.01)*
***A01N 43/54*** *(2006.01)* ***A01N 43/40*** *(2006.01)*
***A01N 43/12*** *(2006.01)* ***A01N 41/10*** *(2006.01)*
***A01P 13/00*** *(2006.01)*

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(71) Anmelder: **Bayer CropScience Aktiengesellschaft**
**40789 Monheim (DE)**

(72) Erfinder:
- **Hacker, Erwin, Dr.**
  **65239 Hochheim (DE)**
- **Hess, Martin, Dr.**
  **55128 Mainz-Bretzenheim (DE)**
- **Hills, Martin**
  **65510 Idstein (DE)**
- **Bonfig-Picard, Georg, Dr.**
  **63717 Rodenbach (DE)**
- **Auler, Thomas, Dr.**
  **42799 Leichlingen (DE)**

(54) **Herbizid-Kombinationen enthaltend ein Herbizid der Klasse der Diamino-s-triazine**

(57) Herbizid-Kombinationen mit einem wirksamen Gehalt an Komponenten (A) und (B),
wobei
Komponente (A) ein oder mehrere Herbizide der Formel (I) oder deren Salze,

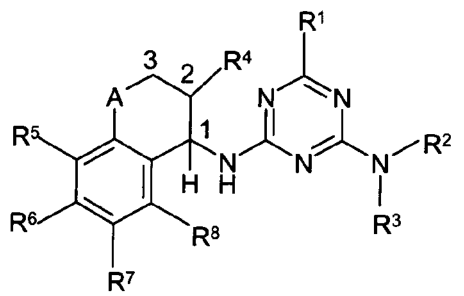

(I)

worin
$R^1$ H oder eine Gruppe der Formel $CZ^1Z^2Z^3$, wobei $Z^1$, $Z^2$ und $Z^3$ wie im Anspruch 1 definiert sind, $R^2$ und $R^3$ jeweils H, Alkyl, Haloalkyl, Alkenyl, Haloalkenyl, Alkinyl, Haloalkinyl mit jeweils bis zu 4 C-Atomen oder Acyl, $R^4$ H, $(C_1\text{-}C_6)$Alkyl oder $(C_1\text{-}C_6)$Alkoxy; $R^5$, $R^6$, $R^7$ und $R^8$ jeweils H, $(C_1\text{-}C_4)$Alkyl, $(C_1\text{-}C_3)$Haloalkyl, Halogen, $(C_1\text{-}C_3)$Alkoxy, $(C_1\text{-}C_3)$ Haloalkoxy oder Cyano;
A $CH_2$ oder O oder eine direkte Bindung bedeuten, und
die Komponente (B) ein oder mehrere Herbizide aus der Gruppe der Verbindungen,
(B1) Thiencarbazone, Tembotrione, SYN-523, Pyroxsulam, Penoxsulam, SYN-449,
(B2) Pyrasulfotole, Trifloxysulfuron, Saflufenacil, Aminopyralid, Ethofumesate, Aminocyclopyrachlor und
(B3) Pyroxasulfone (KIH-485)
bedeuten, eignen sich zur Bekämpfung von Schadpflanzen oder zur Wachstumsregulierung von Pflanzen.

EP 2 092 825 A1

**Beschreibung**

Die Erfindung liegt auf dem technischen Gebiet der Pflanzenschutzmittel, die gegen unerwünschten Pflanzenwuchs in Nichtkulturland, zur Saatvorbereitung oder in Pflanzenkulturen eingesetzt werden können und als Herbizidwirkstoffe eine Kombination von mindestens zwei Herbiziden enthalten, wobei eine Herbizidkomponente aus der Gruppe bestimmter bicyclisch substituierter Azine ausgewählt ist.

Verbindungen aus der Strukturklasse N-substituierter Diamino-s-triazine, die an einer Aminogruppe bicyclische Reste aufweisen, sind als Herbizide bekannt (siehe z. B. WO-A-97/31904 oder US-A-6069114). Die Verbindungen sind wirksam gegen ein breites Spektrum von Schadpflanzen im Vorauflauf als auch im Nachauflaufapplikationsverfahren, wobei ein nichtselektiver Einsatz zur Bekämpfung von unerwünschtem Pflanzenwuchs oder ein selektiver Einsatz, gegebenenfalls in Kombination mit Safenern, in Pflanzenkulturen möglich ist.

Die Wirksamkeit dieser Herbizide gegen Schadpflanzen liegt auf einem hohen Niveau, hängt jedoch im Allgemeinen von der Aufwandmenge, der jeweiligen Zubereitungsform, dem Schadpflanzenspektrum, den jeweils zu bekämpfenden Schadpflanzen, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt durch höhere Aufwandmengen der Herbizide ausgleichen, z. B. weil damit häufig die Selektivität der Herbizide verschlechtert wird oder eine Wirkungsverbesserung auch bei höherer Aufwandmenge nicht eintritt. Teilweise kann die Selektivität in Kulturen durch Zusatz von Safenern verbessert werden.

Generell besteht jedoch Bedarf an Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität in einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst unerwartet synergistisch verstärkter Wirkung, welche eine Reduzierung der Aufwandmenge im Vergleich zur Einzelapplikation der zu kombinierenden Wirkstoffe erlaubt.

Es ist bereits bekannt, dass die Kombination von Herbiziden aus der breit definierten Klasse der Diamino-s-triazine, welche mit Arylalkylresten N-substituiert sind, mit anderen Herbiziden synergistische Wirkung ergeben können (siehe WO-A-00/16627). Beispiele für Kombinationen von Diamino-s-triazinen, welche bicyclische Reste an einer Aminogruppe aufweisen, mit anderen Herbiziden sind darin konkret nicht beschrieben. Wegen der vergleichsweise starken Unterschiede zwischen den Diamino-s-triazinen mit Arylalkylresten an der Aminogruppe einerseits und mit bicyclischen Resten andererseits, wobei sich die Unterschiede neben der veränderten Struktur auch an einer veränderten Wirkungscharakteristik beobachten lassen, sind synergistische Effekte für die bicyclisch substituierten Verbindungen, insbesondere einzelner Stereoisomere davon, grundsätzlich nicht gleichermaßen zu erwarten.

Aus WO 2006/007947 sind Herbizid-Kombinationen bekannt, die als gemeinsame Komponente Herbizide vom Typ der 2,4-Diamino-1,3,5-triazine enthalten, welche mit bicyclischen Resten an einer der Aminogruppen substituiert sind. Die Herbizid-Kombinationen sind für die Kontrolle oder Bekämpfung von unerwünschtem Pflanzenwuchs im selektiven Anwendungsbereich, beispielsweise in Plantagenkulturen, oder im nichtselektiven Anwendungsbereich geeignet.

Es bestand die Aufgabe alternative oder vorteilhafte Herbizid-Kombinationen bereitzustellen, welche ein gutes biologisches Anwendungsprofil und möglichst mehrere der oben genannten gewünschten günstigen Eigenschaften aufweisen.

Gegenstand der Erfindung sind Herbizid-Kombinationen mit einem wirksamen Gehalt an Komponenten (A) und (B), wobei

Komponente (A) für einen oder mehrere herbizide Wirkstoffe der Formel (I) oder deren Salze [Herbizide (A)] steht,

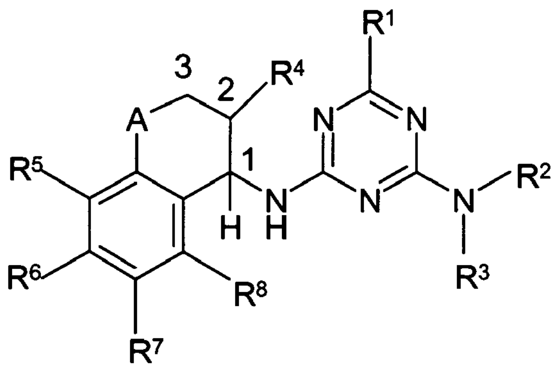

(I)

worin

| | |
|---|---|
| $R^1$ | H oder eine Gruppe der Formel $CZ^1Z^2Z^3$, wobei<br>$Z^1$ H, Halogen, $(C_1-C_6)$Alkyl, $(C_1-C_6)$Haloalkyl, $[(C_1-C_4)$Alkoxy]- $(C_1-C_6)$alkyl, $(C_3-C_6)$Cycloalkyl, das unsubstituiert oder durch einen oder mehrere Reste aus der Gruppe Halogen, $(C_1-C_4)$Alkyl und $(C_1-C_4)$Haloalkyl substituiert ist, oder $(C_2-C_6)$Alkenyl, $(C_2-C_6)$Alkinyl, $(C_2-C_6)$Haloalkenyl, $(C_4-C_6)$Cycloalkenyl, $(C_4-C_6)$Halocycloalkenyl, $(C_1-C_6)$Alkoxy oder $(C_1-C_6)$Haloalkoxy,<br>$Z^2$ H, Halogen, $(C_1-C_6)$Alkyl oder $(C_1-C_4)$Alkoxy; oder<br>$Z^1$ und $Z^2$ zusammen mit dem (gezeigten) Kohlenstoffatom der Gruppe $CZ^1Z^2Z^3$ einen $(C_3-C_6)$ Cycloalkylrest oder $(C_4-C_6)$Cycloalkenylrest, wobei jeder der beiden letztgenannten Reste unsubstituiert oder durch einen oder mehrere Reste aus der Gruppe $(C_1-C_4)$Alkyl substituiert ist, und<br>$Z^3$ H, $(C_1-C_6)$Alkyl, $(C_1-C_4)$Alkoxy oder Halogen bedeuten, |
| $R^2$ und $R^3$ | jeweils unabhängig voneinander H, $(C_1-C_4)$Alkyl, $(C_1-C_4)$Haloalkyl, $(C_3-C_4)$Alkenyl, $(C_3-C_4)$Haloalkenyl, $(C_3-C_4)$Alkinyl, $(C_3-C_4)$Haloalkinyl oder einen Acylrest, |
| $R^4$ | H, $(C_1-C_6)$Alkyl oder $(C_1-C_6)$Alkoxy, |
| $R^5$, $R^6$, $R^7$ und $R^8$ | jeweils unabhängig voneinander H, $(C_1-C_4)$Alkyl, $(C_1-C_3)$Haloalkyl, Halogen, $(C_1-C_3)$Alkoxy, $(C_1-C_3)$Haloalkoxy oder Cyano und |
| A | eine divalente Gruppe der Formel $CH_2$ oder O oder eine direkte Bindung |

bedeuten,
und
Komponente (B) für einen oder mehrere herbizide Wirkstoffe (B) aus der Gruppe der herbiziden Wirkstoffe (B1), (B2) und (B3) steht, wobei die herbiziden Wirkstoffe

(B1) herbizide Wirkstoffe, welche besonders für die postemergente Applikation gegen monokotyle oder dikotyle Schadpflanzen geeignet sind, ausgewählt aus der Gruppe

(B1.1) Thiencarbazone und dessen Ester und Salze,
(B1.2) Tembotrione und dessen Salze,
(B1.3) [[3-[2-Chlor-5-[3,6-dihydro-3-methyl-2,6-dioxo-4-(trifluormethyl)-1 (2H)-pyrimidinyl]-4-fluorphenoxy]-2-pyridinyl]oxy]-essigsäureethylester (SYN-523),
(B1.4) Pyroxsulam und dessen Salze,
(B1.5) Penoxsulam und dessen Salze,
(B1.6) 4-Hydroxy-3-[[2-[(2-methoxy-ethoxy)-methyl]-6-trifluoromethyl-3-pyridinyl]-carbonyl]-bicyclo[3.2.1]oct-3-en-2-on (SYN-449) und dessen Salze,

(B2) herbizide Wirkstoffe, welche besonders für die postemergente Applikation gegen dikotyle Schadpflanzen geeignet sind, ausgewählt aus der Gruppe (B2.1) Pyrasulfotole und dessen Salze,

(B2.2) Trifloxysulfuron und dessen Salze,
(B2.3) Saflufenacil und dessen Salze,
(B2.4) Aminopyralid und dessen Salze,
(B2.5) Ethofumesate,
(B2.6) Aminocyclopyrachlor und dessen Salze und Ester und

(B3) herbizide Wirkstoffe, welche besonders für die preemergente Applikation gegen monokotyle oder dikotyle Schadpflanzen geeignet sind, ausgewählt aus der Gruppe

(B3.1) Pyroxasulfone (KIH-485)

bedeuten.

Die erfindungsgemäßen Herbizid-Kombinationen können weitere Komponenten enthalten, z. B. andere Wirkstoffe gegen Schadorganismen wie Schadpflanzen, pflanzenschädliche Tiere oder pflanzenschädliche Pilze, insbesondere dabei Wirkstoffe aus der Gruppe der Herbizide, Fungizide, Insektizide, Akarizide, Nematizide und Mitizide und verwandte Stoffe, oder auch Pflanzenschutzmittelwirkstoffe anderer Art (z. B. Safener, Resistenzinduktoren), Pflanzenwachstumsregulatoren und/oder im Pflanzenschutz übliche Zusatzstoffe und/oder Formulierungshilfsmittel. Die Komponenten können dabei gemeinsam formuliert (Fertigformulierung) und angewendet werden oder sie können getrennt formuliert und gemeinsam angewendet werden, z. B. im Tank-Mix oder in sequentieller Applikation.

Die als Komponente (A) enthaltenen einzelnen herbiziden Wirkstoffe der Formel (I) werden im Folgenden auch als Verbindungen (A), Wirkstoffe (A) oder Herbizide (A) bezeichnet. Entsprechend werden die als Komponente (B) enthaltenen einzelnen herbiziden Wirkstoffe im Folgenden auch als Verbindungen (B), Wirkstoffe (B) oder Herbizide (B) bezeichnet.

Als vorteilhafte Eigenschaft der erfindungsgemäßen Kombination von Herbiziden (A) und (B) zeigt sich, dass Wirkstoffe (A) und (B) miteinander kompatibel sind, d. h. sie lassen sich gemeinsam anwenden, ohne dass wesentliche chemische Unverträglichkeiten der Wirkstoffe (A) und/oder (B) auftreten, die zu einer Zersetzung eines oder mehrerer Wirkstoffe führen. Damit wird eine Reduzierung des Wirkstoffgehalts in Formulierungen oder Spritzbrühen vermieden. Die günstige Kompatibilität erstreckt sich auch auf die biologischen Eigenschaften der Wirkstoffe bei der kombinierten Anwendung. So werden antagonistische Effekte bei der Kontrolle von Schadpflanzen mit den erfindungsgemäßen Wirkstoff-Kombinationen in der Regel nicht beobachtet. Damit sind die Wirkstoffe (A) und (B) besonders geeignet, gemeinsam oder zusätzlich mit weiteren Pflanzenschutzmittelwirkstoffen oder Agrochemikalien angewendet zu werden. Die ermöglichte kombinierte Anwendung erlaubt die Nutzung vorteilhafter Effekte, wie beispielsweise die Ausweitung des Spektrums der zu kontrollierenden oder zu bekämpfenden Schadpflanzen bei einer Anwendung, die Reduzierung der Aufwandmenge der einzelnen Herbizide (A) bzw. (B) im Vergleich zur jeweiligen Aufwandmenge des betreffenden Herbizids bei der Einzelapplikation. Damit kann das Abbauverhalten der Wirkstoffe beeinflusst und günstigere Bedingungen für den Nachbau von Kulturpflanzen erreicht werden. Ein weiterer Vorteil ist darin zu sehen, dass die Entstehung von Resistenzen der Schadpflanzen gegen die Wirkstoffe durch Kombination von Wirkstoffen mit unterschiedlichem Wirkungsmechanismus oft wesentlich verringert werden oder vermieden werden kann.

Insbesondere treten überraschenderweise bei der kombinierten Anwendung der Wirkstoffe (A) und (B) bei einer größeren Zahl wirtschaftlich wichtiger Schadpflanzen auch überadditive (= synergistische) Effekte auf. Dabei ist die Wirkung in der Kombination stärker als die zu erwartende Summe der Wirkungen der eingesetzten Einzelherbizide.

Die synergistischen Effekte erlauben eine weitere Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen, wie Stickstoff oder Ölsäure, und deren Eintrag in den Boden reduziert.

Die genannten Eigenschaften und Vorteile sind in der praktischen Unkrautbekämpfung gewünscht, um landwirtschaftliche Kulturen von unerwünschten Konkurrenzpflanzen freizuhalten und damit die Erträge qualitativ und quantitativ zu sichern und/oder zu erhöhen. Der technische Standard wird durch die neuen Kombinationen hinsichtlich der beschriebenen Eigenschaften deutlich übertroffen.

Die synergistischen Wirkungen werden bei gemeinsamer Ausbringung der Wirkstoffe (A) und (B) beobachtet, können jedoch auch häufig bei zeitlich versetzter Anwendung (Splitting) auftreten. Möglich ist auch die Anwendung der Herbizide (A) bzw. (B) oder der Herbizid-Kombinationen (A) und (B) in mehreren Portionen (Sequenzanwendung). Beispielsweise kann nach einer oder mehreren Anwendungen im Vorauflauf eine Nachauflauf-Applikation erfolgen, oder nach einer frühen Nachauflaufanwendung kann eine Applikationen im mittleren oder späten Nachauflauf erfolgen. Bevorzugt ist dabei die simultane oder zeitnahe Anwendung der Wirkstoffe der jeweiligen Kombination, gegebenenfalls in mehreren Portionen. Aber auch die zeitversetzte Anwendung der Einzelwirkstoffe einer Kombination ist möglich und kann im Einzelfall vorteilhaft sein. In das System der Anwendung können auch andere Pflanzenschutzmittel, wie beispielsweise die erwähnten anderen Wirkstoffe (andere Herbizide, Fungizide, Insektizide, Akarizide etc.) und/oder verschiedene Hilfsstoffe, Adjuvantien und/oder Düngergaben, integriert werden.

Unter Anwendung im Vorauflauf- oder Nachauflaufverfahren ist je nach dem Zusammenhang, in dem die Bezeichnungen verwendet werden, die Anwendung der Wirkstoffe vor dem bzw. nach dem obererdig sichtbaren Erscheinen der Schadpflanzen zu verstehen oder die Anwendung der Wirkstoffe gegen die Schadpflanzen vor Auflauf der Kulturpflanzen bzw. nach Auflauf der Kulturpflanzen zu verstehen.

In der Formel (I) für Verbindungen der herbiziden Wirkstoffe (A) und allen nachfolgenden Formeln gelten folgende Definitionen:

Die Formel (I) umfasst auch alle Stereoisomere der Verbindungen, deren spezifische stereochemische Konfiguration durch die Formel nicht explizit ausgedrückt wird, und deren Gemische. Solche Verbindungen der Formel (I) enthalten ein oder mehrere asymmetrische C-Atome oder auch Doppelbindungen, die in den allgemeinen Formeln (I) nicht gesondert angegeben sind. Die durch ihre spezifische Raumform definierten möglichen Stereoisomere, wie Enantiomere, Diastereomere, Z- und E-Isomere sind alle von der Formel (I) umfaßt und können nach üblichen Methoden aus Gemischen der Stereoisomere erhalten werden oder auch durch stereoselektive Reaktionen in Kombination mit dem Einsatz von stereochemisch reinen Ausgangsstoffen hergestellt werden.

Die Verbindungen der Formel (I) können durch Anlagerung einer geeigneten anorganischen oder organischen Säure, wie beispielsweise HCl, HBr, $H_2SO_4$ oder $HNO_3$, aber auch Oxalsäure oder Sulfonsäuren an eine basische Gruppe, wie z.B. Amino oder Alkylamino, Salze bilden, beispielsweise Hydrochloride, Hydrobromide, Hydrosulfate und Hydro-hydrogensulfate. Geeignete Substituenten, die in deprotonierter Form, wie z.B. Sulfonsäuren oder Carbonsäuren, vorliegen, können innere Salze mit ihrerseits protonierbaren Gruppen, wie Aminogruppen bilden. Salze können ebenfalls dadurch gebildet werden, dass bei geeigneten Substituenten, wie z.B. Sulfonsäuren oder Carbonsäuren, der Wasserstoff durch ein für die Landwirtschaft geeignetes Kation ersetzt wird. Diese Salze sind beispielsweise Metallsalze, insbesondere Alkalimetallsalze oder Erdalkalimetallsalze, insbesondere Natrium- und Kaliumsalze, oder auch Ammoniumsalze, Salze mit organischen Aminen oder quartäre (quaternäre) Ammoniumsalze.

Der Ausdruck "($C_1$-$C_4$)Alkyl" bedeutet eine Kurzschreibweise für offenkettiges Alkyl mit einem bis 4 Kohlenstoffatomen, d. h. umfasst die Reste Methyl, Ethyl, 1-Propyl, 2-Propyl, 1-Butyl, 2-Butyl, 2-Methylpropyl oder tert-Butyl. Allgemeine Alkylreste mit einem größeren angegebenen Bereich von C-Atomen, z. B. "($C_1$-$C_6$)Alkyl" umfassen entsprechend auch gradkettige oder verzweigte Alkylreste mit einer größeren Zahl von C-Atomen, d. h. gemäß Beispiel auch die Alkylreste mit 5 und 6 C-Atomen. Wenn nicht speziell angegeben, sind bei den Kohlenwasserstoffresten wie Alkyl-, Alkenyl- und Alkinylresten, auch in zusammengesetzten Resten, die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder i-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Vinyl, Allyl, 1-Methyl-2-propenyl, 2-Methyl-2-propenyl, 2-Butenyl, Pentenyl, 2-Methylpentenyl oder Hexenyl group, vorzugsweise Allyl, 1-Methylprop-2-en-1-yl, 2-Methyl-prop-2-en-1-yl, But-2-en-1-yl, But-3-en-1-yl, 1-Methyl-but-3-en-1-yl oder 1-Methyl-but-2-en-1-yl. ($C_2$-$C_6$)Alkinyl bedeutet beispielsweise Ethinyl, Propargyl, 1-Methyl-2-propinyl, 2-Methyl-2-propinyl, 2-Butinyl, 2-Pentinyl oder 2-Hexinyl, vorzugsweise Propargyl, But-2-in-1-yl, But-3-in-1-yl oder 1-Methyl-but-3-in-1-yl.

Cycloalkyl bedeutet ein carbocyclisches, gesättigtes Ringsystem mit vorzugsweise 3-8 C-Atomen, z.B. Cyclopropyl, Cyclobutyl, Cyclopentyl oder Cyclohexyl.

Cycloalkenyl bedeutet ein carbocyclisches, nicht aromatisches, partiell ungesättigtes Ringsystem mit vorzugsweise 4-8 C-Atomen, z.B. 1-Cyclobutenyl, 2-Cyclobutenyl, 1-Cyclopentenyl, 2-Cyclopentenyl, 3-Cyclopentenyl, oder 1-Cyclohexenyl, 2-Cyclohexenyl, 3-Cyclohexenyl, 1,3-Cyclohexadienyl oder 1,4-Cyclohexadienyl.

Halogen bedeutet beispielsweise Fluor, Chlor, Brom oder Iod. Haloalkyl, -alkenyl und -alkinyl bedeuten durch gleiche oder verschiedene Halogenatome, vorzugsweise aus der Gruppe Fluor, Chlor und Brom, insbesondere aus der Gruppe Fluor und Chlor, teilweise oder vollständig substituiertes Alkyl, Alkenyl bzw. Alkinyl, z.B. Monohaloalkyl (= Monohalogenalkyl), Perhaloalkyl, $CF_3$, $CHF_2$, $CH_2F$, $CF_3CF_2$, $CH_2FCHCl$, $CCl_3$, $CHCl_2$, $CH_2CH_2Cl$; Haloalkoxy ist z.B. $OCF_3$, $OCHF_2$, $OCH_2F$, $CF_3CF_2O$, $OCH_2CF_3$ und $OCH_2CH_2Cl$; Entsprechendes gilt für Haloalkenyl und andere durch Halogen substituierte Reste.

Bei Resten mit C-Atomen sind solche mit 1 bis 4 C-Atomen, vorzugsweise 1 oder 2 C-Atomen bevorzugt. Bevorzugt sind in der Regel Substituenten aus der Gruppe Halogen, z.B. Fluor und Chlor, ($C_1$-$C_4$)Alkyl, vorzugsweise Methyl oder Ethyl, ($C_1$-$C_4$)Haloalkyl, vorzugsweise Trifluormethyl, ($C_1$-$C_4$)Alkoxy, vorzugsweise Methoxy oder Ethoxy, ($C_1$-$C_4$)Haloalkoxy, Nitro und Cyano. Besonders bevorzugt sind dabei die Substituenten Methyl, Methoxy, Fluor und Chlor.

Acyl bedeutet einen Rest einer organischen Säure, der formal durch Abtrennen einer Hydroxygruppe an der Säurefunktion entsteht, wobei der organische Rest in der Säure auch über ein Heteroatom mit der Säurefunktion verbunden sein kann. Beispiele für Acyl sind der Rest -CO-R einer Carbonsäure HO-CO-R und Reste davon abgeleiteter Säuren wie der Thiocarbonsäure, gegebenenfalls N-substituierten Iminocarbonsäuren oder der Rest von Kohlensäuremonoestern, N-substituierter Carbaminsäure, Sulfonsäuren, Sulfinsäuren, N-substituierter Sulfonamidsäuren, Phosphonsäuren, Phosphinsäuren.

Acyl bedeutet beispielsweise Formyl, Alkylcarbonyl wie [($C_1$-$C_4$)Alkyl]-carbonyl, Phenylcarbonyl, Alkyloxycarbonyl, Phenyloxycarbonyl, Benzyloxycarbonyl, Alkylsulfonyl, Alkylsulfinyl, N-Alkyl-1-iminoalkyl und andere Reste von organischen Säuren. Dabei können die Reste jeweils im Alkyl- oder Phenylteil noch weiter substituiert sein, beispielsweise

im Alkylteil durch ein oder mehrere Reste aus der Gruppe Halogen, Alkoxy, Phenyl und Phenoxy; Beispiele für Substituenten im Phenylteil sind die bereits weiter oben allgemein für substituiertes Phenyl erwähnten Substituenten.

Acyl bedeutet vorzugsweise einen Acylrest im engeren Sinne, d. h. einen Rest einer organischen Säure, bei der die Säuregruppe direkt mit dem C-Atom eines organischen Restes verbunden ist, beispielsweise Formyl, Alkylcarbonyl wie Acetyl oder [($C_1$-$C_4$)Alkyl]-carbonyl, Phenylcarbonyl, Alkylsulfonyl, Alkylsulfinyl und andere Reste von organischen Säuren.

Wenn ein allgemeiner Rest mit "Wasserstoff" bezeichnet (definiert) ist, bedeutet dies ein gebundenes Wasserstoffatom.

Mit "yl-Position" eines Restes (z. B. eines Alkylrestes) ist dessen Bindungstelle bezeichnet.

Im Folgenden werden erfindungsgemäß einsetzbare Verbindungen der Formel (I) und deren Salze auch kurz als "erfindungsgemäße Verbindungen (I)" bezeichnet.

Die Verbindungen der Formel (I) sind im Prinzip aus WO 97/31904 bekannt oder können nach den dort beschriebenen Verfahren hergestellt werden. Von besonderem Interesse sind dabei Verbindungen der Formel (I) oder deren Salze, worin

| | |
|---|---|
| $R^1$ | H oder eine Gruppe der Formel $CZ^1Z^2Z^3$, worin<br>$Z^1$ H, Halogen, ($C_1$-$C_4$)Alkyl, ($C_1$-$C_4$)Haloalkyl, [($C_1$-$C_4$)Alkoxyl- ($C_1$-$C_6$)alkyl, ($C_3$-$C_6$)Cycloalkyl, das unsubstituiert oder durch einen oder mehrere Reste aus der Gruppe ($C_1$-$C_4$)Alkyl substituiert ist, oder ($C_2$-$C_4$)alkenyl, ($C_2$-$C_4$)alkinyl, ($C_1$-$C_4$)Alkoxy oder ($C_1$-$C_4$)Haloalkoxy;<br>$Z^2$ H, Halogen, ($C_1$-$C_4$)Alkyl oder<br>$Z^1$ und $Z^2$ zusammen mit dem an die Reste gebundenen Kohlenstoffatom einen ($C_3$-$C_6$)Cycloalkylrest und<br>$Z^3$ H, ($C_1$-$C_4$)Alkyl, ($C_1$-$C_2$)Alkoxy oder Halogen, bedeuten, |
| $R^2$ | H, ($C_1$-$C_4$)Alkyl, ($C_1$-$C_4$)Haloalkyl, ($C_3$-$C_4$)Alkenyl, ($C_3$-$C_4$)Haloalkenyl, ($C_3$-$C_4$)Alkinyl, ($C_3$-$C_4$)Haloalkinyl oder einen Acylrest mit 1 bis 12 C- Atomen (vorzugsweise für Acyl Reste aus der Gruppe Formyl, Phenylcarbonyl, Phenoxycarbonyl, wobei Phenyl in den beiden letztgenannten Resten unsubstituiert oder durch einen oder mehrere Reste aus der Gruppe Halogen, ($C_1$-$C_2$)Alkyl, ($C_1$-$C_2$) Haloalkyl, ($C_1$-$C_2$)Alkoxy, ($C_1$-$C_2$)Haloalkoxy und Nitro substituiert ist, oder ($C_1$-$C_6$)Alkyl-carbonyl, ($C_1$- $C_6$)Alkoxy-carbonyl oder ($C_1$-$C_6$)Alkyl-sulfonyl), |
| $R^3$ | H, ($C_1$-$C_4$)Alkyl oder ($C_1$-$C_4$)Haloalkyl, |
| $R^4$ | H, ($C_1$-$C_3$)Alkyl oder ($C_1$-$C_3$)Alkoxy, |
| $R^5$, $R^6$, $R^7$ und $R^8$ | jeweils unabhängig voneinander H, ($C_1$-$C_3$)Alkyl, Halogen, ($C_1$-$C_3$)Alkoxy und |
| A | eine divalente Gruppe der Formel $CH_2$ oder O oder eine direkte Bindung, vorzugsweise $CH_2$ oder eine direkte Bindung, insbesondere eine direkte Bindung, |

bedeuten.

Bevorzugt sind optisch aktive Verbindungen der Formel (I) und deren Salze, worin die stereochemische Konfiguration an dem in Formel (I) mit 1 markierten C-Atom die (R)-Konfiguration mit einer stereochemischen Reinheit von 60 bis 100 % (*R*), vorzugsweise 70-100 % (*R*), insbesondere 80 bis 100 % (R), jeweils bezogen auf den Gehalt an Stereoisomeren mit (*R*)- und (*S*)-Konfiguration an dieser Position, ist. Es wird davon ausgegangen, dass die Konfiguration nach dem Cahn-Ingold-Prelog-System bestimmt ist, wobei die folgende Rangfolge der Substituenten an der Position 1 gilt:

1. Priorität hat substituiertes NH; 2. Priorität hat die Bindung zum Phenylring; 3. Priorität hat das andere Ring C-Atom, 4. Priorität hat das Wasserstoffatom.

Weiter bevorzugt sind optisch aktive Verbindungen der Formel (I) und deren Salze, worin $R^1$ eine Gruppe der Formel $CZ^1Z^2Z^3$ ist, wobei $CZ^1Z^2Z^3$ wie vorstehend definiert ist, insbesondere solche Verbindungen, worin die stereochemische Konfiguration an dem C-Atom der Gruppe $CZ^1Z^2Z^3$ die (*R,S*)-Konfiguration ist oder die (*R*)-Konfiguration mit einer stereochemischen Reinheit von 60 bis 100 % (*R*), vorzugsweise 70-100 % (*R*), insbesondere 80 bis 100 % (*R*), jeweils bezogen auf den Gehalt an Stereoisomeren mit (*R*)- und (*S*)-Konfiguration an dieser Position, ist.

Als Kombinationspartner (A) kommen beispielsweise bestimmte Verbindungen der Formel (I) aus der unten stehenden Tabelle 1 in Betracht.

Anmerkungen vor Tabelle 1: In der Tabelle 1 sind die Verbindungen durch die chemische Formel der Hauptkomponente bezeichnet, wobei diese Komponente in einer chemischen Reinheit von mindestens 95 Gewichtsprozent der Verbindung vorliegt. Naturgemäß können die Verbindungen auch mit niedrigeren Reinheiten eingesetzt werden. Insbesondere wenn Nebenkomponenten der Verbindungen überwiegend oder ganz aus wirksamen Stereoisomeren der jeweiligen Verbindungen (A) bestehen, werden bei der Anwendung ähnliche Wirksamkeiten erreicht. Bevorzugt sind

als Herbizide (A) deshalb auch Mischungen von zwei oder mehreren Verbindungen (A) aus der Tabelle 1. Aus Gründen der einfacheren Herstellbarkeit sind praktisch vor allem auch Herbizide (A) bevorzugt, welche als Hauptkomponente eine Verbindung (A) aus der Tabelle 1 und als Nebenkomponenten Stereoisomere der Verbindung (A), vorzugsweise solche, welche auch in der Tabelle 1 erwähnt sind, enthalten.

Wenn in der jeweiligen chemischen Formel in Tabelle 1 die stereochemische Orientierung an einem C-Atom angezeigt wird und zusätzlich die stereochemische Orientierung nach dem System von Cahn, Ingold und Prelog bezeichnet ist, so handelt es sich bei der Hauptkomponente der Verbindung um ein Stereoisomer oder Stereoisomerengemisch, das an dem bezeichneten C-Atom die R- oder S-Konfiguration aufweist; die Verbindung (A) ist somit optisch aktiv.

Ist die Stereochemie nicht mit R- oder S-Konfiguration bezeichnet, so handelt es sich bei der Hauptkomponente um eine Verbindung, die an dem betreffenden C-Atom die RS-Konfiguration (racemisch) aufweist.

Sind mehrere Stereozentren vorhanden und jeweils die Konfiguration mit R oder S bezeichnet, handelt es sich um optisch aktive Verbindungen mit der genannten Stereochemie an den bezeichneten Zentren.

Ist bei mehreren Zentren keine Konfiguration mit R oder S angegeben, handelt es sich um racemische Gemische, d. h. darin enthaltene spiegelbildliche Stereoisomere (Enantiomere eines Enantiomerenpaars) sind in gleichen Anteilen im Gemisch enthalten. Wenn nicht näher angegeben, sind in Tabelle 1 bei racemischen Verbindungen (A) mit mehreren Stereozentren die diastereomeren Komponenten näherungsweise in gleichen Anteilen enthalten. Für die praktische Anwendung kommen aber bei racemischen Verbindungen mit mehreren Stereozentren Gemische von Diastereomeren (jeweils in racemischer Form) mit unterschiedlichen Anteilen der diastereomeren Komponenten in Frage.

Das an die Aminogruppe gebundene C-Atom des bicyclischen Restes ist C-Atom 1. Das direkt am Triazinring gebundene C-Atom der Seitengruppe (falls der Rest nicht H bedeutet), ist mit 1* bezeichnet.

Tabelle 1: Verbindungen der Formel (I) (Herbizid (A)):

| Verbindung Nr. | Chemische Formel oder chemische Bezeichnung |
|---|---|
| A1 | 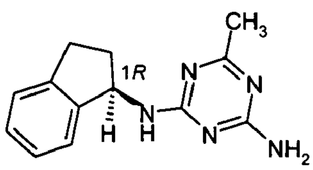 |
| A2 | 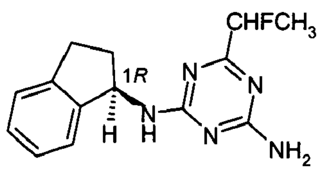 |
| A3 | 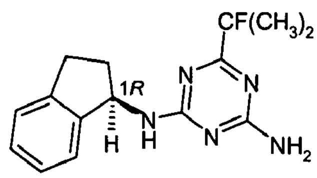 |
| A4 | 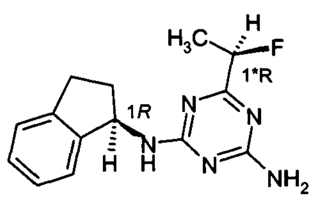 |
| A5 | 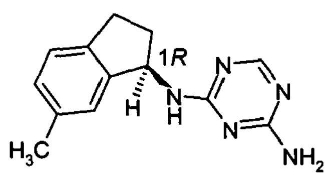 |

(fortgesetzt)

| Verbindung Nr. | Chemische Formel oder chemische Bezeichnung |
|---|---|
| A6 | 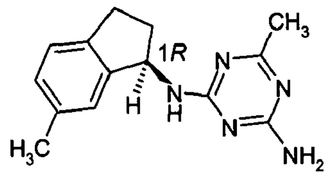 |
| A7 | 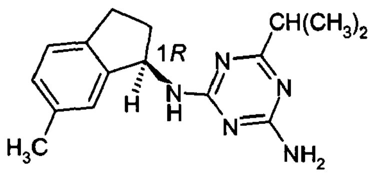 |
| A8 | 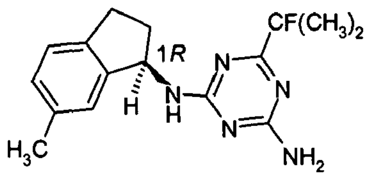 |
| A9 | 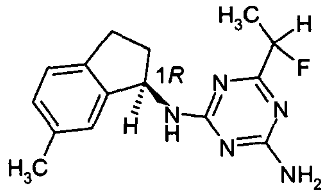 |
| A10 | 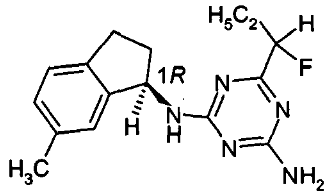 |
| A11 | 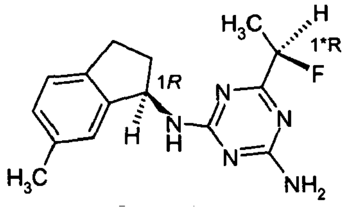 |
| A12 | 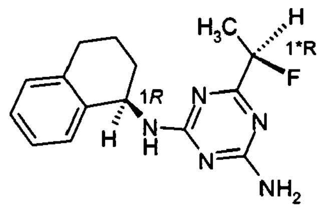 |
| A13 | 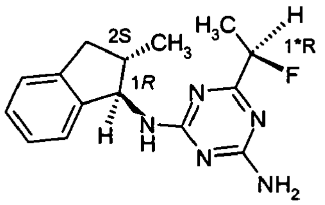 |

(fortgesetzt)

| Verbindung Nr. | Chemische Formel oder chemische Bezeichnung |
|---|---|
| A14 | 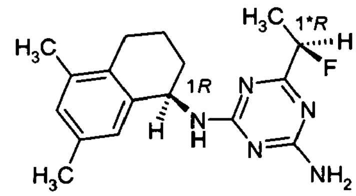 |
| A15 | 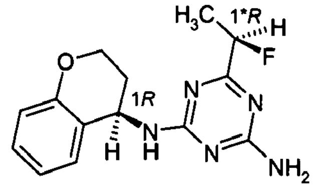 |
| A16 | 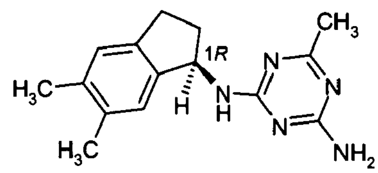 |
| A17 | 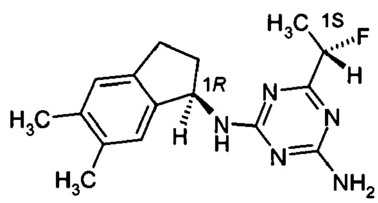 |
| A18 | 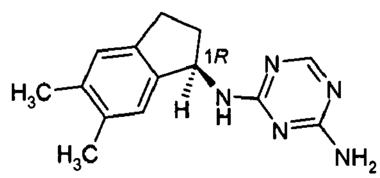 |
| A19 | 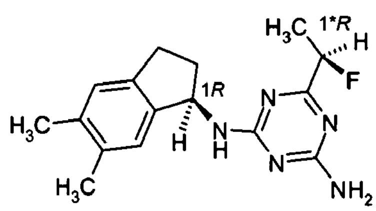 |
| A20 | 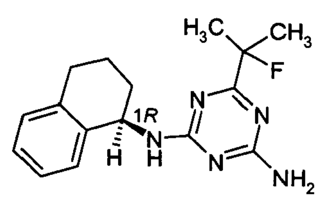 |
| A21 | 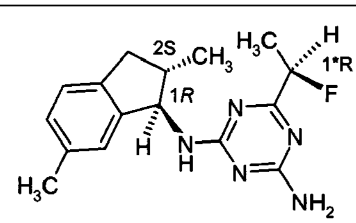 |

(fortgesetzt)

| Verbindung Nr. | Chemische Formel oder chemische Bezeichnung |
|---|---|
| A22 | 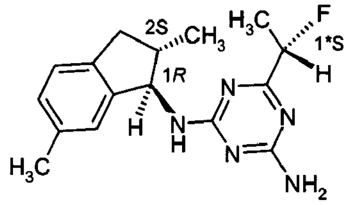 |
| A23 | 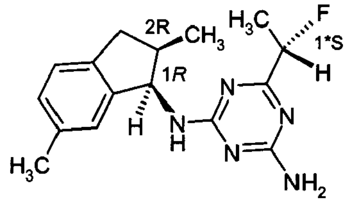 |
| A24 | 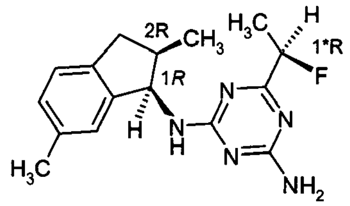 |
| A25 | 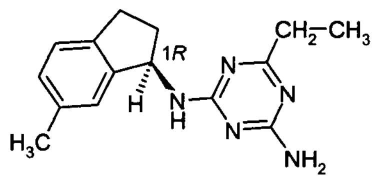 |
| A26 | 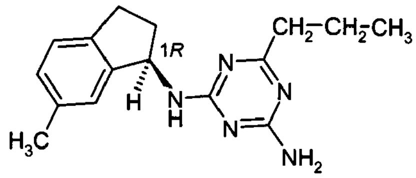 |
| A27 | 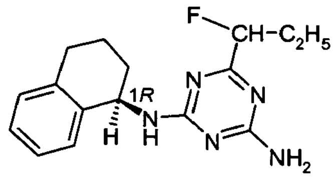 |
| A28 | 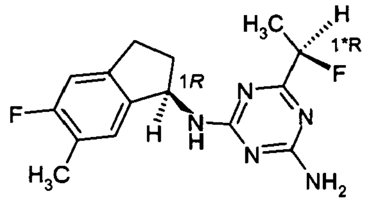 |
| A29 | 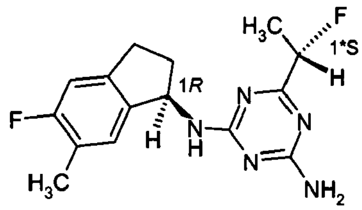 |

(fortgesetzt)

| Verbindung Nr. | Chemische Formel oder chemische Bezeichnung |
|---|---|
| A30 | 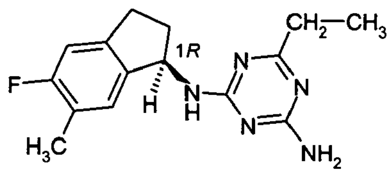 |
| A31 | 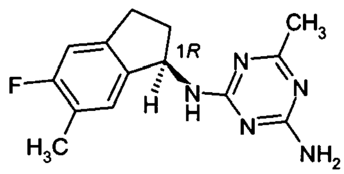 |
| A32 | 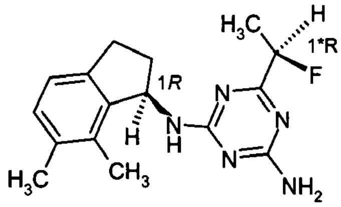 |
| A33 | 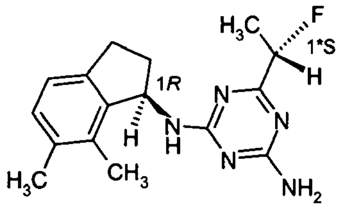 |
| A34 | 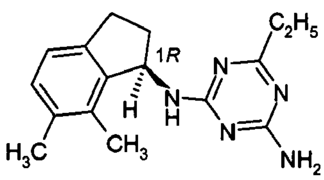 |
| A35 | 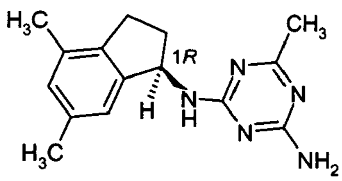 |
| A36 | 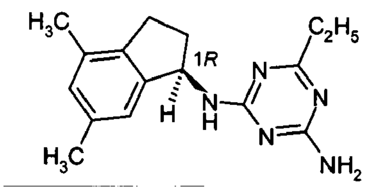 |
| A37 | 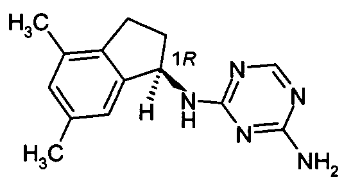 |

(fortgesetzt)

| Verbindung Nr. | Chemische Formel oder chemische Bezeichnung |
|---|---|
| A38 | 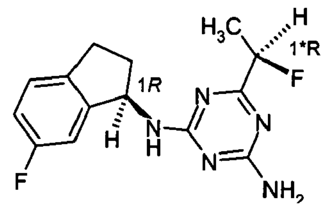 |
| A39 | 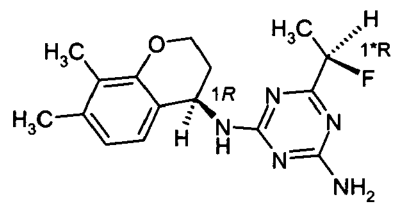 |
| A40 | 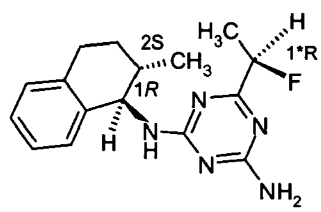 |
| A41 | 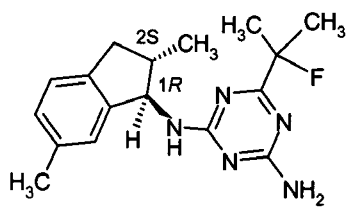 |
| A42 | 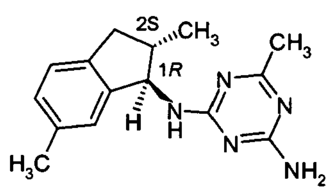 |
| A43 | 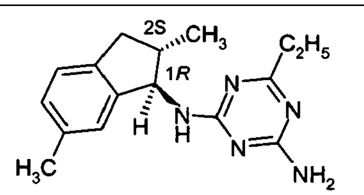 |
| A44 | 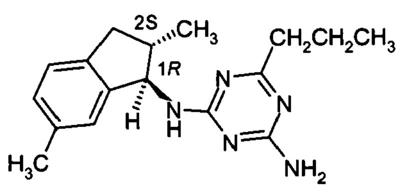 |
| A45 | 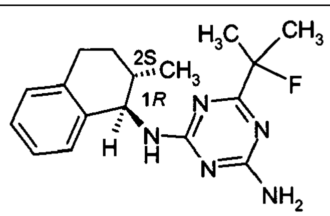 |

(fortgesetzt)

| Verbindung Nr. | Chemische Formel oder chemische Bezeichnung |
|---|---|
| A46 | 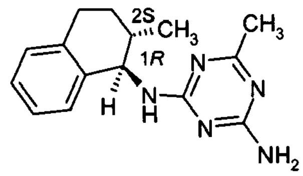 |
| A47 | 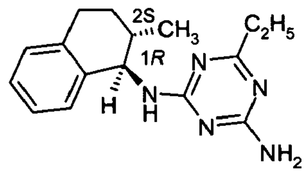 |
| A48 | 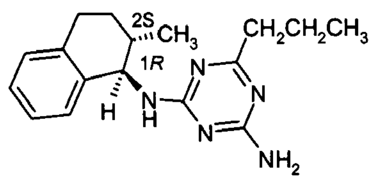 |
| A49 | 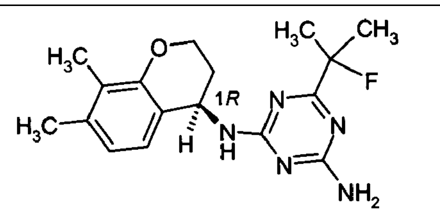 |
| A50 | 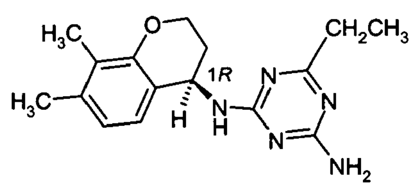 |
| A51 | 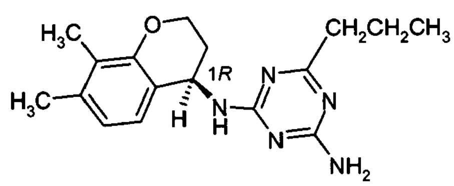 |
| A52 | 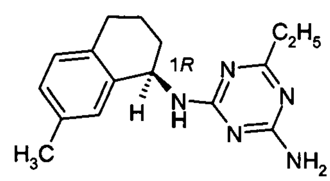 |
| A53 | 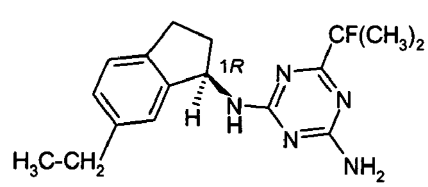 |

(fortgesetzt)

| Verbindung Nr. | Chemische Formel oder chemische Bezeichnung |
| --- | --- |
| A54 | 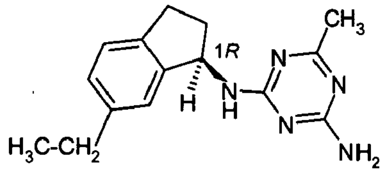 |
| A55 | 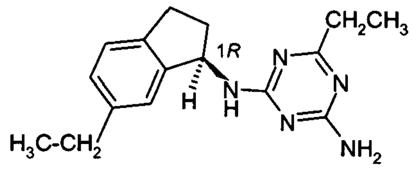 |
| A56 | 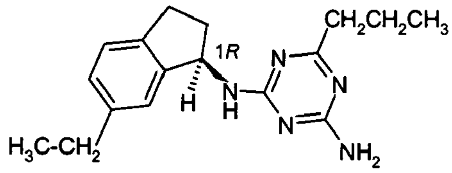 |
| A57 | 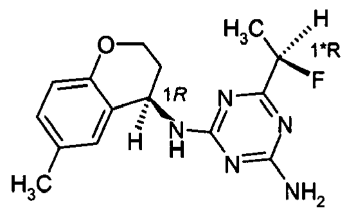 |
| A58 | 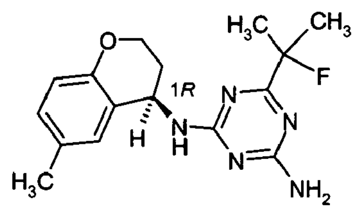 |
| A59 | 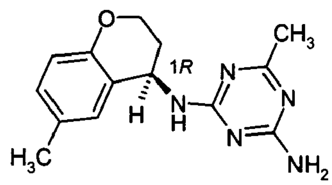 |
| A60 | 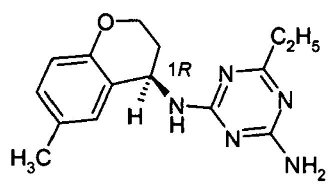 |
| A61 | 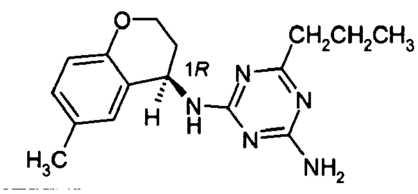 |

(fortgesetzt)

| Verbindung Nr. | Chemische Formel oder chemische Bezeichnung |
|---|---|
| A62 | 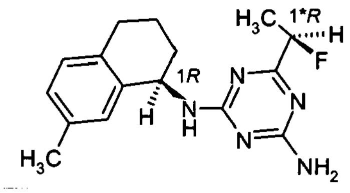 |
| A63 | 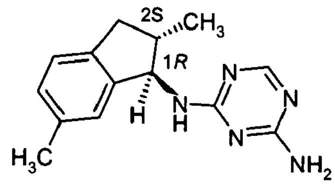 |
| A64 | 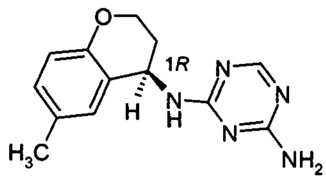 |
| A65 | 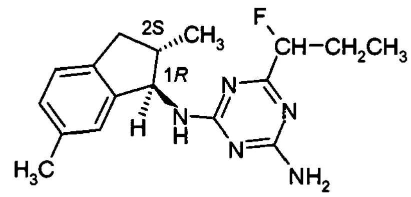 |
| A66 | 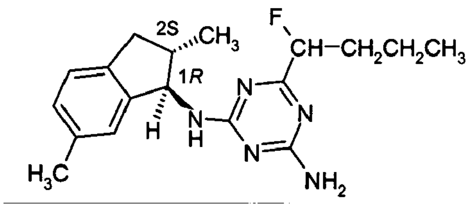 |
| A67 | 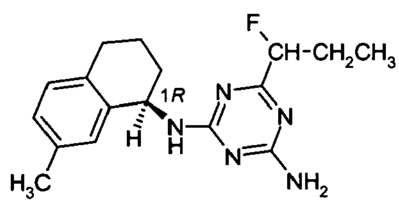 |
| A68 | 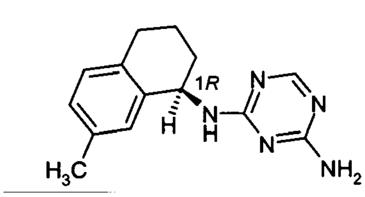 |
| A69 | 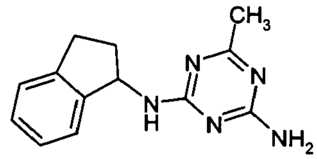 |

(fortgesetzt)

| Verbindung Nr. | Chemische Formel oder chemische Bezeichnung |
|---|---|
| A70 | 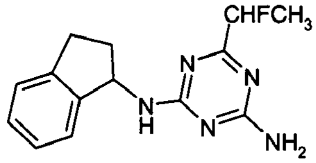 |
| A71 | 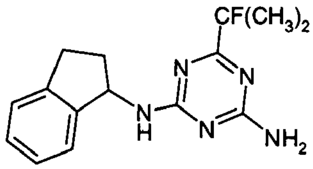 |
| A72 | 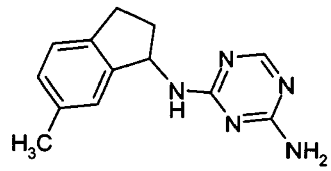 |
| A73 | 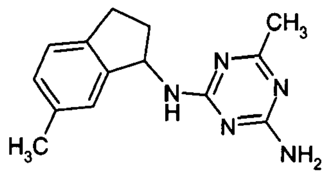 |
| A74 | 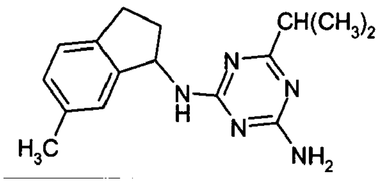 |
| A75 | 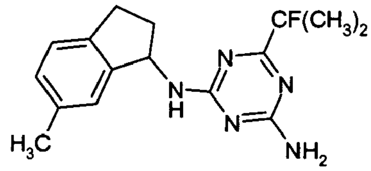 |
| A76 | 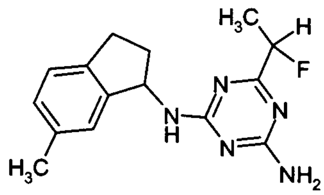 |
| A77 | 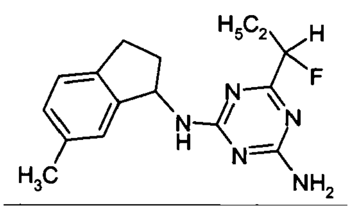 |

(fortgesetzt)

| Verbindung Nr. | Chemische Formel oder chemische Bezeichnung |
|---|---|
| A78 | 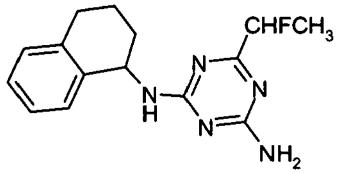 |
| A79 | 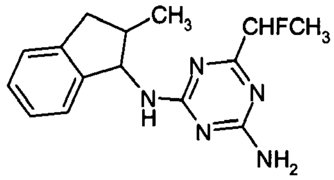 |
| A80 | 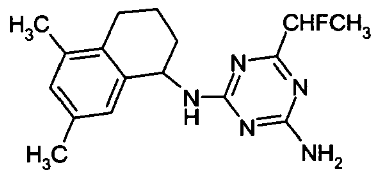 |
| A81 | 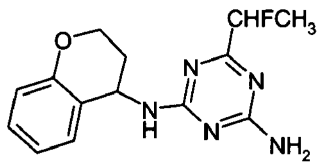 |
| A82 | 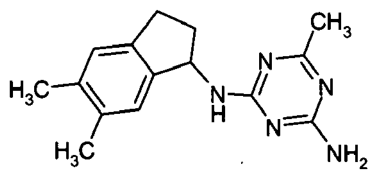 |
| A83 | 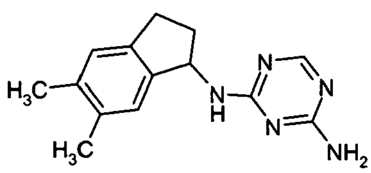 |
| A84 | 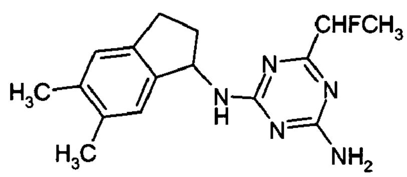 |
| A85 | 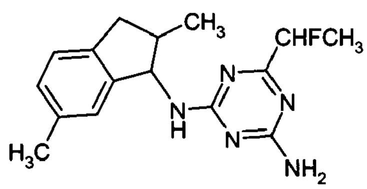 |

(fortgesetzt)

| Verbindung Nr. | Chemische Formel oder chemische Bezeichnung |
|---|---|
| A86 | 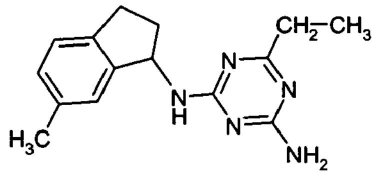 |
| A87 | 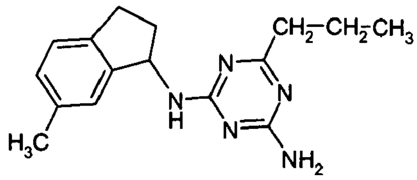 |
| A88 | 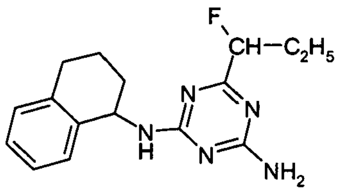 |
| A89 | 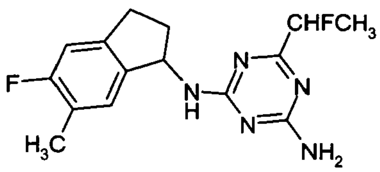 |
| A90 | 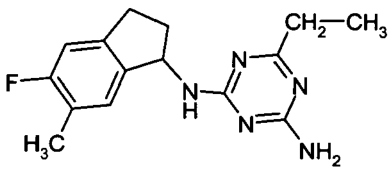 |
| A91 | 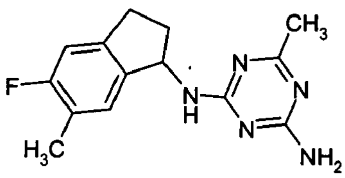 |
| A92 | 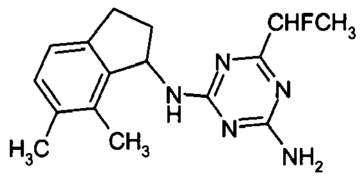 |
| A93 | 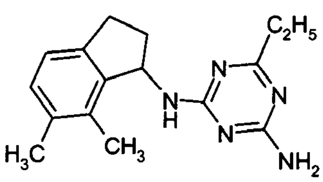 |

(fortgesetzt)

| Verbindung Nr. | Chemische Formel oder chemische Bezeichnung |
|---|---|
| A94 | 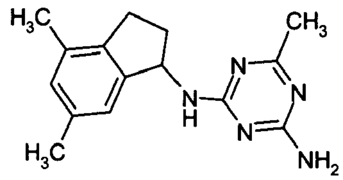 |
| A95 | 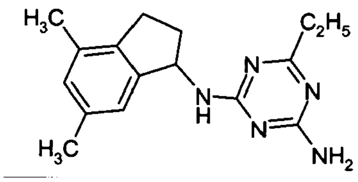 |
| A96 | 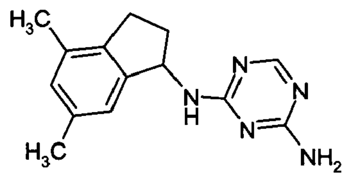 |
| A97 | 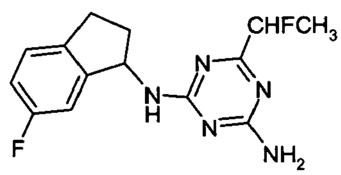 |
| A98 | 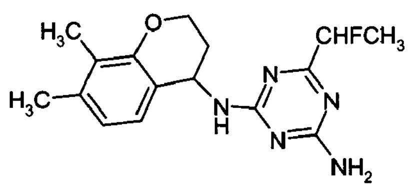 |
| A99 | 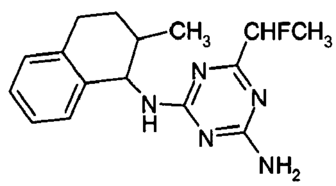 |
| A100 | 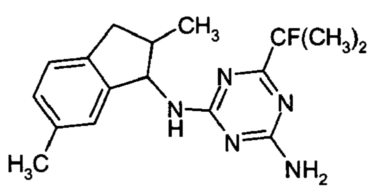 |
| A101 | 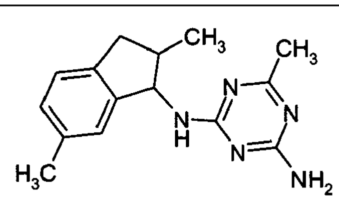 |

(fortgesetzt)

| Verbindung Nr. | Chemische Formel oder chemische Bezeichnung |
|---|---|
| A102 | 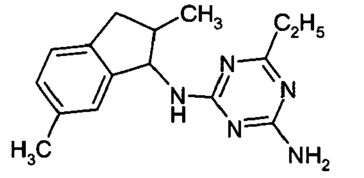 |
| A103 | 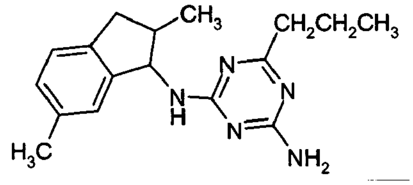 |
| A104 | 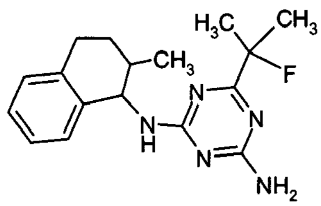 |
| A105 | 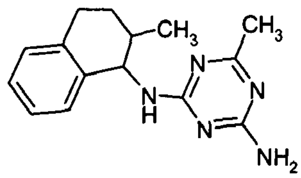 |
| A106 | 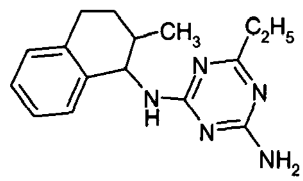 |
| A107 | 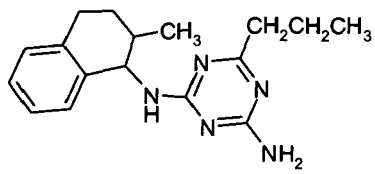 |
| A108 | 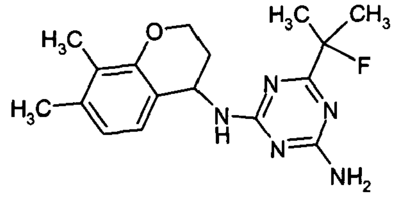 |
| A109 | 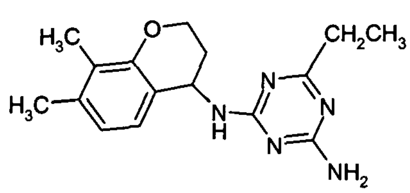 |

(fortgesetzt)

| Verbindung Nr. | Chemische Formel oder chemische Bezeichnung |
|---|---|
| A110 | 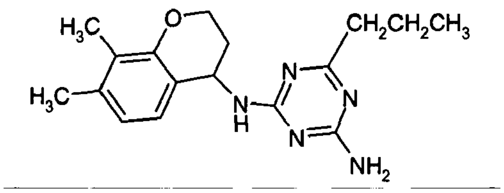 |
| A111 | 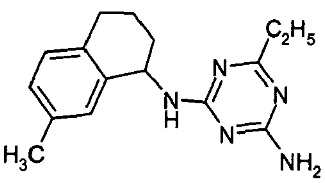 |
| A112 | 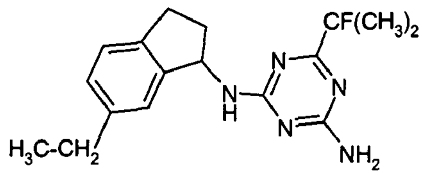 |
| A113 | 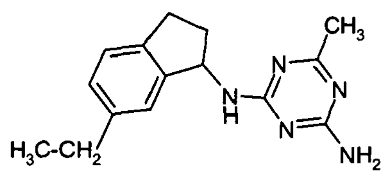 |
| A114 | 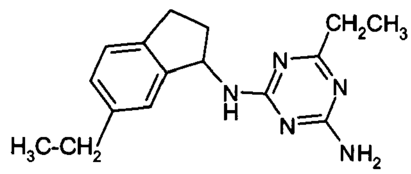 |
| A115 | 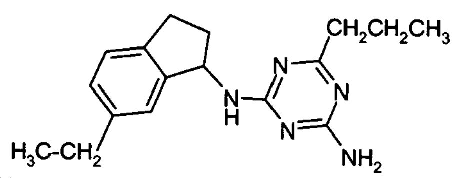 |
| A116 | 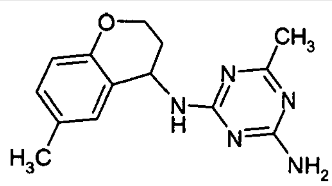 |
| A117 | 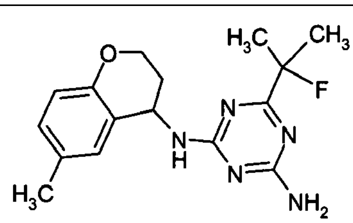 |

(fortgesetzt)

| Verbindung Nr. | Chemische Formel oder chemische Bezeichnung |
| --- | --- |
| A118 | 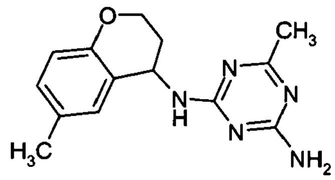 |
| A119 | 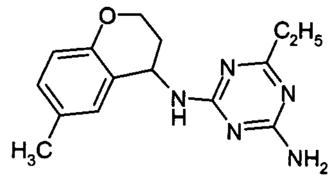 |
| A120 | 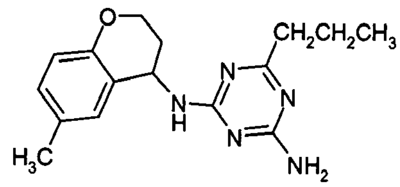 |
| A121 | 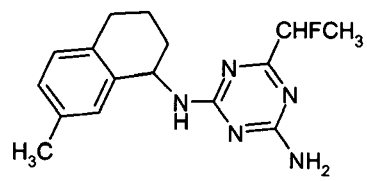 |
| A122 | 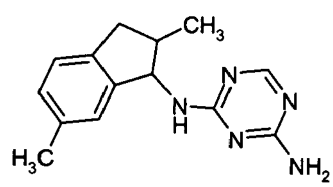 |
| A123 | 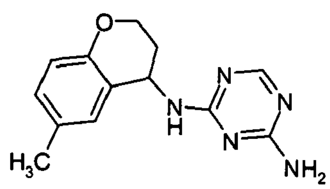 |
| A124 | 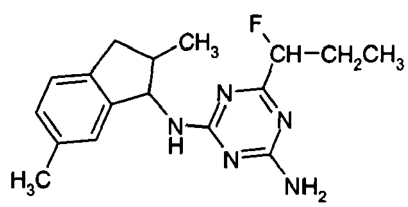 |
| A125 | 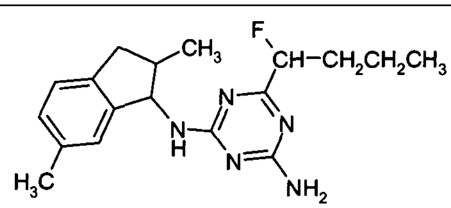 |

(fortgesetzt)

| Verbindung Nr. | Chemische Formel oder chemische Bezeichnung |
|---|---|
| A126 | 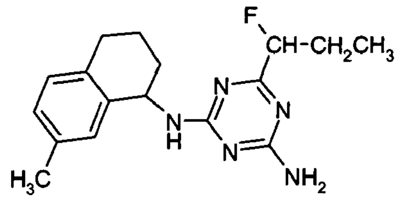 |
| A127 | 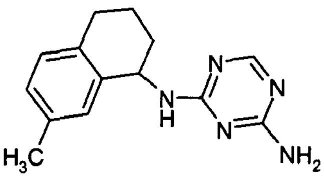 |

Die Aufwandmengen der Herbizide (A) sind im Prinzip bekannt und liegen im Bereich von 0,01 bis 2000 g Aktivsubstanz pro Hektar, vorzugsweise 0,02 bis 1000 g Aktivsubstanz pro Hektar, insbesondere 0,5 bis 750 g Aktivsubstanz pro Hektar. In den erfindungsgemäßen Kombinationen werden im Rahmen der genannten Aufwandmengen im Vergleich zur Einzelapplikation meist niedrigere Aufwandmengen des jeweiligen Wirkstoffs benötigt, vorzugsweise 0,01 bis 1000 g Aktivsubstanz pro Hektar, insbesondere 0,02 bis 500 g Aktivsubstanz pro Hektar.

Als Kombinationspartner (A) sind die Verbindungen der Tabelle 1 bevorzugt, in denen der 2,4-Diamino-s-triazin-teil mit einem gegebenenfalls substituierten Indanylrest, Tetrahydronaphthylrest oder 4-Chromanylrest N-substituiert ist. Bevorzugt sind dabei die Verbindungen (A1), (A2), (A3), (A4), (A5), (A6), (A7), (A8), (A9), (A10), (A11), (A13), (A16), (A17), (A18), (A19), (A21), (A22), (A23), (A24), (A25), (A26), (A28), (A29), (A30), (A31), (A32), (A33), (A34), (A35), (A36), (A37), (A38), (A41), (A42), (A43), (A44), (A53), (A54), (A55), (A56), (A63), (A65), (A66), (A69), (A70), (A71), (A72), (A73), (A74), (A75), (A76), (A77), (A79), (A82), (A83), (A84), (A85), (A86), (A87), (A89), (A90), (A91), (A92), (A93), (A94), (A95), (A96), (A97), (A100), (A101), (A102), (A103), (A112), (A113), (A114), (A115), (A122), (A124), (A125) und deren Gemische.

Bevorzugt sind dabei auch die jeweils aufgeführten optisch aktiven Verbindungen (A1), (A2), (A3), (A4), (A5), (A6), (A7), (A8), (A9), (A10), (A11), (A13), (A16), (A17), (A18), (A19), (A21), (A22), (A23), (A24), (A25), (A26), (A28), (A29), (A30), (A31), (A32), (A33), (A34), (A35), (A36), (A37), (A38), (41), (A42), (A43), (A44),(A53), (A54), (A55), (A56), (A63), (A65), (A66), (A69) in einer stereochemischen Reinheit (optischen Reinheit) bezüglich des C-Atoms an Position 1 von 60 bis 100 % (R), vorzugsweise 70-100 % (R), insbesondere 80 bis 100 % (R), jeweils bezogen auf den Gehalt an Stereoisomeren mit (R)- und (S)-Konfiguration an dieser Position. Bevorzugt sind als Komponente (A) auch Gemische der vorstehend genannten optisch aktiven Verbindungen (A), vorzugsweise solche mit gleicher chemischer Konstitution, die sich nur in der stereochemischen Konfiguration unterscheiden. Bevorzugt sind beispielsweise optisch aktive Gemische der Verbindungen (A9) + (A11), (A21) + (A22), (A23) + (A24), (A28) + (A29), (A32) + (A33), wobei die Mengenverhältnisse in einem weiten Bereich variiert werden können.

Bevorzugt sind auch die aufgeführten racemischen Verbindungen (A69), (A70), (A71), (A72), (A73), (A74), (A75), (A76), (A77), (A79), (A82), (A83), (A84), (A85), (A86), (A87), (A89), (A90), (A91), (A92), (A93), (A94), (A95), (A96), (A97), (A100), (A101), (A102), (A103), (A112), (A113), (A114), (A115), (A122), (A124), (A125) und deren Gemische.

Bevorzugt sind auch die Verbindungen (A12), (A14), (A20), (A27), (A40), (A45), (A46), (A47), (A48), (A52), (A62), (A67), (A68), (A78), (A80), (A88), (A99), (A104), (A105), (A106), (A107), (A111), (A116), (A121), (A126), (A127) und deren Gemische. Bezüglich der racemischen Verbindungen und der optischen Reinheiten gilt das vorstehend Gesagte für diese Gruppe von Verbindungen entsprechend.

Bevorzugt sind auch die Verbindungen (A15), (A39), (A49), (A50), (A51), (A57), (A58), (A59), (A60), (A61), (A64), (A81), (A98), (A108), (A109), (A110), (A116), (A117), (A118), (A119), (A120), (A123) und deren Gemische. Bezüglich der racemischen Verbindungen und der optischen Reinheiten gilt das vorstehend Gesagte für diese Gruppe von Verbindungen entsprechend. Als Kombinationspartner (B) [= Komponente (B)] kommen Wirkstoffe der Untergruppen (B1) bis (B3) in Frage, wobei die Bezeichnung der herbiziden Wirkstoffe weitgehend mit dem "common name" (in der englischen Schreibweise) nach der Referenzstelle "The Pesticide Manual" 14th Ed., British Crop Protection Council 2006, abgekürzt "PM" bzw. dem chemischen Namen gemäß der üblichen Nomenklaturen (IUPAC oder Chemical Abstracts) erfolgt:

Die herbiziden Wirkstoffe aus der Gruppe (B1), (B2) und (B3) bedeuten im Einzelnen Folgendes:

(B1) Herbizide Wirkstoffe, welche besonders für die postemergente Applikation gegen monokotyle oder dikotyle Schadpflanzen geeignet sind, ausgewählt aus der Gruppe

(B1.1) Thiencarbazone und dessen Ester und Salze (WO 01/05788), insbesondere

(B1.1.1) Thiencarbazone, d. h. die chemische Verbindung 4-[(4,5-Dihydro-3-methoxy-4-methyl-5-oxo-1*H*-1,2,4-triazol-1-yl)-carbonylsulfamoyl]-5-methylthiophen-3-carbonsäure der Formel:

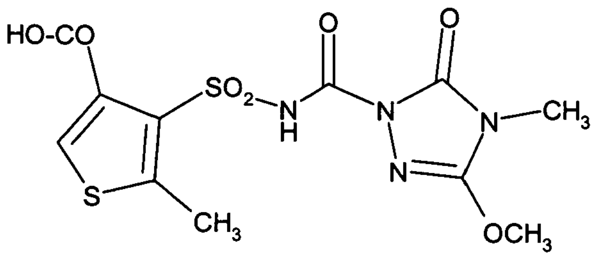

(B1.1.2) Thiencarbazone-methyl, d. h. die chemische Verbindung 4-[(4,5-Dihydro-3-methoxy-4-methyl-5-oxo-1*H*-1,2,4-triazol-1-yl)-carbonyl-sulfamoyl]-5-methylthiophen-3-carbonsäuremethylester [CAS-Reg. 317815-83-1] oder

(B1.1.3) Thiencarbazone-methyl-natriumsalz, d. h. die Verbindung 4-[(4,5-Dihydro-3-methoxy-4-methyl-5-oxo-1*H*-1,2,4-triazol-1-yl)-carbonyl-sulfamoyl]-5-methylthiophen-3-carbonsäuremethylester-Natrium, d.h. das saure Wasserstoffatom an der Sulfonamidgruppe im Thiencarbazone-methyl ist gegen ein Natriumatom ausgetauscht,

(B1.2) Tembotrione und dessen Salze, beispielsweise dessen Alkalimetallsalze wie Natrium- oder Kaliumsalze, (siehe WO-A-00/21924), insbesondere

(B1.2.1) Tembotrione, d. h. die chemische Verbindung 2-{2-Chlor-4-mesyl-3-[(2,2,2-trifluorethoxy)methyl]-benzoyl}-cyclohexan-1,3-dion [CAS-Reg. 335104-84-2] der Formel (die Formel zeigt nur die Triketoform an, die mit mehreren möglichen Enolformen in der Regel im Gleichgewicht steht):

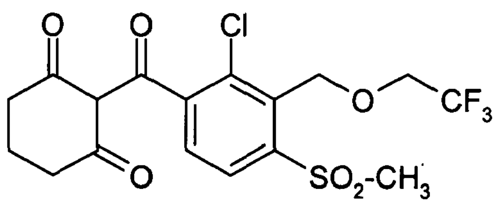

(B1.3) [[3-[2-Chlor-5-[3,6-dihydro-3-methyl-2,6-dioxo-4-(trifluormethyl)-1(2H)-pyrimidinyl]-4-fluorphenoxy]-2-pyridinyl]oxy]-essigsäureethylester (hierin auch als SYN-523 bezeichnet) (WO 2006/061562, EP 1122244) der Formel

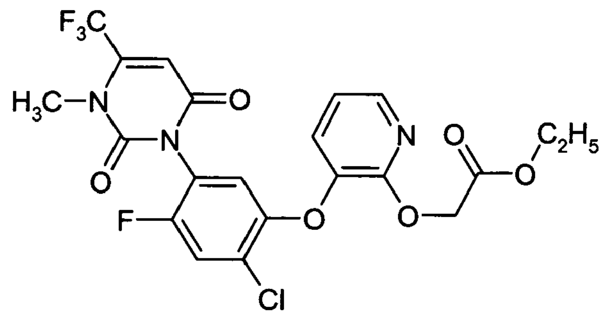

(B1.4) Pyroxsulam und dessen Salze, beispielsweise dessen Alkalimetallsalze wie Natrium- oder Kaliumsalze, insbesondere (B1.4.1) Pyroxsulam, d. h. die chemische Verbindung *N*-(5,7-Dimethoxy[1,2,4]triazolo[1,5-a]pyrimidin-2-yl)-2-methoxy-4-(trifluormethyl)pyridin-3-sulfonamid [CAS-Reg. 422556-08-9] der Formel:

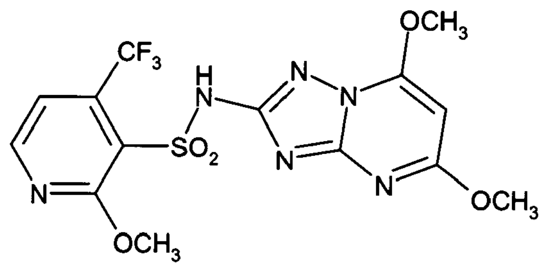

(B1.5) Penoxsulam und dessen Salze, beispielsweise dessen Alkalimetallsalze wie Natrium- oder Kaliumsalze, insbesondere (B1.5.1) Penoxsulam, d. h. die chemische Verbindung 2-(2,2-Difluorethoxy)-*N*-(5,8-dimethoxy [1,2,4]triazolo[1,5-c]pyrimidin-2-yl)-6-(trifluormethyl)benzolsulfonamid [CAS-Reg. 219714-96-2] der Formel:

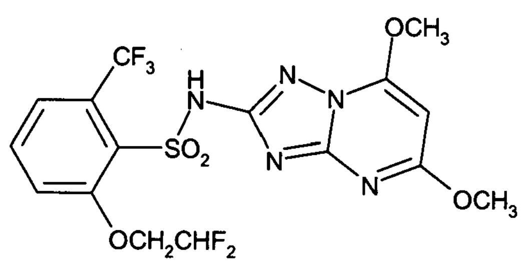

und

(B1.6) 4-Hydroxy-3-[[2-[(2-methoxy-ethoxy)-methyl]-6-trifluormethyl-3-pyridinyl]-carbonyl]-bicyclo[3.2.1]oct-3-en-2-on und dessen Salze, beispielsweise dessen Alkalimetallsalze wie Natrium- oder Kaliumsalze, insbesondere

(B1.6.1) SYN-449, d. h. die chemische Verbindung 4-Hydroxy-3-[[2-[(2-methoxy-ethoxy)-methyl]-6-trifluormethyl-3-pyridinyl]-carbonyl]-bicyclo[3.2.1]oct-3-en-2-on (CAS RN 352010-68-5, SYN-449, WO-A-2006/097322, WO-A-01/94339) der Formel (die Formel zeigt nur eine der möglichen Enolformen, die untereinander und mit der Ketoform = dem Triketon in der Regel im Gleichgewicht stehen):

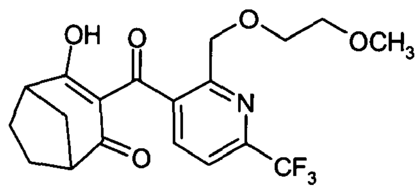

(B2) herbizide Wirkstoffe, welche besonders für die postemergente Applikation gegen dikotyle Schadpflanzen geeignet sind, ausgewählt aus der Gruppe

(B2.1) Pyrasulfotole und dessen Salze, beispielsweise dessen Alkalimetallsalze wie Natrium- oder Kaliumsalze, insbesondere

(B2.1.1) Pyrasulfotole, d.h. die chemische Verbindung (5-Hydroxy-1,3-dimethyl-1*H*-pyrazol-4-yl)-[2-(methylsulfonyl)-4-(trifluormethyl)-phenyl]-methanon [CAS-Reg. 365400-11-9] der Formel:

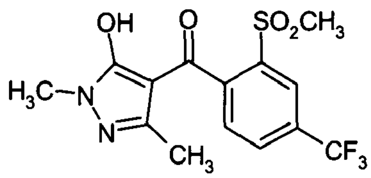

(B2.2) Trifloxysulfuron und dessen Salze, beispielsweise dessen Alkalimetallsalze wie Natrium- oder Kaliumsalze, insbesondere
(B2.2.1) Trifloxysulfuron, d. h. die chemische Verbindung 1-(4,6-Dimethoxypyrimidin-2-yl)-3-[3-(2,2,2-trifluorethoxy)-2-pyridylsulfonyl]-harnstoff der Formel:

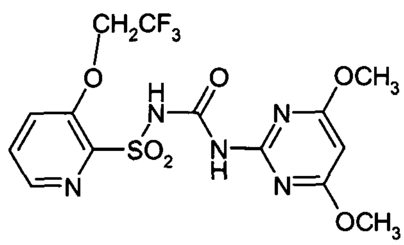

oder vorzugsweise
(B2.2.2) Trifloxysulfuron-Natrium, d. h. das Natriumsalz von Trifloxysulfuron, in dem das saure Wasserstoffatom an der Sulfonamidgruppe gegen ein Natriumatom ausgetauscht ist:

(B2.3) Saflufenacil und dessen Salze, beispielsweise dessen Alkalimetallsalze wie Natrium- oder Kaliumsalze, insbesondere

(B2.3.1) Saflufenacil (hierin auch als BAS-H800 bezeichnet), d. h. die chemische Verbindung 2-Chlor-5-[3,6-dihydro-3-methyl-2,6-dioxo-4-(trifluormethyl)-1 (2*H*)-pyrimidinyl]-4-fluor-*N*-[[methyl(1-methylethyl) amino]-sulfonyl]-benzamid [CAS-Reg. 372137-35-4] (WO 2001/083459) der Formel:

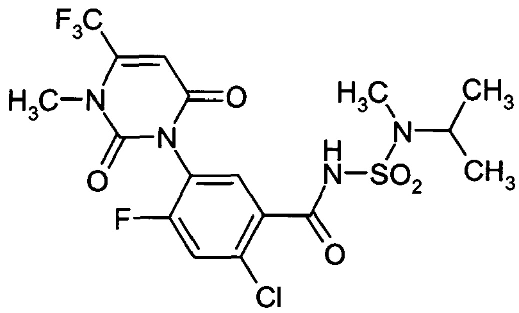

(B2.4) Aminopyralid und dessen Salze, beispielsweise dessen Alkalimetallsalze wie Natrium- oder Kaliumsalze oder Ammoniumsalze oder auch Säureadditionssalze (z.B. Hydrochloride), insbesondere

(B2.4.1) Aminopyralid, d. h. die chemische Verbindung 4-Amino-3,6-dichlorpyridin-2-carbonsäure [CAS-Reg.150114-71-9] der Formel:

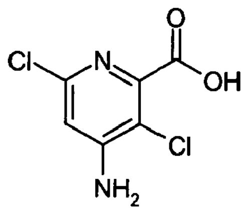

und

(B2.5) Ethofumesate, d. h. die chemische Verbindung (*RS*)-Methansulfonsäure-O-(2-ethoxy-2,3-dihydro-3,3-dimethylbenzofuran-5-yl)-ester [CAS-Reg. 26225-79-6] der Formel:

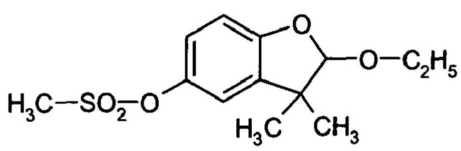

(B2.6) Aminocyclopyrachlor und dessen Salze und Ester, beispielsweise dessen Alkalimetallsalze wie Natrium- oder Kaliumsalze und dessen Alkylester wie ($C_1$-$C_4$)Alkylester, vorzugsweise

(B2.6.1) Aminocyclopyrachlor, d. h. die chemische Verbindung 6-amino-5-chlor-2-cyclopropyl-pyrimidin-4-carbonsäure [CAS-Reg. 858958-08-8] der Formel:

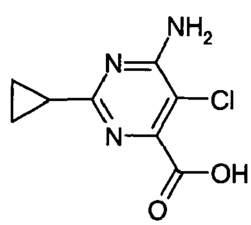

oder vorzugsweise auch

(B2.6.2) Aminocyclopyrachlor-kaliumsalz oder
(B2.6.3) Aminocyclopyrachlor-natriumsalz oder
(B2.6.4) Aminocyclopyrachlor-methylester und

(B3) herbizide Wirkstoffe, welche besonders für die preemergente Applikation gegen monokotyle oder dikotyle Schadpflanzen geeignet sind, ausgewählt aus der Gruppe

(B3.1) Pyroxasulfone (KIH-485), d. h. die chemische Verbindung 3-[5-(Difluormethoxy)-1-methyl-3-(trifluormethyl)pyrazol-4-ylmethylsulfonyl]-4,5-dihydro-5,5-dimethyl-1,2-oxazol [CAS-Reg. 447399-55-5] der Formel:

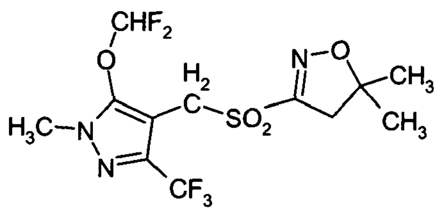

Die erfindungsgemäß verwendeten Kombinationspartner (B) sind hinsichtlich der Zielpflanzen und des Applikationszeitraums funktionell ähnlich, was ihre Einordnung in der gleichen funktionellen Gruppe der Kombinationspartner begründet, unterscheiden sich jedoch teilweise hinsichtlich der chemischen Stoffklasse und des biologischen Wirkungsmechanismus und damit in der Regel teilweise auch hinsichtlich der Aufwandmenge und der herbiziden Wirkung bei den einzelnen Zielpflanzen. Weitere Gemeinsamkeiten oder Ähnlichkeiten zwischen den Wirkstoffen (B) sind nachfolgend erwähnt.

Einige der Verbindungen (B) gehören derselben chemischen Stoffklasse bzw. weisen denselben oder ähnlichen Wirkungsmechanismus auf:

(B1.1) Thiencarbazone und dessen Ester und Salze gehören zur chemischen Stoffklasse der Triazolon-herbizide und stellen Inhibitoren der Acetolactatsyntase in Pflanzen dar (ALS-Inhibitoren).
(B1.2) Tembotrione und dessen Salze gehören zur chemischen Stoffklasse der Benzoylcyclohexandione und stellen Inhibitoren der Hydroxyphenyl-pyruvat-dioxygenase in Pflanzen dar (HPPD-Inhibitoren).
(B1.3) SYN-523 gehört zur chemischen Stoffklasse der Uracile (Pyrimidindione) und stellt einen Inhibitor der Protoporphyrinogen-oxidase in Pflanzen dar (PPO-Inhibitor).
(B1.4) Pyroxsulam und (B1.5) Penoxsulam und deren Salze gehören zur chemischen Stoffklasse der Triazolopyrimidine und und stellen Inhibitoren der Acetolactatsyntase in Pflanzen dar (ALS-Inhibitoren).
(B1.6) SYN-449 und dessen Salze gehören zur chemischen Stoffklasse der (verbrückten) Benzoylcyclohexandione und stellen Inhibitoren der Hydroxyphenyl-pyruvat-dioxygenase in Pflanzen dar (HPPD-Inhibitoren).
(B2.1) Pyrasulfotole und dessen Salze gehören zur chemischen Stoffklasse der Benzoylpyrazole, die mit den Benzoylcyclohexandionen verwandt ist, und stellen Inhibitoren der Hydroxyphenyl-pyruvat-dioxygenase in Pflanzen dar (HPPD-Inhibitoren).
(B2.2) Trifloxysulfuron und dessen Salze gehören zur chemischen Stoffklasse der Pyridylsulfonylharnstoffe und stellen Inhibitoren der Acetolactatsyntase in Pflanzen dar (ALS-Inhibitoren).
(B2.3) Saflufenacil und dessen Salze gehören zur chemischen Stoffklasse der Uracile (Pyrimidindione) und stellen Inhibitoren der Protoporphyrinogen-oxidase in Pflanzen dar (PPO-Inhibitoren).
(B2.4) Aminopyralid und dessen Salze gehören zur chemischen Klasse der Pyridylcarbonsäuren (Picolinsäuren) und stellen synthetische Auxine in Pflanzen dar.
(B2.5) Ethofumesate gehört zur chemischen Stoffklasse der Benzofuranylmethansulfonate und stellt einen Inhibitor der Lipidsynthese in Pflanzen dar.
(B2.6) Aminocyclopyrachlor und dessen Salze oder Ester gehören zur chemischen Klasse der Pyrimidincarbonsäuren und stellen synthetische Auxine in Pflanzen dar.
(B3.1) Pyroxasulfone gehört zur chemischen Stoffklasse der Oxazolinsulfonylmethylpyrazole und stellt einen Inhibitor der "Very Long Chain Fatty Acid" (VLCFA) Elongasen in Pflanzen dar.

Bevorzugt sind bei den oben definierten Kombinationen solche, in denen ein oder mehrere Herbizide aus der Gruppe (A), vorzugsweise ein Herbizid (A) oder mehrere Herbizide (A), die gleiche chemische Konstitution aufweisen, und ein oder mehrere Herbizide aus der Gruppe (B), vorzugsweise ein Herbizid (B) oder ein oder mehrere Herbizide

(B) aus der gleichen Untergruppe (B1), (B2) oder (B3) enthalten sind.

Weiterhin können die erfindungsgemäßen Kombinationen zusammen mit anderen Wirkstoffen wie die erwähnten Wirkstoffe (Herbizide, Fungizide, Insektizide, Akarizide etc.) und/oder Pflanzenwachstumsregulatoren oder Hilfstoffe aus der Gruppe der im Pflanzenschutz üblichen Zusatzstoffe, wie Adjuvantien und Formulierungshilfsmittel, eingesetzt werden. Die Kombination der Pflanzenschutzmittelwirkstoffe, welche die Wirkstoffe (A) und (B) und gegebenenfalls weitere Wirkstoffe enthalten, werden hier kurz als "Herbizid-Kombination" bezeichnet. Deren Anwendungsformen wie Formulierungen oder Tankmischungen stellen herbizide Mittel (Zusammensetzungen) dar.

Gegenstand der Erfindung sind deshalb auch die herbiziden Mittel, welche die erfindungsgemäßen Wirkstoffkombinationen mit im Pflanzenschutz üblichen Zusatzstoffen, wie Adjuvantien und Formulierungshilfsmitteln, und gegebenenfalls weiteren Pflanzenschutzmittelwirkstoffen enthalten.

Gegenstand der Erfindung ist auch die Verwendung der bzw. das Anwendungsverfahren unter Verwendung der erfindungsgemäßen Wirkstoffkombinationen als Herbizide und Pflanzenwachstumsregulatoren, vorzugsweise als Herbizide und Pflanzenwachstumsregulatoren mit einem synergistisch wirksamen Gehalt an der jeweils enthaltenen Wirkstoffkombination.

Die Aufwandmengen der Herbizide (B) sind im Prinzip bekannt und liegen in der Regel im Bereich von 0,01 bis 1000 g AS/ha (g AS/ha = g Aktivsubstanz pro Hektar), vorzugsweise im Bereich von 0,02 bis 800 g AS/ha, insbesondere 0,1 bis 500 g AS/ha.

In den erfindungsgemäßen Mischungen werden im Rahmen der genannten Aufwandmengen im Vergleich zur Einzelapplikation in der Regel niedrigere Aufwandmengen des jeweiligen Wirkstoffs benötigt. Für die Wirkstoffe aus der Gruppe (B1) ist die Aufwandmenge vorzugsweise im Bereich von 0,1 bis 500 g AS/ha, insbesondere im Bereich von 0,2 bis 250 g/ha. Für die Wirkstoffe aus der Gruppe (B2) ist die Aufwandmenge vorzugsweise im Bereich von 0,1 bis 1000 g AS/ha, insbesondere im Bereich von 0,2 bis 750 g/ha. Für den Wirkstoff aus der Gruppe (B3) ist die Aufwandmenge vorzugsweise im Bereich von 0,1 bis 500 g AS/ha, insbesondere im Bereich von 0,2 bis 200 g/ha. In der nachfolgenden Tabelle 2 sind für die einzelnen Wirkstoffe (B) bevorzugte und insbesonders bevorzugte Aufwandmengen angegeben.

Die Mengenverhältnisse (A):(B) bezogen auf das Gewicht liegen in Abhängigkeit von den wirksamen Aufwandmengen in der Regel im Bereich von 1:100000 bis 2000:1, vorzugsweise 1:40000 bis 750:1, insbesondere im Bereich von 1:15000 bis 500:1. Für die Wirkstoffe aus den Gruppen (B1), (B2) bzw. (B3) sind die bevorzugten Gewichtsverhältnisse (A):(B) wie folgt:

(A):(B1) vorzugsweise im Bereich von 1:50000 bis 2000:1, insbesondere 1:13000 bis 750:1;

(A):(B2) vorzugsweise im Bereich von 1:100000 bis 2000:1, insbesondere 1:40000 bis 750:1;

(A):(B3) vorzugsweise im Bereich von 1:50000 bis 2000:1, insbesondere 1:18000 bis 75:1.

In der nachfolgenden Tabelle 2 sind für die einzelnen Wirkstoffe (B) bevorzugte und insbesonders bevorzugte Mengenverhältnisse (A):(B) angegeben.

Spezifische Herbizidkombinationen (Aa)+(Bb) sind in der Tabelle 3 aufgeführt und werden dort mit dem Ausdruck Ka.b bezeichnet, wobei a die jeweilige Kennziffer (= Kennziffer a) aus der Nummer (Aa) des Herbizids (A) aus der Tabelle 1 bedeutet [= Kennziffern 1 bis 127 der Verbindungen (A1) bis (A127)] und b die jeweilige Kennziffer (= Kennziffer b) der Herbizid-Komponente (B) gemäß der folgenden Tabelle 2 bedeutet [= Kennziffern 1 bis 24 zu den Verbindungen (B1.1) bis (B3.1)]:

Tabelle 2: Kennziffer b für Herbizid-Komponente (B), bevorzugte Aufwandmengen zu (B) und bevorzugte Mengenverhältnisse (A):(B)

| Kz. b | Komp. (B) | Kurzname | Aufwandmenge [g AS/ha] | Gewichtsverhältnis (A):(B) |
|---|---|---|---|---|
| 1 | (B1.1) | Thiencarbazone und dessen ster und Salze | 0,1 bis 200 (0,2 bis 100) | 1:20000 bis 2000:1 (1: 10000 bis 750:1) |
| 2 | (B1.1.1) | Thiencarbazone | 0,1 bis 200 (0,2 bis 100) | 1:20000 bis 2000:1 (1: 10000 bis 750:1) |
| 3 | (B1.1.2) | Thiencarbazonemethyl | 0,1 bis 200 (0,2 bis 100) | 1:20000 bis 2000:1 (1: 10000 bis 750:1) |
| 4 | (B1.1.3) | Thiencarbazonemethyl-natrium | 0,1 bis 200 (0,2 bis 100) | 1:20000 bis 2000:1 (1: 10000 bis 750:1) |

(fortgesetzt)

| Kz. b | Komp. (B) | Kurzname | Aufwandmenge [g AS/ha] | Gewichtsverhältnis (A):(B) |
|---|---|---|---|---|
| 5 | (B1.2) | Tembotrione und dessen Salze | 0,1 bis 500 (2 bis 200) | 1:50000 bis 200:1 (1: 10000 bis 75:1) |
| 6 | (B1.2.1) | Tembotrione | 0,1 bis 500 (2 bis 200) | 1:50000 bis 200:1 (1: 10000 bis 75:1) |
| 7 | (B1.3) | SYN-523 | 0,1 bis 500 (2 bis 200) | 1:50000 bis 20000:1 (1: 13000 bis 750:1) |
| 8 | (B1.4) | Pyroxsulam und dessen Salze | 1 bis 200 (2 bis 150) | 1:20000 bis 200:1 (1: 7500 bis 75:1) |
| 9 | (B1.4.1) | Pyroxsulam | 1 bis 200 (2 bis 150) | 1:20000 bis 200:1 (1: 7500 bis 75:1) |
| 10 | (B1.5) | Penoxsulam und dessen Salze | 1 bis 200 (2 bis 150) | 1:20000 bis 200:1 (1: 7500 bis 75:1) |
| 11 | (B1.5.1) | Penoxsulam | 1 bis 200 (2 bis 150) | 1:20000 bis 200:1 (1: 7500 bis 75:1) |
| 12 | (B1.6) | SYN-449 und dessen Salze | 1 bis 200 (2 bis 150) | 1:20000 bis 200:1 (1: 7500 bis 75:1) |
| 13 | (B1.6.1) | SYN-449 | 1 bis 200 (2 bis 150) | 1:20000 bis 200:1 (1: 7500 bis 75:1) |
| 14 | (B2.1) | Pyrasulfotole und dessen Salze | 1 bis 300 (2 bis 150) | 1:30000 bis 200:1 (1: 10000 bis 30:1) |
| 15 | (B2.1.1) | Pyrasulfotole | 1 bis 300 (2 bis 150) | 1:30000 bis 200:1 (1: 10000 bis 30:1) |
| 16 | (B2.2) | Trifloxysulfuron und dessen Salze | 0,1 bis 300 (0,2 bis 150) | 1:30000 bis 2000:1 (1: 7500 bis 300:1) |
| 17 | (B2.2.1) | Trifloxysulfuron | 0,1 bis 300 (0,2 bis 150) | 1:30000 bis 2000:1 (1: 7500 bis 300:1) |
| 18 | (B2.2.2) | Trifloxysulfuronnatriumsalz | 0,1 bis 300 (0,2 bis 150) | 1:30000 bis 2000:1 (1: 7500 bis 300:1) |
| 19 | (B2.3) | Saflufenacil und dessen Salze | 0,1 bis 300 (0,2 bis 250) | 1:30000 bis 2000:1 (1: 12500 bis 750:1) |
| 20 | (B2.3.1) | Saflufenacil | 0,1 bis 300 (0,2 bis 250) | 1:30000 bis 2000:1 (1: 12500 bis 750:1) |
| 21 | (B2.4) | Aminopyralid und dessen Salze | 0,1 bis 300 (0,2 bis 250) | 1:30000 bis 2000:1 (1: 12500 bis 750:1) |
| 22 | (B2.4.1) | Aminopyralid | 0,1 bis 300 (0,2 bis 250) | 1:30000 bis 2000:1 (1: 12500 bis 750:1) |
| 23 | (B2.5) | Ethofumesate | 1 bis 1000 (2 bis 750) | 1:100000 bis 200:1 (1: 37500 bis 75:1) |
| 24 | (B2.6) | Aminocyclopyrachlor und dessen Salze und Ester | 1 bis 1000 (2 bis 350) | 1:75000 bis 200:1 (1: 25000 bis 75:1) |
| 25 | (B2.6.1) | Aminocyclopyrachlor | 1 bis 1000 (2 bis 350) | 1:75000 bis 200:1 (1: 25000 bis 75:1) |
| 26 | (B2.6.2) | Aminocyclopyrachlor-kaliumsalz | 1 bis 1000 (2 bis 350) | 1:75000 bis 200:1 (1: 25000 bis 75:1) |

(fortgesetzt)

| Kz. b | Komp. (B) | Kurzname | Aufwandmenge [g AS/ha] | Gewichtsverhältnis (A):(B) |
|---|---|---|---|---|
| 27 | (B2.6.3) | Aminocyclopyrachlor-natriumsalz | 1 bis 1000 (2 bis 350) | 1:75000 bis 200:1 (1:25000 bis 75:1) |
| 28 | (B2.6.4) | Aminocyclopyrachlor-methylester | 1 bis 1000 (2 bis 350) | 1:75000 bis 200:1 (1:25000 bis 75:1) |
| 29 | (B3.1) | Pyroxasulfone | 0,1 bis 500 (0,2 bis 200) | 1:50000 bis 200:1 (1:17500 bis 75:1) |
| Abkürzungen zu Tabelle 2:<br>Kz. = Kennziffer<br>Komp. = Komponente, Wirkstoff<br>AS = Aktivsubstanz (bezogen auch 100% Wirkstoff)<br>(A):(B) = Mengenverhältnis der Wirkstoffe (A):(B) [(A)= Verb. (I) bzw. vorzugsweise gemäß Tab. 1; (B) = Verb. gemäß Tab. 2] | | | | |

Die Spalten "Aufwandmengen" bzw. "Gewichtsverhältnisse" in Tabelle 2 enthalten jeweils bevorzugte und besonders bevorzugte Aufwandmengen (letztere in Klammern) bzw. "Gewichtsverhältnisse (A):(B)" bezogen auf die Wirkstoffgruppe (B) bzw. den Wirkstoff gemäß der Kennziffer b.

Bevorzugt sind binäre Kombinationen, enthaltend ein Herbizid aus der Gruppe der Herbizide (A1) bis (A127) und Herbizide aus der Gruppe (B1) oder (B2) oder (B3), beispielsweise ein Herbizid aus der Gruppe der Herbizide (A1) bis (A127) und ein oder mehrere Herbizide aus der Gruppe (B1.1), (B1.1.1), (B1.1.2), (B1.1.3), (B1.2), (B1.2.1), (B1.3), (B1.4), (B1.4.1), (B1.5), (B1.5.1), (B1.6), (B1.6.1), (B2.1), (B2.1.1), (B2.2), (B2.2.1), (B2.2.2), (B2.3), (B2.3.1), (B2.4), (B2.4.1), (B2.5), (B2.6), (B2.6.1), (B2.6.2), (B2.6.3), (B2.6.4) und (B3.1),
speziell eine der Kombinationen aus der Tabelle 3:

Tabelle 3: Binäre Herbizidkombinationen der Wirkstoffe (A) und (B)

K1.1, K1.2, K1.3, K1.4, K1.5, K1.6, K1.7, K1.8, K1.9, K1.10, K1.11, K1.12, K1.13,
K1.14, K1.15, K1.16, K1.17, K1.18, K1.19, K1.20, K1.21, K1.22, K1.23, K1.24,
K1.25, K1.26, K1.27, K1.28, K1.29,
K2.1, K2.2, K2.3, K2.4, K2.5, K2.6, K2.7, K2.8, K2.9, K2.10, K2.11, K2.12, K2.13,
K2.14, K2.15, K2.16, K2.17, K2.18, K2.19, K2.20, K2.21, K2.22, K2.23, K2.24,
K2.25, K2.26, K2.27, K2.28, K2.29,
K3.1, K3.2, K3.3, K3.4, K3.5, K3.6, K3.7, K3.8, K3.9, K3.10, K3.11, K3.12, K3.13,
K3.14, K3.15, K3.16, K3.17, K3.18, K3.19, K3.20, K3.21, K3.22, K3.23, K3.24,
K3.25, K3.26, K3.27, K3.28, K3.29,
K4.1, K4.2, K4.3, K4.4, K4.5, K4.6, K4.7, K4.8, K4.9, K4.10, K4.11, K4.12, K4.13,
K4.14, K4.15, K4.16, K4.17, K4.18, K4.19, K4.20, K4.21, K4.22, K4.23, K4.24,
K4.25, K4.26, K4.27, K4.28, K4.29,
K5.1, K5.2, K5.3, K5.4, K5.5, K5.6, K5.7, K5.8, K5.9, K5.10, K5.11, K5.12, K5.13,
K5.14, K5.15, K5.16, K5.17, K5.18, K5.19, K5.20, K5.21, K5.22, K5.23, K5.24,
K5.25, K5.26, K5.27, K5.28, K5.29,
K6.1, K6.2, K6.3, K6.4, K6.5, K6.6, K6.7, K6.8, K6.9, K6.10, K6.11, K6.12, K6.13,
K6.14, K6.15, K6.16, K6.17, K6.18, K6.19, K6.20, K6.21, K6.22, K6.23, K6.24,
K6.25, K6.26, K6.27, K6.28, K6.29,
K7.1, K7.2, K7.3, K7.4, K7.5, K7.6, K7.7, K7.8, K7.9, K7.10, K7.11, K7.12, K7.13,
K7.14, K7.15, K7.16, K7.17, K7.18, K7.19, K7.20, K7.21, K7.22, K7.23, K7.24,
K7.25, K7.26, K7.27, K7.28, K7.29,
K8.1, K8.2, K8.3, K8.4, K8.5, K8.6, K8.7, K8.8, K8.9, K8.10, K8.11, K8.12, K8.13,
K8.14, K8.15, K8.16, K8.17, K8.18, K8.19, K8.20, K8.21, K8.22, K8.23, K8.24,
K8.25, K8.26, K8.27, K8.28, K8.29,
K9.1, K9.2, K9.3, K9.4, K9.5, K9.6, K9.7, K9.8, K9.9, K9.10, K9.11, K9.12, K9.13,

(fortgesetzt)

K9.14, K9.15, K9.16, K9.17, K9.18, K9.19, K9.20, K9.21, K9.22, K9.23, K9.24, K9.25, K9.26, K9.27, K9.28, K9.29,
K10.1, K10.2, K10.3, K10.4, K10.5, K10.6, K10.7, K10.8, K10.9, K10.10, K10.11, K10.12, K10.13, K10.14, K10.15, K10.16, K10.17, K10.18, K10.19, K10.20, K10.21, K10.22, K10.23, K10.24, K10.25, K10.26, K10.27, K10.28, K10.29,
K11.1, K11.2, K11.3, K11.4, K11.5, K11.6, K11.7, K11.8, K11.9, K11.10, K11.11, K11.12, K11.13, K11.14, K11.15, K11.16, K11.17, K11.18, K11.19, K11.20, K11.21, K11.22, K11.23, K11.24, K11.25, K11.26, K11.27, K11.28, K11.29,
K12.1, K12.2, K12.3, K12.4, K12.5, K12.6, K12.7, K12.8, K12.9, K12.10, K12.11, K12.12, K12.13, K12.14, K12.15, K12.16, K12.17, K12.18, K12.19, K12.20, K12.21, K12.22, K12.23, K12.24, K12.25, K12.26, K12.27, K12.28, K12.29,
K13.1, K13.2, K13.3, K13.4, K13.5, K13.6, K13.7, K13.8, K13.9, K13.10, K13.11, K13.12, K13.13, K13.14, K13.15, K13.16, K13.17, K13.18, K13.19, K13.20, K13.21, K13.22, K13.23, K13.24, K13.25, K13.26, K13.27, K13.28, K13.29,
K14.1, K14.2, K14.3, K14.4, K14.5, K14.6, K14.7, K14.8, K14.9, K14.10, K14.11, K14.12, K14.13, K14.14, K14.15, K14.16, K14.17, K14.18, K14.19, K14.20, K14.21, K14.22, K14.23, K14.24, K14.25, K14.26, K14.27, K14.28, K14.29,
K15.1, K15.2, K15.3, K15.4, K15.5, K15.6, K15.7, K15.8, K15.9, K15.10, K15.11, K15.12, K15.13, K15.14, K15.15, K15.16, K15.17, K15.18, K15.19, K15.20, K15.21, K15.22, K15.23, K15.24, K15.25, K15.26, K15.27, K15.28, K15.29,
K16.1, K16.2, K16.3, K16.4, K16.5, K16.6, K16.7, K16.8, K16.9, K16.10, K16.11, K16.12, K16.13, K16.14, K16.15, K16.16, K16.17, K16.18, K16.19, K16.20, K16.21, K16.22, K16.23, K16.24, K16.25, K16.26, K16.27, K16.28, K16.29,
K17.1, K17.2, K17.3, K17.4, K17.5, K17.6, K17.7, K17.8, K17.9, K17.10, K17.11, K17.12, K17.13, K17.14, K17.15, K17.16, K17.17, K17.18, K17.19, K17.20, K17.21, K17.22, K17.23, K17.24, K17.25, K17.26, K17.27, K17.28, K17.29,
K18.1, K18.2, K18.3, K18.4, K18.5, K18.6, K18.7, K18.8, K18.9, K18.10, K18.11, K18.12, K18.13, K18.14, K18.15, K18.16, K18.17, K18.18, K18.19, K18.20, K18.21, K18.22, K18.23, K18.24, K18.25, K18.26, K18.27, K18.28, K18.29,
K19.1, K19.2, K19.3, K19.4, K19.5, K19.6, K19.7, K19.8, K19.9, K19.10, K19.11, K19.12, K19.13, K19.14, K19.15, K19.16, K19.17, K19.18, K19.19, K19.20, K19.21, K19.22, K19.23, K19.24, K19.25, K19.26, K19.27, K19.28, K19.29,
K20.1, K20.2, K20.3, K20.4, K20.5, K20.6, K20.7, K20.8, K20.9, K20.10, K20.11, K20.12, K20.13, K20.14, K20.15, K20.16, K20.17, K20.18, K20.19, K20.20, K20.21, K20.22, K20.23, K20.24, K20.25, K20.26, K20.27, K20.28, K20.29,
K21.1, K21.2, K21.3, K21.4, K21.5, K21.6, K21.7, K21.8, K21.9, K21.10, K21.11, K21.12, K21.13, K21.14, K21.15, K21.16, K21.17, K21.18, K21.19, K21.20, K21.21, K21.22, K21.23, K21.24, K21.25, K21.26, K21.27, K21.28, K21.29,
K22.1, K22.2, K22.3, K22.4, K22.5, K22.6, K22.7, K22.8, K22.9, K22.10, K22.11, K22.12, K22.13, K22.14, K22.15, K22.16, K22.17, K22.18, K22.19, K22.20, K22.21, K22.22, K22.23, K22.24, K22.25, K22.26, K22.27, K22.28, K22.29,
K23.1, K23.2, K23.3, K23.4, K23.5, K23.6, K23.7, K23.8, K23.9, K23.10, K23.11, K23.12, K23.13, K23.14, K23.15, K23.16, K23.17, K23.18, K23.19, K23.20, K23.21, K23.22, K23.23, K23.24, K23.25, K23.26, K23.27, K23.28, K23.29,
K24.1, K24.2, K24.3, K24.4, K24.5, K24.6, K24.7, K24.8, K24.9, K24.10, K24.11, K24.12, K24.13, K24.14, K24.15, K24.16, K24.17, K24.18, K24.19, K24.20, K24.21, K24.22, K24.23, K24.24, K24.25, K24.26, K24.27, K24.28, K24.29,
K25.1, K25.2, K25.3, K25.4, K25.5, K25.6, K25.7, K25.8, K25.9, K25.10, K25.11, K25.12, K25.13, K25.14, K25.15, K25.16, K25.17, K25.18, K25.19, K25.20, K25.21, K25.22, K25.23, K25.24, K25.25, K25.26, K25.27, K25.28, K25.29,
K26.1, K26.2, K26.3, K26.4, K26.5, K26.6, K26.7, K26.8, K26.9, K26.10, K26.11,

(fortgesetzt)

K26.12, K26.13, K26.14, K26.15, K26.16, K26.17, K26.18, K26.19, K26.20, K26.21, K26.22, K26.23, K26.24, K26.25, K26.26, K26.27, K26.28, K26.29,
K27.1, K27.2, K27.3, K27.4, K27.5, K27.6, K27.7, K27.8, K27.9, K27.10, K27.11, K27.12, K27.13, K27.14, K27.15, K27.16, K27.17, K27.18, K27.19, K27.20, K27.21, K27.22, K27.23, K27.24, K27.25, K27.26, K27.27, K27.28, K27.29,
K28.1, K28.2, K28.3, K28.4, K28.5, K28.6, K28.7, K28.8, K28.9, K28.10, K28.11, K28.12, K28.13, K28.14, K28.15, K28.16, K28.17, K28.18, K28.19, K28.20, K28.21, K28.22, K28.23, K28.24, K28.25, K28.26, K28.27, K28.28, K28.29,
K29.1, K29.2, K29.3, K29.4, K29.5, K29.6, K29.7, K29.8, K29.9, K29.10, K29.11, K29.12, K29.13, K29.14, K29.15, K29.16, K29.17, K29.18, K29.19, K29.20, K29.21, K29.22, K29.23, K29.24, K29.25, K29.26, K29.27, K29.28, K29.29,
K30.1, K30.2, K30.3, K30.4, K30.5, K30.6, K30.7, K30.8, K30.9, K30.10, K30.11, K30.12, K30.13, K30.14, K30.15, K30.16, K30.17, K30.18, K30.19, K30.20, K30.21, K30.22, K30.23, K30.24, K30.25, K30.26, K30.27, K30.28, K30.29,
K31.1, K31.2, K31.3, K31.4, K31.5, K31.6, K31.7, K31.8, K31.9, K31.10, K31.11, K31.12, K31.13, K31.14, K31.15, K31.16, K31.17, K31.18, K31.19, K31.20, K31.21, K31.22, K31.23, K31.24, K31.25, K31.26, K31.27, K31.28, K31.29,
K32.1, K32.2, K32.3, K32.4, K32.5, K32.6, K32.7, K32.8, K32.9, K32.10, K32.11, K32.12, K32.13, K32.14, K32.15, K32.16, K32.17, K32.18, K32.19, K32.20, K32.21, K32.22, K32.23, K32.24, K32.25, K32.26, K32.27, K32.28, K32.29,
K33.1, K33.2, K33.3, K33.4, K33.5, K33.6, K33.7, K33.8, K33.9, K33.10, K33.11, K33.12, K33.13, K33.14, K33.15, K33.16, K33.17, K33.18, K33.19, K33.20, K33.21, K33.22, K33.23, K33.24, K33.25, K33.26, K33.27, K33.28, K33.29,
K34.1, K34.2, K34.3, K34.4, K34.5, K34.6, K34.7, K34.8, K34.9, K34.10, K34.11, K34.12, K34.13, K34.14, K34.15, K34.16, K34.17, K34.18, K34.19, K34.20, K34.21, K34.22, K34.23, K34.24, K34.25, K34.26, K34.27, K34.28, K34.29,
K35.1, K35.2, K35.3, K35.4, K35.5, K35.6, K35.7, K35.8, K35.9, K35.10, K35.11, K35.12, K35.13, K35.14, K35.15, K35.16, K35.17, K35.18, K35.19, K35.20, K35.21, K35.22, K35.23, K35.24, K35.25, K35.26, K35.27, K35.28, K35.29,
K36.1, K36.2, K36.3, K36.4, K36.5, K36.6, K36.7, K36.8, K36.9, K36.10, K36.11, K36.12, K36.13, K36.14, K36.15, K36.16, K36.17, K36.18, K36.19, K36.20, K36.21, K36.22, K36.23, K36.24, K36.25, K36.26, K36.27, K36.28, K36.29,
K37.1, K37.2, K37.3, K37.4, K37.5, K37.6, K37.7, K37.8, K37.9, K37.10, K37.11, K37.12, K37.13, K37.14, K37.15, K37.16, K37.17, K37.18, K37.19, K37.20, K37.21, K37.22, K37.23, K37.24, K37.25, K37.26, K37.27, K37.28, K37.29,
K38.1, K38.2, K38.3, K38.4, K38.5, K38.6, K38.7, K38.8, K38.9, K38.10, K38.11, K38.12, K38.13, K38.14, K38.15, K38.16, K38.17, K38.18, K38.19, K38.20, K38.21, K38.22, K38.23, K38.24, K38.25, K38.26, K38.27, K38.28, K38.29,
K39.1, K39.2, K39.3, K39.4, K39.5, K39.6, K39.7, K39.8, K39.9, K39.10, K39.11, K39.12, K39.13, K39.14, K39.15, K39.16, K39.17, K39.18, K39.19, K39.20, K39.21, K39.22, K39.23, K39.24, K39.25, K39.26, K39.27, K39.28, K39.29,
K40.1, K40.2, K40.3, K40.4, K40.5, K40.6, K40.7, K40.8, K40.9, K40.10, K40.11, K40.12, K40.13, K40.14, K40.15, K40.16, K40.17, K40.18, K40.19, K40.20, K40.21, K40.22, K40.23, K40.24, K40.25, K40.26, K40.27, K40.28, K40.29,
K41.1, K41.2, K41.3, K41.4, K41.5, K41.6, K41.7, K41.8, K41.9, K41.10, K41.11, K41.12, K41.13, K41.14, K41.15, K41.16, K41.17, K41.18, K41.19, K41.20, K41.21, K41.22, K41.23, K41.24, K41.25, K41.26, K41.27, K41.28, K41.29,
K42.1, K42.2, K42.3, K42.4, K42.5, K42.6, K42.7, K42.8, K42.9, K42.10, K42.11, K42.12, K42.13, K42.14, K42.15, K42.16, K42.17, K42.18, K42.19, K42.20, K42.21, K42.22, K42.23, K42.24, K42.25, K42.26, K42.27, K42.28, K42.29,
K43.1, K43.2, K43.3, K43.4, K43.5, K43.6, K43.7, K43.8, K43.9, K43.10, K43.11,

(fortgesetzt)

K43.12, K43.13, K43.14, K43.15, K43.16, K43.17, K43.18, K43.19, K43.20, K43.21, K43.22, K43.23, K43.24, K43.25, K43.26, K43.27, K43.28, K43.29,
K44.1, K44.2, K44.3, K44.4, K44.5, K44.6, K44.7, K44.8, K44.9, K44.10, K44.11, K44.12, K44.13, K44.14, K44.15, K44.16, K44.17, K44.18, K44.19, K44.20, K44.21, K44.22, K44.23, K44.24, K44.25, K44.26, K44.27, K44.28, K44.29,
K45.1, K45.2, K45.3, K45.4, K45.5, K45.6, K45.7, K45.8, K45.9, K45.10, K45.11, K45.12, K45.13, K45.14, K45.15, K45.16, K45.17, K45.18, K45.19, K45.20, K45.21, K45.22, K45.23, K45.24, K45.25, K45.26, K45.27, K45.28, K45.29,
K46.1, K46.2, K46.3, K46.4, K46.5, K46.6, K46.7, K46.8, K46.9, K46.10, K46.11, K46.12, K46.13, K46.14, K46.15, K46.16, K46.17, K46.18, K46.19, K46.20, K46.21, K46.22, K46.23, K46.24, K46.25, K46.26, K46.27, K46.28, K46.29,
K47.1, K47.2, K47.3, K47.4, K47.5, K47.6, K47.7, K47.8, K47.9, K47.10, K47.11, K47.12, K47.13, K47.14, K47.15, K47.16, K47.17, K47.18, K47.19, K47.20, K47.21, K47.22, K47.23, K47.24, K47.25, K47.26, K47.27, K47.28, K47.29,
K48.1, K48.2, K48.3, K48.4, K48.5, K48.6, K48.7, K48.8, K48.9, K48.10, K48.11, K48.12, K48.13, K48.14, K48.15, K48.16, K48.17, K48.18, K48.19, K48.20, K48.21, K48.22, K48.23, K48.24, K48.25, K48.26, K48.27, K48.28, K48.29,
K49.1, K49.2, K49.3, K49.4, K49.5, K49.6, K49.7, K49.8, K49.9, K49.10, K49.11, K49.12, K49.13, K49.14, K49.15, K49.16, K49.17, K49.18, K49.19, K49.20, K49.21, K49.22, K49.23, K49.24, K49.25, K49.26, K49.27, K49.28, K49.29,
K50.1, K50.2, K50.3, K50.4, K50.5, K50.6, K50.7, K50.8, K50.9, K50.10, K50.11, K50.12, K50.13, K50.14, K50.15, K50.16, K50.17, K50.18, K50.19, K50.20, K50.21, K50.22, K50.23, K50.24, K50.25, K50.26, K50.27, K50.28, K50.29,
K51.1, K51.2, K51.3, K51.4, K51.5, K51.6, K51.7, K51.8, K51.9, K51.10, K51.11, K51.12, K51.13, K51.14, K51.15, K51.16, K51.17, K51.18, K51.19, K51.20, K51.21, K51.22, K51.23, K51.24, K51.25, K51.26, K51.27, K51.28, K51.29,
K52.1, K52.2, K52.3, K52.4, K52.5, K52.6, K52.7, K52.8, K52.9, K52.10, K52.11, K52.12, K52.13, K52.14, K52.15, K52.16, K52.17, K52.18, K52.19, K52.20, K52.21, K52.22, K52.23, K52.24, K52.25, K52.26, K52.27, K52.28, K52.29,
K53.1, K53.2, K53.3, K53.4, K53.5, K53.6, K53.7, K53.8, K53.9, K53.10, K53.11, K53.12, K53.13, K53.14, K53.15, K53.16, K53.17, K53.18, K53.19, K53.20, K53.21, K53.22, K53.23, K53.24, K53.25, K53.26, K53.27, K53.28, K53.29,
K54.1, K54.2, K54.3, K54.4, K54.5, K54.6, K54.7, K54.8, K54.9, K54.10, K54.11, K54.12, K54.13, K54.14, K54.15, K54.16, K54.17, K54.18, K54.19, K54.20, K54.21, K54.22, K54.23, K54.24, K54.25, K54.26, K54.27, K54.28, K54.29,
K55.1, K55.2, K55.3, K55.4, K55.5, K55.6, K55.7, K55.8, K55.9, K55.10, K55.11, K55.12, K55.13, K55.14, K55.15, K55.16, K55.17, K55.18, K55.19, K55.20, K55.21, K55.22, K55.23, K55.24, K55.25, K55.26, K55.27, K55.28, K55.29,
K56.1, K56.2, K56.3, K56.4, K56.5, K56.6, K56.7, K56.8, K56.9, K56.10, K56.11, K56.12, K56.13, K56.14, K56.15, K56.16, K56.17, K56.18, K56.19, K56.20, K56.21, K56.22, K56.23, K56.24, K56.25, K56.26, K56.27, K56.28, K56.29,
K57.1, K57.2, K57.3, K57.4, K57.5, K57.6, K57.7, K57.8, K57.9, K57.10, K57.11, K57.12, K57.13, K57.14, K57.15, K57.16, K57.17, K57.18, K57.19, K57.20, K57.21, K57.22, K57.23, K57.24, K57.25, K57.26, K57.27, K57.28, K57.29,
K58.1, K58.2, K58.3, K58.4, K58.5, K58.6, K58.7, K58.8, K58.9, K58.10, K58.11, K58.12, K58.13, K58.14, K58.15, K58.16, K58.17, K58.18, K58.19, K58.20, K58.21, K58.22, K58.23, K58.24, K58.25, K58.26, K58.27, K58.28, K58.29,
K59.1, K59.2, K59.3, K59.4, K59.5, K59.6, K59.7, K59.8, K59.9, K59.10, K59.11, K59.12, K59.13, K59.14, K59.15, K59.16, K59.17, K59.18, K59.19, K59.20, K59.21, K59.22, K59.23, K59.24, K59.25, K59.26, K59.27, K59.28, K59.29,
K60.1, K60.2, K60.3, K60.4, K60.5, K60.6, K60.7, K60.8, K60.9, K60.10, K60.11,

(fortgesetzt)

K60.12, K60.13, K60.14, K60.15, K60.16, K60.17, K60.18, K60.19, K60.20, K60.21, K60.22, K60.23, K60.24, K60.25, K60.26, K60.27, K60.28, K60.29,
K61.1, K61.2, K61.3, K61.4, K61.5, K61.6, K61.7, K61.8, K61.9, K61.10, K61.11, K61.12, K61.13, K61.14, K61.15, K61.16, K61.17, K61.18, K61.19, K61.20, K61.21, K61.22, K61.23, K61.24, K61.25, K61.26, K61.27, K61.28, K61.29,
K62.1, K62.2, K62.3, K62.4, K62.5, K62.6, K62.7, K62.8, K62.9, K62.10, K62.11, K62.12, K62.13, K62.14, K62.15, K62.16, K62.17, K62.18, K62.19, K62.20, K62.21, K62.22, K62.23, K62.24, K62.25, K62.26, K62.27, K62.28, K62.29,
K63.1, K63.2, K63.3, K63.4, K63.5, K63.6, K63.7, K63.8, K63.9, K63.10, K63.11, K63.12, K63.13, K63.14, K63.15, K63.16, K63.17, K63.18, K63.19, K63.20, K63.21, K63.22, K63.23, K63.24, K63.25, K63.26, K63.27, K63.28, K63.29,
K64.1, K64.2, K64.3, K64.4, K64.5, K64.6, K64.7, K64.8, K64.9, K64.10, K64.11, K64.12, K64.13, K64.14, K64.15, K64.16, K64.17, K64.18, K64.19, K64.20, K64.21, K64.22, K64.23, K64.24, K64.25, K64.26, K64.27, K64.28, K64.29,
K65.1, K65.2, K65.3, K65.4, K65.5, K65.6, K65.7, K65.8, K65.9, K65.10, K65.11, K65.12, K65.13, K65.14, K65.15, K65.16, K65.17, K65.18, K65.19, K65.20, K65.21, K65.22, K65.23, K65.24, K65.25, K65.26, K65.27, K65.28, K65.29,
K66.1, K66.2, K66.3, K66.4, K66.5, K66.6, K66.7, K66.8, K66.9, K66.10, K66.11, K66.12, K66.13, K66.14, K66.15, K66.16, K66.17, K66.18, K66.19, K66.20, K66.21, K66.22, K66.23, K66.24, K66.25, K66.26, K66.27, K66.28, K66.29,
K67.1, K67.2, K67.3, K67.4, K67.5, K67.6, K67.7, K67.8, K67.9, K67.10, K67.11, K67.12, K67.13, K67.14, K67.15, K67.16, K67.17, K67.18, K67.19, K67.20, K67.21, K67.22, K67.23, K67.24, K67.25, K67.26, K67.27, K67.28, K67.29,
K68.1, K68.2, K68.3, K68.4, K68.5, K68.6, K68.7, K68.8, K68.9, K68.10, K68.11, K68.12, K68.13, K68.14, K68.15, K68.16, K68.17, K68.18, K68.19, K68.20, K68.21, K68.22, K68.23, K68.24, K68.25, K68.26, K68.27, K68.28, K68.29,
K69.1, K69.2, K69.3, K69.4, K69.5, K69.6, K69.7, K69.8, K69.9, K69.10, K69.11, K69.12, K69.13, K69.14, K69.15, K69.16, K69.17, K69.18, K69.19, K69.20, K69.21, K69.22, K69.23, K69.24, K69.25, K69.26, K69.27, K69.28, K69.29,
K70.1, K70.2, K70.3, K70.4, K70.5, K70.6, K70.7, K70.8, K70.9, K70.10, K70.11, K70.12, K70.13, K70.14, K70.15, K70.16, K70.17, K70.18, K70.19, K70.20, K70.21, K70.22, K70.23, K70.24, K70.25, K70.26, K70.27, K70.28, K70.29,
K71.1, K71.2, K71.3, K71.4, K71.5, K71.6, K71.7, K71.8, K71.9, K71.10, K71.11, K71.12, K71.13, K71.14, K71.15, K71.16, K71.17, K71.18, K71.19, K71.20, K71.21, K71.22, K71.23, K71.24, K71.25, K71.26, K71.27, K71.28, K71.29,
K72.1, K72.2, K72.3, K72.4, K72.5, K72.6, K72.7, K72.8, K72.9, K72.10, K72.11, K72.12, K72.13, K72.14, K72.15, K72.16, K72.17, K72.18, K72.19, K72.20, K72.21, K72.22, K72.23, K72.24, K72.25, K72.26, K72.27, K72.28, K72.29,
K73.1, K73.2, K73.3, K73.4, K73.5, K73.6, K73.7, K73.8, K73.9, K73.10, K73.11, K73.12, K73.13, K73.14, K73.15, K73.16, K73.17, K73.18, K73.19, K73.20, K73.21, K73.22, K73.23, K73.24, K73.25, K73.26, K73.27, K73.28, K73.29,
K74.1, K74.2, K74.3, K74.4, K74.5, K74.6, K74.7, K74.8, K74.9, K74.10, K74.11, K74.12, K74.13, K74.14, K74.15, K74.16, K74.17, K74.18, K74.19, K74.20, K74.21, K74.22, K74.23, K74.24, K74.25, K74.26, K74.27, K74.28, K74.29,
K75.1, K75.2, K75.3, K75.4, K75.5, K75.6, K75.7, K75.8, K75.9, K75.10, K75.11, K75.12, K75.13, K75.14, K75.15, K75.16, K75.17, K75.18, K75.19, K75.20, K75.21, K75.22, K75.23, K75.24, K75.25, K75.26, K75.27, K75.28, K75.29,
K76.1, K76.2, K76.3, K76.4, K76.5, K76.6, K76.7, K76.8, K76.9, K76.10, K76.11, K76.12, K76.13, K76.14, K76.15, K76.16, K76.17, K76.18, K76.19, K76.20, K76.21, K76.22, K76.23, K76.24, K76.25, K76.26, K76.27, K76.28, K76.29,
K77.1, K77.2, K77.3, K77.4, K77.5, K77.6, K77.7, K77.8, K77.9, K77.10, K77.11,

(fortgesetzt)

K77.12, K77.13, K77.14, K77.15, K77.16, K77.17, K77.18, K77.19, K77.20, K77.21, K77.22, K77.23, K77.24, K77.25, K77.26, K77.27, K77.28, K77.29,
K78.1, K78.2, K78.3, K78.4, K78.5, K78.6, K78.7, K78.8, K78.9, K78.10, K78.11, K78.12, K78.13, K78.14, K78.15, K78.16, K78.17, K78.18, K78.19, K78.20, K78.21, K78.22, K78.23, K78.24, K78.25, K78.26, K78.27, K78.28, K78.29,
K79.1, K79.2, K79.3, K79.4, K79.5, K79.6, K79.7, K79.8, K79.9, K79.10, K79.11, K79.12, K79.13, K79.14, K79.15, K79.16, K79.17, K79.18, K79.19, K79.20, K79.21, K79.22, K79.23, K79.24, K79.25, K79.26, K79.27, K79.28, K79.29,
K80.1, K80.2, K80.3, K80.4, K80.5, K80.6, K80.7, K80.8, K80.9, K80.10, K80.11, K80.12, K80.13, K80.14, K80.15, K80.16, K80.17, K80.18, K80.19, K80.20, K80.21, K80.22, K80.23, K80.24, K80.25, K80.26, K80.27, K80.28, K80.29,
K81.1, K81.2, K81.3, K81.4, K81.5, K81.6, K81.7, K81.8, K81.9, K81.10, K81.11, K81.12, K81.13, K81.14, K81.15, K81.16, K81.17, K81.18, K81.19, K81.20, K81.21, K81.22, K81.23, K81.24, K81.25, K81.26, K81.27, K81.28, K81.29,
K82.1, K82.2, K82.3, K82.4, K82.5, K82.6, K82.7, K82.8, K82.9, K82.10, K82.11, K82.12, K82.13, K82.14, K82.15, K82.16, K82.17, K82.18, K82.19, K82.20, K82.21, K82.22, K82.23, K82.24, K82.25, K82.26, K82.27, K82.28, K82.29,
K83.1, K83.2, K83.3, K83.4, K83.5, K83.6, K83.7, K83.8, K83.9, K83.10, K83.11, K83.12, K83.13, K83.14, K83.15, K83.16, K83.17, K83.18, K83.19, K83.20, K83.21, K83.22, K83.23, K83.24, K83.25, K83.26, K83.27, K83.28, K83.29,
K84.1, K84.2, K84.3, K84.4, K84.5, K84.6, K84.7, K84.8, K84.9, K84.10, K84.11, K84.12, K84.13, K84.14, K84.15, K84.16, K84.17, K84.18, K84.19, K84.20, K84.21, K84.22, K84.23, K84.24, K84.25, K84.26, K84.27, K84.28, K84.29,
K85.1, K85.2, K85.3, K85.4, K85.5, K85.6, K85.7, K85.8, K85.9, K85.10, K85.11, K85.12, K85.13, K85.14, K85.15, K85.16, K85.17, K85.18, K85.19, K85.20, K85.21, K85.22, K85.23, K85.24, K85.25, K85.26, K85.27, K85.28, K85.29,
K86.1, K86.2, K86.3, K86.4, K86.5, K86.6, K86.7, K86.8, K86.9, K86.10, K86.11, K86.12, K86.13, K86.14, K86.15, K86.16, K86.17, K86.18, K86.19, K86.20, K86.21, K86.22, K86.23, K86.24, K86.25, K86.26, K86.27, K86.28, K86.29,
K87.1, K87.2, K87.3, K87.4, K87.5, K87.6, K87.7, K87.8, K87.9, K87.10, K87.11, K87.12, K87.13, K87.14, K87.15, K87.16, K87.17, K87.18, K87.19, K87.20, K87.21, K87.22, K87.23, K87.24, K87.25, K87.26, K87.27, K87.28, K87.29,
K88.1, K88.2, K88.3, K88.4, K88.5, K88.6, K88.7, K88.8, K88.9, K88.10, K88.11, K88.12, K88.13, K88.14, K88.15, K88.16, K88.17, K88.18, K88.19, K88.20, K88.21, K88.22, K88.23, K88.24, K88.25, K88.26, K88.27, K88.28, K88.29,
K89.1, K89.2, K89.3, K89.4, K89.5, K89.6, K89.7, K89.8, K89.9, K89.10, K89.11, K89.12, K89.13, K89.14, K89.15, K89.16, K89.17, K89.18, K89.19, K89.20, K89.21, K89.22, K89.23, K89.24, K89.25, K89.26, K89.27, K89.28, K89.29,
K90.1, K90.2, K90.3, K90.4, K90.5, K90.6, K90.7, K90.8, K90.9, K90.10, K90.11, K90.12, K90.13, K90.14, K90.15, K90.16, K90.17, K90.18, K90.19, K90.20, K90.21, K90.22, K90.23, K90.24, K90.25, K90.26, K90.27, K90.28, K90.29,
K91.1, K91.2, K91.3, K91.4, K91.5, K91.6, K91.7, K91.8, K91.9, K91.10, K91.11, K91.12, K91.13, K91.14, K91.15, K91.16, K91.17, K91.18, K91.19, K91.20, K91.21, K91.22, K91.23, K91.24, K91.25, K91.26, K91.27, K91.28, K91.29,
K92.1, K92.2, K92.3, K92.4, K92.5, K92.6, K92.7, K92.8, K92.9, K92.10, K92.11, K92.12, K92.13, K92.14, K92.15, K92.16, K92.17, K92.18, K92.19, K92.20, K92.21, K92.22, K92.23, K92.24, K92.25, K92.26, K92.27, K92.28, K92.29,
K93.1, K93.2, K93.3, K93.4, K93.5, K93.6, K93.7, K93.8, K93.9, K93.10, K93.11, K93.12, K93.13, K93.14, K93.15, K93.16, K93.17, K93.18, K93.19, K93.20, K93.21, K93.22, K93.23, K93.24, K93.25, K93.26, K93.27, K93.28, K93.29,
K94.1, K94.2, K94.3, K94.4, K94.5, K94.6, K94.7, K94.8, K94.9, K94.10, K94.11,

(fortgesetzt)

K94.12, K94.13, K94.14, K94.15, K94.16, K94.17, K94.18, K94.19, K94.20, K94.21, K94.22, K94.23, K94.24, K94.25, K94.26, K94.27, K94.28, K94.29,
K95.1, K95.2, K95.3, K95.4, K95.5, K95.6, K95.7, K95.8, K95.9, K95.10, K95.11, K95.12, K95.13, K95.14, K95.15, K95.16, K95.17, K95.18, K95.19, K95.20, K95.21, K95.22, K95.23, K95.24, K95.25, K95.26, K95.27, K95.28, K95.29,
K96.1, K96.2, K96.3, K96.4, K96.5, K96.6, K96.7, K96.8, K96.9, K96.10, K96.11, K96.12, K96.13, K96.14, K96.15, K96.16, K96.17, K96.18, K96.19, K96.20, K96.21, K96.22, K96.23, K96.24, K96.25, K96.26, K96.27, K96.28, K96.29,
K97.1, K97.2, K97.3, K97.4, K97.5, K97.6, K97.7, K97.8, K97.9, K97.10, K97.11, K97.12, K97.13, K97.14, K97.15, K97.16, K97.17, K97.18, K97.19, K97.20, K97.21, K97.22, K97.23, K97.24, K97.25, K97.26, K97.27, K97.28, K97.29,
K98.1, K98.2, K98.3, K98.4, K98.5, K98.6, K98.7, K98.8, K98.9, K98.10, K98.11, K98.12, K98.13, K98.14, K98.15, K98.16, K98.17, K98.18, K98.19, K98.20, K98.21, K98.22, K98.23, K98.24, K98.25, K98.26, K98.27, K98.28, K98.29,
K99.1, K99.2, K99.3, K99.4, K99.5, K99.6, K99.7, K99.8, K99.9, K99.10, K99.11, K99.12, K99.13, K99.14, K99.15, K99.16, K99.17, K99.18, K99.19, K99.20, K99.21, K99.22, K99.23, K99.24, K99.25, K99.26, K99.27, K99.28, K99.29,
K100.1, K100.2, K100.3, K100.4, K100.5, K100.6, K100.7, K100.8, K100.9, K100.10, K100.11, K100.12, K100.13, K100.14, K100.15, K100.16, K100.17, K100.18, K100.19, K100.20, K100.21, K100.22, K100.23, K100.24, K100.25, K100.26, K100.27, K100.28, K100.29,
K101.1, K101.2, K101.3, K101.4, K101.5, K101.6, K101.7, K101.8, K101.9, K101.10, K101.11, K101.12, K101.13, K101.14, K101.15, K101.16, K101.17, K101.18, K101.19, K101.20, K101.21, K101.22, K101.23, K101.24, K101.25, K101.26, K101.27, K101.28, K101.29,
K102.1, K102.2, K102.3, K102.4, K102.5, K102.6, K102.7, K102.8, K102.9, K102.10, K102.11, K102.12, K102.13, K102.14, K102.15, K102.16, K102.17, K102.18, K102.19, K102.20, K102.21, K102.22, K102.23, K102.24, K102.25, K102.26, K102.27, K102.28, K102.29,
K103.1, K103.2, K103.3, K103.4, K103.5, K103.6, K103.7, K103.8, K103.9, K103.10, K103.11, K103.12, K103.13, K103.14, K103.15, K103.16, K103.17, K103.18, K103.19, K103.20, K103.21, K103.22, K103.23, K103.24, K103.25, K103.26, K103.27, K103.28, K103.29,
K104.1, K104.2, K104.3, K104.4, K104.5, K104.6, K104.7, K104.8, K104.9, K104.10, K104.11, K104.12, K104.13, K104.14, K104.15, K104.16, K104.17, K104.18, K104.19, K104.20, K104.21, K104.22, K104.23, K104.24, K104.25, K104.26, K104.27, K104.28, K104.29,
K105.1, K105.2, K105.3, K105.4, K105.5, K105.6, K105.7, K105.8, K105.9, K105.10, K105.11, K105.12, K105.13, K105.14, K105.15, K105.16, K105.17, K105.18, K105.19, K105.20, K105.21, K105.22, K105.23, K105.24, K105.25, K105.26, K105.27, K105.28, K105.29,
K106.1, K106.2, K106.3, K106.4, K106.5, K106.6, K106.7, K106.8, K106.9, K106.10, K106.11, K106.12, K106.13, K106.14, K106.15, K106.16, K106.17, K106.18, K106.19, K106.20, K106.21, K106.22, K106.23, K106.24, K106.25, K106.26, K106.27, K106.28, K106.29,
K107.1, K107.2, K107.3, K107.4, K107.5, K107.6, K107.7, K107.8, K107.9, K107.10, K107.11, K107.12, K107.13, K107.14, K107.15, K107.16, K107.17, K107.18, K107.19, K107.20, K107.21, K107.22, K107.23, K107.24, K107.25, K107.26, K107.27, K107.28, K107.29,
K108.1, K108.2, K108.3, K108.4, K108.5, K108.6, K108.7, K108.8, K108.9, K108.10, K108.11, K108.12, K108.13, K108.14, K108.15, K108.16, K108.17,

(fortgesetzt)

K108.18, K108.19, K108.20, K108.21, K108.22, K108.23, K108.24, K108.25, K108.26, K108.27, K108.28, K108.29,
K109.1, K109.2, K109.3, K109.4, K109.5, K109.6, K109.7, K109.8, K109.9, K109.10, K109.11, K109.12, K109.13, K109.14, K109.15, K109.16, K109.17, K109.18, K109.19, K109.20, K109.21, K109.22, K109.23, K109.24, K109.25, K109.26, K109.27, K109.28, K109.29,
K110.1, K110.2, K110.3, K110.4, K110.5, K110.6, K110.7, K110.8, K110.9, K110.10, K110.11, K110.12, K110.13, K110.14, K110.15, K110.16, K110.17, K110.18, K110.19, K110.20, K110.21, K110.22, K110.23, K110.24, K110.25, K110.26, K110.27, K110.28, K110.29,
K111.1, K111.2, K111.3, K111.4, K111.5, K111.6, K111.7, K111.8, K111.9, K111.10, K111.11, K111.12, K111.13, K111.14, K111.15, K111.16, K111.17, K111.18, K111.19, K111.20, K111.21, K111.22, K111.23, K111.24, K111.25, K111.26, K111.27, K111.28, K111.29,
K112.1, K112.2, K112.3, K112.4, K112.5, K112.6, K112.7, K112.8, K112.9, K112.10, K112.11, K112.12, K112.13, K112.14, K112.15, K112.16, K112.17, K112.18, K112.19, K112.20, K112.21, K112.22, K112.23, K112.24, K112.25, K112.26, K112.27, K112.28, K112.29,
K113.1, K113.2, K113.3, K113.4, K113.5, K113.6, K113.7, K113.8, K113.9, K113.10, K113.11, K113.12, K113.13, K113.14, K113.15, K113.16, K113.17, K113.18, K113.19, K113.20, K113.21, K113.22, K113.23, K113.24, K113.25, K113.26, K113.27, K113.28, K113.29,
K114.1, K114.2, K114.3, K114.4, K114.5, K114.6, K114.7, K114.8, K114.9, K114.10, K114.11, K114.12, K114.13, K114.14, K114.15, K114.16, K114.17, K114.18, K114.19, K114.20, K114.21, K114.22, K114.23, K114.24, K114.25, K114.26, K114.27, K114.28, K114.29,
K115.1, K115.2, K115.3, K115.4, K115.5, K115.6, K115.7, K115.8, K115.9, K115.10, K115.11, K115.12, K115.13, K115.14, K115.15, K115.16, K115.17, K115.18, K115.19, K115.20, K115.21, K115.22, K115.23, K115.24, K115.25, K115.26, K115.27, K115.28, K115.29,
K116.1, K116.2, K116.3, K116.4, K116.5, K116.6, K116.7, K116.8, K116.9, K116.10, K116.11, K116.12, K116.13, K116.14, K116.15, K116.16, K116.17, K116.18, K116.19, K116.20, K116.21, K116.22, K116.23, K116.24, K116.25, K116.26, K116.27, K116.28, K116.29,
K117.1, K117.2, K117.3, K117.4, K117.5, K117.6, K117.7, K117.8, K117.9, K117.10, K117.11, K117.12, K117.13, K117.14, K117.15, K117.16, K117.17, K117.18, K117.19, K117.20, K117.21, K117.22, K117.23, K117.24, K117.25, K117.26, K117.27, K117.28, K117.29,
K118.1, K118.2, K118.3, K118.4, K118.5, K118.6, K118.7, K118.8, K118.9, K118.10, K118.11, K118.12, K118.13, K118.14, K118.15, K118.16, K118.17, K118.18, K118.19, K118.20, K118.21, K118.22, K118.23, K118.24, K118.25, K118.26, K118.27, K118.28, K118.29,
K119.1, K119.2, K119.3, K119.4, K119.5, K119.6, K119.7, K119.8, K119.9, K119.10, K119.11, K119.12, K119.13, K119.14, K119.15, K119.16, K119.17, K119.18, K119.19, K119.20, K119.21, K119.22, K119.23, K119.24, K119.25, K119.26, K119.27, K119.28, K119.29,
K120.1, K120.2, K120.3, K120.4, K120.5, K120.6, K120.7, K120.8, K120.9, K120.10, K120.11, K120.12, K120.13, K120.14, K120.15, K120.16, K120.17, K120.18, K120.19, K120.20, K120.21, K120.22, K120.23, K120.24, K120.25, K120.26, K120.27, K120.28, K120.29,
K121.1, K121.2, K121.3, K121.4, K121.5, K121.6, K121.7, K121.8, K121.9,

(fortgesetzt)

K121.10, K121.11, K121.12, K121.13, K121.14, K121.15, K121.16, K121.17, K121.18, K121.19, K121.20, K121.21, K121.22, K121.23, K121.24, K121.25, K121.26, K121.27, K121.28, K121.29,
K122.1, K122.2, K122.3, K122.4, K122.5, K122.6, K122.7, K122.8, K122.9, K122.10, K122.11, K122.12, K122.13, K122.14, K122.15, K122.16, K122.17, K122.18, K122.19, K122.20, K122.21, K122.22, K122.23, K122.24, K122.25, K122.26, K122.27, K122.28, K122.29,
K123.1, K123.2, K123.3, K123.4, K123.5, K123.6, K123.7, K123.8, K123.9, K123.10, K123.11, K123.12, K123.13, K123.14, K123.15, K123.16, K123.17, K123.18, K123.19, K123.20, K123.21, K123.22, K123.23, K123.24, K123.25, K123.26, K123.27, K123.28, K123.29,
K124.1, K124.2, K124.3, K124.4, K124.5, K124.6, K124.7, K124.8, K124.9, K124.10, K124.11, K124.12, K124.13, K124.14, K124.15, K124.16, K124.17, K124.18, K124.19, K124.20, K124.21, K124.22, K124.23, K124.24, K124.25, K124.26, K124.27, K124.28, K124.29,
K125.1, K125.2, K125.3, K125.4, K125.5, K125.6, K125.7, K125.8, K125.9, K125.10, K125.11, K125.12, K125.13, K125.14, K125.15, K125.16, K125.17, K125.18, K125.19, K125.20, K125.21, K125.22, K125.23, K125.24, K125.25, K125.26, K125.27, K125.28, K125.29,
K126.1, K126.2, K126.3, K126.4, K126.5, K126.6, K126.7, K126.8, K126.9, K126.10, K126.11, K126.12, K126.13, K126.14, K126.15, K126.16, K126.17, K126.18, K126.19, K126.20, K126.21, K126.22, K126.23, K126.24, K126.25, K126.26, K126.27, K126.28, K126.29,
K127.1, K127.2, K127.3, K127.4, K127.5, K127.6, K127.7, K127.8, K127.9, K127.10, K127.11, K127.12, K127.13, K127.14, K127.15, K127.16, K127.17, K127.18, K127.19, K127.20, K127.21, K127.22, K127.23, K127.24, K127.25, K127.26, K127.27, K127.28, K127.29.

Abkürzungen zu Tabelle 3:

1. Siehe Erläuterung vor Tabelle 2 zu den Kürzeln "Ka.b" und den Kennziffern "a" und "b"
2. Beispiel: Eine Kombination der Herbizide (A5) und (B2.3.1) wird in der Kurzschreibweise der Tabelle 3 somit als K5.20 angegeben.

Bei den binären Kombinationen sind solche bevorzugt, welche bevorzugte Verbindungen (A) bzw. (B) enthalten.

Bevorzugt sind auch Herbizid-Kombinationen aus einer oder mehreren Verbindungen (A) mit einer oder mehreren Verbindungen der Gruppe (B1) oder (B2) oder (B3), d. h. Gemische aus den binären Kombinationen gemäß Tabelle 3, insbesondere Gemische bevorzugter binärer Kombinationen.

Weiter bevorzugt sind Kombinationen von einer oder mehreren Verbindungen (A) mit einer oder mehreren Verbindungen (B) nach dem Schema:

(A)+(B1)+(B2), (A)+(B1)+(B3), (A)+(B2)+(B3) oder (A)+(B1)+(B2)+(B3).

Weiterhin können die erfindungsgemäßen Kombinationen zusammen mit anderen Wirkstoffen beispielsweise aus der Gruppe der Herbizide, Safener, Fungizide, Insektizide und Pflanzenwachstumsregulatoren oder aus der Gruppe der im Pflanzenschutz üblichen Zusatzstoffe und Formulierungshilfsmittel eingesetzt werden.

Zusatzstoffe sind beispielsweise Düngemittel und Farbstoffe. Von besonderer Bedeutung sind dabei solche Kombinationen, denen noch ein oder mehrere weitere Wirkstoffe anderer Struktur oder Safenerwirkstoffe [Wirkstoffe (C)] zugesetzt werden, wie beispielsweise nach dem Schema

(A)+(B1)+(C), (A)+(B2)+(C), (A)+(B3)+(C), (A)+(B1)+(B2)+(C), (A)+(B1)+(B3)+(C),
(A)+(B2)+(B3)+(C) oder (A)+(B1)+(B2)+(B3)+(C).

Für Kombinationen der letztgenannten Art mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind und bezüglich der betreffenden Zweierkombination.

In einigen Fällen sind schon Kombinationen unterschiedlicher Wirkstoffe innerhalb der Gruppe (A) synergistisch, so dass auf Basis dieser Zweierkombinationen besonders günstige Dreierkombinationen mit zusätzlich synergistischen Effekten möglich sind.

Bevorzugt sind Kombinationen der Wirkstoffe (A) und (B), welche für die nichtselektive Anwendung oder die Anwendung in Plantagenkulturen geeignet sind.

Besonders bevorzugt sind Kombinationen der Wirkstoffe (A) mit Wirkstoffen (B) aus der Gruppe:

(B1.1.2) Thiencarbazone-methyl, (B1.2.1) Tembotrione, (B1.3) SYN-523, (B1.4.1) Pyroxsulam, (B1.5.1) Penoxsulam, (B1.6.1) SYN-449, (B2.1.1) Pyrasulfotole,
(B2.2.2) Trifloxysulfuron-natriumsalz (B2.3.1) Saflufenacil, (B2.4.1) Aminopyralid, (B2.5) Ethofumesate, (B2.6) Aminocyclopyrachlor und dessen Salze und Ester, insbesondere dabei (B2.6.1) Aminocyclopyrachlor, und (B3.1) Pyroxasulfone.

Besonders bevorzugt sind dabei die Kombinationen der Wirkstoffe (A) mit Wirkstoffen (B) aus der Gruppe:

(B1.1.2) Thiencarbazone-methyl, (B1.2.1) Tembotrione, (B2.1.1) Pyrasulfotole und (B2.5) Ethofumesate.

Ebenfalls bevorzugt sind Mehrfachkombinationen gemäß dem Schema:

(A) + (B1.1.2) + (B1.2.1), (A) + (B1.1.2) + (B1.3), (A) + (B1.1.2) + (B1.4.1),
(A) + (B1.1.2) + (B1.5.1), (A) + (B1.1.2) + (B1.6.1), (A) + (B1.1.2) + (B2.1.1),
(A) + (B1.1.2) + (B2.2.2), (A) + (B1.1.2) + (B2.3.1), (A) + (B1.1.2) + (B2.4.1),
(A) + (B1.1.2) + (B2.5), (A) + (B1.1.2) + (B2.6.1), (A) + (B1.1.2) + (B2.6.2),
(A) + (B1.1.2) + (B2.6.4), (A) + (B1.1.2) + (B3.1),
(A) + (B1.2.1) + (B1.3), (A) + (B1.2.1) + (B1.4.1), (A) + (B1.2.1) + (B1.5.1),
(A) + (B1.2.1) + (B1.6.1), (A) + (B1.2.1) + (B2.1.1), (A) + (B1.2.1) + (B2.2.2),
(A) + (B1.2.1) + (B2.3.1), (A) + (B1.2.1) + (B2.4.1), (A) + (B1.2.1) + (B2.5),
(A) + (B1.2.1) + (B2.6.1), (A) + (B1.2.1) + (B2.6.2), (A) + (B1.2.1) + (B2.6.4),
(A) + (B1.2.1) + (B3.1),
(A) + (B1.3) + (B1.4.1), (A) + (B1.3) + (B1.5.1), (A) + (B1.3) + (B1.6.1),
(A) + (B1.3) + (B2.1.1), (A) + (B1.3) + (B2.2.2), (A) + (B1.3) + (B2.3.1),
(A) + (B1.3) + (B2.4.1), (A) + (B1.3) + (B2.5), (A) + (B1.3) + (B2.6.1),
(A) + (B1.3) + (B2.6.2), (A) + (B1.3) + (B2.6.4), (A) + (B1.3) + (B3.1),
(A) + (B1.4.1) + (B1.5.1), (A) + (B1.4.1) + (B1.6.1), (A) + (B1.4.1) + (B2.1.1),
(A) + (B1.4.1) + (B2.2.2), (A) + (B1.4.1) + (B2.3.1), (A) + (B1.4.1) + (B2.4.1),
(A) + (B1.4.1) + (B2.5), (A) + (B1.4.1) + (B2.6.1), (A) + (B1.4.1) + (B2.6.2),
(A) + (B1.4.1) + (B2.6.4), (A) + (B1.4.1) + (B3.1),
(A) + (B1.5.1) + (B1.6.1), (A) + (B1.5.1) + (B2.1.1), (A) + (B1.5.1) + (B2.2.2),
(A) + (B1.5.1) + (B2.3.1), (A) + (B1.5.1) + (B2.4.1), (A) + (B1.5.1) + (B2.5),
(A) + (B1.5.1) + (B2.6.1), (A) + (B1.5.1) + (B2.6.2), (A) + (B1.5.1) + (B2.6.4),
(A) + (B1.5.1) + (B3.1),
(A) + (B1.6.1) + (B2.1.1), (A) + (B1.6.1) + (B2.2.2), (A) + (B1.6.1) + (B2.3.1),
(A) + (B1.6.1) + (B2.4.1), (A) + (B1.6.1) + (B2.5), (A) + (B1.6.1) + (B2.6.1),
(A) + (B1.6.1) + (B2.6.2), (A) + (B1.6.1) + (B2.6.4), (A) + (B1.6.1) + (B3.1),
(A) + (B2.1.1) + (B2.2.2), (A) + (B2.1.1) + (B2.3.1), (A) + (B2.1.1) + (B2.4.1),
(A) + (B2.1.1) + (B2.5), (A) + (B2.1.1) + (B2.6.1), (A) + (B2.1.1) + (B2.6.2),
(A) + (B2.1.1) + (B2.6.4), (A) + (B2.1.1) + (B3.1),
(A) + (B2.2.2) + (B2.3.1), (A) + (B2.2.2) + (B2.4.1), (A) + (B2.2.2) + (B2.5),
(A) + (B2.2.2) + (B2.6.1), (A) + (B2.2.2) + (B2.6.2), (A) + (B2.2.2) + (B2.6.4),
(A) + (B2.2.2) + (B3.1),
(A) + (B2.3.1) + (B2.4.1), (A) + (B2.3.1) + (B2.5), (A) + (B2.3.1) + (B2.6.1),
(A) + (B2.3.1) + (B2.6.2), (A) + (B2.3.1) + (B2.6.4), (A) + (B2.3.1) + (B3.1),
(A) + (B2.4.1) + (B2.5), (A) + (B2.4.1) + (B2.6.1), (A) + (B2.4.1) + (B2.6.2),
(A) + (B2.4.1) + (B2.6.4), (A) + (B2.4.1) + (B3.1),
(A) + (B2.5) + (B2.6.1), (A) + (B2.5) + (B2.6.2), (A) + (B2.5) + (B2.6.4),
(A) + (B2.5) + (B3.1).
(A) + (B2.6.1) + (B2.6.2), (A) + (B2.6.1) + (B2.6.4), (A) + (B2.6.1) + (B3.1),
(A) + (B2.6.2) + (B2.6.4), (A) + (B2.6.2) + (B3.1) und
(A) + (B2.6.4) + (B3.1).

Dabei sind insbesondere die Kombinationen bevorzugt, in denen (A) eine der Verbindungen gemäß Tabelle

1 bedeutet.

Die erfindungsgemäßen Herbizidkombinationen können auch mit weiteren Herbiziden und Pflanzenwachstumsregulatoren kombiniert werden, um beispielsweise das Wirkungsspektrum zu ergänzen. Als Kombinationspartner für die erfindungsgemäßen Verbindungen in Mischungsformulierungen oder im Tank-Mix sind beispielsweise bekannte Wirkstoffe, die auf einer Inhibition von beispielsweise Acetolactat-Synthase, Acetyl-CoA-Carboxylase, Cellulose-Synthase, Enolpyruvylshikimat-3-phosphat-Synthase, Glutamin-Synthetase, p-Hydroxyphenylpyruvat-Dioxygenase, Phytoendesaturase, Photosystem I, Photosystem II, Protoporphyrinogen-Oxidase beruhen, einsetzbar, wie sie z.B. aus Weed Research 26 (1986) 441-445 oder "The Pesticide Manual", 14th edition, The British Crop Protection Council and the Royal Soc. of Chemistry, 2006, das korrespondierende "e-Pesticide Manual Version 4 (2006)" und dort zitierter Literatur bekannt sind. Weitere Handelsnamen und "common names" sind im "Compendium of Pesticide Common Names" verzeichnet (abfragbar im Internet unter http://www.alanwood.net/pesticides).

Als bekannte Herbizide, die mit den erfindungsgemäßen Verbindungen kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet) und umfassen stets sämtliche Anwendungsformen wie Säuren, Salze, Ester und Isomere wie Stereoisomere und optische Isomere. Dabei sind eine und zum Teil auch mehrere Anwendungsformen genannt:

2,4-D, Acetochlor, Acifluorfen, Acifluorfen-sodium, Aclonifen, Alachlor, Alloxydim, Alloxydim-sodium, Ametryn, Amicarbazone, Amidosulfuron, Amitrole, Anilofos, Asulam, Atrazine, Azafenidin, Azimsulfuron, Beflubutamid, Benazolin, Benazolinethyl, Benfuresate, Bensulfuron-methyl, Bentazone, Benzfendizone, Benzobicyclon, Benzofenap, Bifenox, Bilanafos, Bispyribac-natrium, Bromacil, Bromobutide, Bromofenoxim, Bromoxynil, Butachlor, Butafenacil, Butenachlor, Butralin, Butroxydim, Butylate, Cafenstrole, Carbetamide, Carfentrazone-ethyl, Chlomethoxyfen, Chloridazon, Chlorimuron-ethyl, Chlornitrofen, Chlorotoluron, Chlorsulfuron, Cinidon-ethyl, Cinmethylin, Cinosulfuron, Clefoxydim, Clethodim, Clodinafop-propargyl, Clomazone, Clomeprop, Clopyralid, Cloransulam-methyl, Cumyluron, Cyanazine, Cyclosulfamuron, Cycloxydim, Cyhalofop-butyl, Desmedipham, Dicamba, Dichlobenil, Dichlorprop, Dichlorprop-P, Diclofop-methyl, Diclosulam, Difenzoquat, Diflufenican, Diflufenzopyr, Dikegulac-sodium, Dimefuron, Dimepiperate, Dimethachlor, Dimethametryn, Dimethenamid, Triaziflam, Diquatdibromide, Dithiopyr, Diuron, Dymron, EPTC, Esprocarb, Ethalfluralin, Ethametsulfuron-methyl, Ethoxyfen, Ethoxysulfuron, Etobenzanid, Fenoxaprop-ethyl, Fenoxaprop-P-ethyl, Fentrazamide, Flamprop-M-isopropyl, Flamprop-M-methyl, Flazasulfuron, Florasulam, Fluazifop, Fluazifop-butyl, Fluazifop--butyl, Fluazolate, Flucarbazone-sodium, Flucetosulfuron, Fluchloralin, Flufenacet, Flufenpyr, Flumetsulam, Flumiclorac-pentyl, Flumioxazin, Fluometuron, Fluorochloridone, Fluoroglycofen-ethyl, Flupoxam, Flupyrsulfuron-methyl-sodium, Fluridone, Fluroxypyr, Fluroxypyr-butoxypropyl, Fluroxypyr-meptyl, Flurprimidol, Flurtamone, Fluthiacet-methyl, Fomesafen, Foramsulfuron, Glufosinate, Glufosinate-ammonium, Glyphosate, Halosulfuron-methyl, Haloxyfop, Haloxyfop-ethoxyethyl, Haloxyfopmethyl, Haloxyfop-P-methyl, Hexazinone, Imazamethabenz-methyl, Imazamox, Imazapic, Imazapyr, Imazaquin, Imazethapyr, Imazosulfuron, Indanofan, lodosulfuron-methyl-natrium, loxynil, Isoproturon, Isouron, Isoxaben, Isoxachlortole, Isoxaflutole, Ketospiradox, Lactofen, Lenacil, Linuron, MCPA, Mecoprop, Mecoprop-P, Mefenacet, Mesosulfuron-methyl, Mesotrione, Metamifop, Metamitron, Metazachlor, Methabenzthiazuron, Methyldymron, Metobromuron, Metolachlor, Metosulam, Metoxuron, Metribuzin, Metsulfuron-methyl, Molinate, Monolinuron, Naproanilide, Napropamide, Neburon, Nicosulfuron, Norflurazon, Orbencarb, Oryzalin, Oxadiargyl, Oxadiazon, Oxasulfuron, Oxaziclomefone, Oxyfluorfen, Paraquat, Pelargonic acid, Pendimethalin, Pendralin, Pentoxazone, Pethoxamid, Phenmedipham, Picloram, Picolinafen, Pinoxaden, Piperophos, Pretilachlor, Primisulfuron-methyl, Profluazol, Profoxydim, Prometryn, Propachlor, Propanil, Propaquizafop, Propisochlor, Propoxycarbazone-sodium, Propyzamide, Prosulfocarb, Prosulfuron, Pyraclonil, Pyraflufen-ethyl, Pyrazolate, Pyrazosulfuronethyl, Pyrazoxyfen, Pyribenzoxim, Pyributicarb, Pyridafol, Pyridate, Pyriftalld, Pyriminobac-methyl, Pyrithiobac-sodium, Quinclorac, Quinmerac, Quinoclamine, Quizalofop-ethyl, Quizalofop-P-ethyl, Quizalofop-P-tefuryl, Rimsulfuron, Sethoxydim, Simazine, Simetryn, S-Metolachlor, Sulcotrione, Sulfentrazone, Sulfometuronmethyl, Sulfosate, Sulfosulfuron, Tebuthiuron, Tepraloxydim, Terbuthylazine, Terbutryn, Thenylchlor, Thiazopyr, Thifensulfuron-methyl, Thiobencarb, Tiocarbazil, Tralkoxydim, Triallate, Triasulfuron, Tribenuron-methyl, Triclopyr, Tridiphane, Trifloxysulfuron, Trifluralin, Triflusulfuron-methyl, Tritosulfuron, WL 110547, d. h. 5-phenoxy-1-[3-(trifluoromethyl)phenyl]-1H-tetrazole; HOK-201, HOK-202, UBH-509; D-489; LS 82-556; KPP-300; NC-324; NC-330; KH-218; DPX-N8189; SC-0774; TH-547, DOWCO-535; DK-8910; V-53482; PP-600; MBH-001; KIH-9201; ET-751; KIH-6127; KIH-2023 and K1H5996..

Wenn die jeweilige Bezeichnung (common name) mehrere Formen des Wirkstoffes umfasst, ist mit der Bezeichnung die kommerziell erhältliche Form bevorzugt definiert.

Jeder der genannten weiteren Wirkstoffe (= Wirkstoffe (C*), (C1*), (C2*) etc.) kann dann vorzugsweise mit einer der Zweierkombinationen K1.1 bis K127.29, nach dem Schema (A)+(B)+(C*) oder auch nach dem Schema (A)+(B)+(C1*)+(C2*) etc. kombiniert werden. Dabei sind auch solche Mehrfachkombinationen enthalten, in denen die Verbindungen (C*), (C1*) bzw. (C2*) aus der Gruppe der Verbindungen (B) ausgewählt sind, jedoch nicht mit der jeweils in der Zweierkombination enthaltenen Verbindung (B) identisch sind.

Die Mengenangaben sind Aufwandmengen (g AS/ha = Gramm Aktivsubstanz pro Hektar) und definieren somit auch die Mengenverhältnisse in einer Koformulierung, einem Pre-mix, einem Tank-mix oder einer sequentiellen Applikation der kombinierten Wirkstoffe.

Die Kombinationen können sowohl im Vorauflaufverfahren als auch Nachauflaufverfahren angewendet werden. Dies gilt sowohl für Vor- und Nachauflauf in Bezug auf die Schadpflanzen also auch bei der selektiven Bekämpfung der Schadpflanzen für den Vor- oder Nachauflauf der Kulturpflanzen. Es kommen dabei auch Mischformen in Frage, z. B. beim Nachauflauf der Kulturpflanzen die Bekämpfung der Schadpflanzen in deren Vor- oder Nachauflaufstadium.

Als weitere Kombinationspartner kommen auch kulturpflanzenschützende Wirkstoffe ("Safener" oder "Antidots" genannt) in Frage, welche phytotoxische Wirkungen der Herbizide an Kulturpflanzen reduzieren oder verhindern können.

Folgende Gruppen von Verbindungen sind beispielsweise als Safener für die oben erwähnten herbiziden Wirkstoffe (A) bzw. Kombinationen von Herbiziden (A) und (B) bzw. allgemein in den erfindungsgemäßen Kombinationen geeignet; die Verbindungen sind mit dem jeweiligen "Common Name" oder Codenummern mit Struktur bezeichnet (Fundstellen der Common Names: siehe das oben genannte "Pesticide Manual" oder "Compendium of Pesticide Common Names"): Benoxacor, Cloquintocet (-mexyl), Cyometrinil, Cyprosulfamide, Dichlormid, Dicyclonon, Dietholate, Disulfoton (= O,O-Diethyl S-2-ethylthioethyl phosphordithioat), Fenchlorazole (-ethyl), Fenclorim, Flurazole, Fluxofenim, Furilazole, Isoxadifen (-ethyl), Mefenpyr (-diethyl), Mephenate, Naphthalic anhydride, Oxabetrinil, "R-29148" (= 3-Dichloracetyl-2,2,5-trimethyl-1,3-oxazolidin), "R-28725" (= 3-Dichloracetyl-2,2,-dimethyl-1,3-oxazolidin), "PPG-1292" (= N-Allyl-N-[(1,3-dioxolan-2-yl)-methyl]-dichloracetamid), "DKA-24" (= N-Allyl-N-[(allylaminocarbonyl)-methyl]-dichloracetamid), "AD-67" oder "MON 4660" (= 3-Dichloracetyl-1-oxa-3-azaspiro[4,5]decan), "TI-35" (= 1-Dichloracetyl-azepan), "Dimepiperate" oder "MY-93" (= Piperidin-1-thiocarbonsäure-S-1-methyl-1-phenylethylester), "Daimuron" oder "SK 23" (= 1-(1-Methyl-1-phenylethyl)-3-p-tolyl-harnstoff), "Cumyluron" = "JC-940" (= 3-(2-Chlorphenylmethyl)-1-(1-methyl-1-phenyl-ethyl)harnstoff), "Methoxyphenon", oder "NK 049" (= 3,3'-Dimethyl-4-methoxy-benzophenon), "CSB" (= 1-Brom-4-(chlormethylsulfonyl)benzol), "CL-304415" (=4-Carboxy-3,4-dihydro-2H-1-benzopyran-4-essigsäure; CAS-Regno: 31541-57-8), "MG-191" (= 2-Dichlormethyl-2-methyl-1,3-dioxolan), "MG-838" (=2-propenyl 1-oxa-4-azaspiro[4.5]decane-4-carbodithioate; CAS-Regno: 133993-74-5), Methyl-(diphenylmethoxy)acetat (CAS-Regno: 41858-19-9 aus WO-A-1998/38856), Methyl-[(3-oxo-1 H-2-benzothiopyran-4(3H)-yliden)methoxy]acetate (CAS-Regno: 205121-04-6 aus WO-A-1998/13361), 1,2-Dihydro-4-hydroxy-1-methyl-3-(5-tetrazolyl-carbonyl)-2-chinolon (CAS-Regno: 95855-00-8 aus WO-A-1999/000020).

Von besonderem Interesse unter den genannten Safenern sind Benoxacor, Cloquintocet (-mexyl), Cyometrinil, Cyprosulfamide, Dichlormid, Fenchlorazole (-ethyl), Fenclorim, Flurazole, Fluxofenim, Furilazole, Isoxadifen(-ethyl), Mefenpyr(-diethyl), Naphthalinsäureanhydrid, Oxabetrinil, "AD-67" (= "MON 4660" = 3-Dichloracetyl-1-oxa-3-aza-spiro [4,5]decan), "TI-35" (= 1-Dichloracetyl-azepan), Dimepiperate, Daimuron, Cumyluron,

Einige der Safener sind bereits als Herbizide genannt und entfalten somit neben der Herbizidwirkung bei Schadpflanzen zugleich auch Schutzwirkung bei den Kulturpflanzen.

Jeder der genannten Safener kann als weiterer Wirkstoff (C) vorzugsweise mit einer der genannten Zweierkombinationen K1.1 bis K127.29, welche eine von der jeweiligen Verbindung (C) strukturell verschiedene Verbindung (B) enthält, nach dem Schema (A)+(B)+(C) kombiniert werden.

Die erfindungsgemäßen Herbizid-Kombinationen können weitere Komponenten enthalten, z. B. andere Wirkstoffe gegen Schadorganismen wie Schadpflanzen, pflanzenschädliche Tiere oder pflanzenschädliche Pilze, insbesondere dabei Wirkstoffe aus der Gruppe Herbizide, Fungizide, Insektizide, Akarizide, Nematizide, Mitizide und verwandte Stoffe.

Fungizid wirksame Verbindungen, die in Kombination mit den erfindungsgemäßen Herbizidkombinationen eingesetzt werden können, sind bevorzugt handelsübliche Wirkstoffe, beispielsweise (analog zu den Herbiziden werden die Verbindungen generell mit ihren Common names bezeichnet, hier in der üblichen englischen Schreibweise):

2-phenylphenol; 8-hydroxyquinoline sulfate; acibenzolar-S-methyl; actinovate; aldimorph; amidoflumet; ampropylfos; ampropylfos-potassium; andoprim; anilazine; azaconazole; azoxystrobin; benalaxyl; benodanil; benomyl; benthiavalicarbisopropyl; benzamacril; benzamacril-isobutyl; binapacryl; biphenyl; bitertanol; blasticidin-S; boscalid; bromuconazole; bupirimate; buthiobate; butylamine; calcium polysulfide; capsimycin; captafol; captan; carbendazim; carboxin; carpropamid; carvone; chinomethionat; chlobenthiazone; chlorfenazole; chloroneb; chlorothalonil; chlozolinate; cis-1-(4-chlorophenyl)-2-(1H-1,2,4-triazol-1-yl)cycloheptanol; clozylacon; cyazofamid; cyflufenamid; cymoxanil; cyproconazole; cyprodinil; cyprofuram; Dagger G; debacarb; dichlofluanid; dichlone; dichlorophen; diclocymet; diclomezine; dicloran; diethofencarb; difenoconazole; diflumetorim; dimethirimol; dimethomorph; dimoxystrobin; diniconazole; diniconazole-M; dinocap; diphenylamine; dipyrithione; ditalimfos; dithianon; dodine; drazoxolon; edifenphos; epoxiconazole; ethaboxam; ethirimol; etridiazole; famoxadone; fenamidone; fenapanil; fenarimol; fenbuconazole; fenfuram; fenhexamid; fenitropan; fenoxanil; fenpiclonil; fenpropidin; fenpropimorph; ferbam; fluazinam; flubenzimine; fludioxonil; flumetover; flumorph; fluoromide; fluoxastrobin; fluquinconazole; flurprimidol; flusilazole; flusulfamide; flutolanil; flutriafol; folpet; fosetyl-Al; fosetyl-sodium; fuberidazole; furalaxyl; furametpyr; furcarbanil; furmecyclox; guazatine; hexachlorobenzene; hexaconazole; hymexazol; imazalil; imibenconazole; iminoctadine triacetate; iminoctadine tris(albesilate); iodocarb; ipconazole; iprobenfos; iprodione; iprovalicarb; irumamycin; isoprothiolane; isovaledione; kasugamycin; kresoxim-methyl; mancozeb; maneb; meferimzone; mepanipyrim; mepronil; metalaxyl; metalaxyl-M; metconazole; methasulfocarb; methfuroxam; methyl 1-(2,3-dihydro-2,2-dimethyl-1H-inden-1-yl)-1H-imidazole-5-carboxylate;methyl2-[[[cyclopropyl[(4-methoxyphenyl)imino]methyl]thio]methyl]-.alpha.-(methoxymethylene)benzeneacetate; methyl 2-[2-[3-(4-chlorophenyl)-1-methylallylideneaminooxymethyl] phenyl]-3-methoxyacrylate; metiram; metominostrobin; metrafenone; metsulfovax; mildiomycin; monopotassium carbonate; myclobutanil; myclozolin; nabam, N-(3-ethyl-3,5,5-trimethylcyclohexyl)-3-formylamino-2-hydroxybenzamide; N-(6-methoxy-3-pyridinyl)cyclopropanecarboxamide; N-butyl-8-(1,1-dimethylethyl)-1-oxaspiro[4.5]decan-3-amine; natamycin; nitrothal-isopropyl; noviflumuron; nuarimol; ofurace; orysastrobin; oxadixyl; oxolinic acid; oxpoconazole; oxycarboxin; oxyfenthiin; paclobutrazol; pefurazoate; penconazole; pencycuron; penthiopyrad; phosdiphen; phthalide; picobenzamid; picoxystrobin; piperalin; polyoxins; polyoxorim; probenazole; prochloraz; procymidone; propamocarb; propanosine-sodium; propiconazole; propineb; proquinazid; prothioconazole; pyraclostrobin; pyrazophos; pyrifenox; pyrimethanil; pyroquilon; pyroxyfur; pyrrolnitrine; quinconazole; quinoxyfen; quintozene; silthiofam; simeconazole; sodium tetrathiocarbonate; spiroxamine; sulfur; tebuconazole; tecloftalam; tecnazene; tetcyclacis; tetraconazole; thiabendazole; thicyofen; thifluzamide; thiophanate-methyl; thiram; tiadinil; tioxymid; tolclofos-methyl; tolylfluanid; triadimefon; triadimenol; triazbutil; triazoxide; tricyclamide; tricyclazole; tridemorph; trifloxystrobin; triflumizole; triforine; triticonazole; uniconazole; validamycin A; vinclozolin; zineb; ziram; zoxamide; (2S)-N-[2-[4-[[3-(4-chlorophenyl)-2-propynyl]oxy]-3-methoxyphenyl]ethyl]-3-methyl- 2-[(methylsulfonyl)amino]-butanamide; 1-(1-naphthalenyl)-1H-pyrrole-2,5-dione; 2,3,5,6-tetrachloro-4-(methylsulfonyl)pyridine; 2,4-dihydro-5-methoxy-2-methyl-4-[[[[1-[3-(trifluoromethyl)phenyl]ethylidene]amino]oxy]methyl]phenyl]-3H-1,2,3-triazol-3-one; 2-amino-4-methyl-N-phenyl-5-thiazolecarboxamide; 2-chloro-N-(2,3-dihydro-1,1,3-trimethyl-1 H-inden-4-yl)-3-pyridinecarboxamide; 3,4,5-trichloro-2,6-pyridinedicarbonitrile; 3-[(3-bromo-6-fluoro-2-methyl-1H-indol-1-yl)sulfonyl]-N, N-dimethyl-1H-1,2,4-triazole-1-sulfonamide; copper salts and copper preparations, such as Bordeaux mixture; copper hydroxide; copper naphthenate; copper oxychloride; copper sulfate; cufraneb; copper(I) oxide; mancopper; oxine-copper.

Bevorzugte Fungizide sind ausgewählt aus der Gruppe bestehend aus Benalaxyl, Bitertanol, Bromuconazol, Captafol, Carbendazim, Carpropamid, Cyazofamid, Cyproconazol, Diethofencarb, Edifenphos, Fenpropimorph, Fentine, Fluquinconazol, Fosetyl, Fluoroimide, Folpet, Iminoctadine, Iprodionem, Iprovalicarb, Kasugamycin, Maneb, Nabam, Pencycuron, Prochloraz, Propamocarb, Propineb, Pyrimethanil, Sprioxamine, Quintozene, Tebuconazole, Tolylfluanid, Triadimefon, Triadimenol, Trifloxystrobin, Zineb.

Insektizide, akarizide, nematizide, mitizide und verwandte Wirkstoffe sind, beispielsweise (analog zu den Herbiziden und Fungiziden werden die Verbindungen nach Möglichkeit mit ihren Common names bezeichnet, hier in der üblichen englischen Schreibweise):

alanycarb, aldicarb, aldoxycarb, allyxycarb, aminocarb, bendiocarb, benfuracarb, bufencarb, butacarb, butocarboxim, butoxycarboxim, carbaryl, carbofuran, carbosulfan, cloethocarb, dimetilan, ethiofencarb, fenobucarb, fenothiocarb, formetanate, furathiocarb, isoprocarb, metam-sodium, methiocarb, methomyl, metolcarb, oxamyl, pirimicarb, promecarb, propoxur, thiodicarb, thiofanox, trimethacarb, XMC, xylylcarb, acephate, azamethiphos, azinphos (-methyl, -ethyl), bromophos-ethyl, bromfenvinfos (-methyl), butathiofos, cadusafos, carbophenothion, chlorethoxyfos, chlorfenvinphos, chlormephos, chlorpyrifos (-methyl/-ethyl), coumaphos, cyanofenphos, cyanophos, chlorfenvinphos, demeton-S-methyl, demeton-S-methylsulphon, dialifos, diazinon, dichlofenthion, dichlorvos/DDVP, dicrotophos, dimethoate, dimethylvinphos, dioxabenzofos, disulfoton, EPN, ethion, ethoprophos, etrimfos, famphur, fenamiphos, fenitrothion, fensulfothion, fenthion, flupyrazofos, fonofos, formothion, fosmethilan, fosthiazate, heptenophos, iodofenphos, iprobenfos, isazofos, isofenphos, isopropyl O-salicylate, isoxathion, malathion, mecarbam, methacrifos, methamidophos, methidathion, mevinphos, monocrotophos, naled, omethoate, oxydemeton-methyl, parathion (-methyl/-ethyl), phenthoate, phorate, phosalone, phosmet, phosphamidon, phosphocarb, phoxim, pirimiphos (-methyl/-ethyl), profenofos, propaphos, propetamphos, prothiofos, prothoate, pyraclofos, pyridaphenthion, pyridathion, quinalphos, sebufos, sulfotep, sulprofos, tebupirimfos, temephos, terbufos, tetrachlorvinphos, thiometon, triazophos, triclorfon, vamidothion, acrinathrin, allethrin (d-cis-trans, d-trans), betacyfluthrin, bifenthrin, bioallethrin, bioallethrin-S-cyclopentyl-isomer, bioethanomethrin, biopermethrin, bioresmethrin, chlovaporthrin, cis-cypermethrin, cis-resmethrin, cis-permethrin, clocythrin, cycloprothrin, cyfluthrin, cyhalothrin, cypermethrin (alpha-, beta-, theta-, zeta-), cyphenothrin, deltamethrin, empenthrin (1 R-isomer), esfenvalerate, etofenprox, fenfluthrin, fenpropathrin, fenpyrithrin, fenvalerate, flubrocythrinate, flucythrinate, flufenprox, flumethrin, fluvalinate, fubfenprox, gamma-cyhalothrin, imiprothrin, kadethrin, lambda-cyhalothrin, metofluthrin, permethrin (cis-, trans-), phenothrin (1 R-trans isomer), prallethrin, profluthrin, protrifenbute, pyresmethrin, resmethrin, RU 15525, silafluofen, taufluvalinate, tefluthrin, terallethrin, tetramethrin (-1 R- isomer), tralomethrin, transfluthrin, ZXI 8901, pyrethrins (pyrethrum), DDT, indoxacarb, acetamiprid, clothianidin, dinotefuran, imidacloprid, nitenpyram, nithiazine, thiacloprid, thiamethoxam, nicotine, bensultap, cartap, camphechlor, chlordane, endosulfan, gamma-HCH, HCH, heptachlor, lindane, methoxychlor spinosad, acetoprole, ethiprole, fipronil, vaniliprole, avermectin, emamectin, emamectin-benzoate, ivermectin, milbemycin, diofenolan, epofenonane, fenoxycarb, hydroprene, kinoprene, methoprene, pyriproxifen, triprene, chromafenozide, halofenozide, methoxyfenozide, tebufenozide, bistrifluron, chlofluazuron, diflubenzuron, fluazuron, flucycloxuron, flufenoxuron, hexaflumuron, lufenuron, novaluron, noviflumuron, penfluron, teflubenzuron, triflumuron, buprofezin, cyromazine, diafenthiuron, azocyclotin, cyhexatin, fenbutatin-oxide, chlorfenapyr, binapacyrl, dinobuton, dinocap, DNOC, fenazaquin, fenpyroximate, pyrimidifen, pyridaben, tebufenpyrad, tolfenpyrad, hydramethylnon, dicofol, rotenone, acequinocyl, fluacrypyrim, Bacillus thuringiensis strains, spirodiclofen, spiromesifen, 3-(2,5-dimethylphenyl)-8-methoxy-2-oxo-1-azaspiro[4.5]dec-3-en-4-yl ethyl carbonate (alias: carbonic acid, 3-(2,5-dimethylphenyl)-8-methoxy-2-oxo-1-azaspiro[4.5]dec-3-en-4-yl ethyl ester, CAS-Reg.-No.: 382608-10-8) and carbonic acid, cis-3-(2,5-dimethylphenyl)-8-methoxy-2-oxo-1-azaspiro[4.5]dec-3-en-4-yl ethyl ester (CAS-Reg.-No.: 203313-25-1), flonicamid, amitraz, propargite, N2-[1,1-dimethyl-2-(methylsulfonyl)ethyl]-3-iodo-N1-[2-methyl-4-[1,2,2,2-tetrafluoro-1-(trifluoromethyl)ethyl]phenyl]-1,2-benzenedicarboxamide (CAS-Reg.-No.: 272451-65-7), thiocyclam hydrogen oxalate, thiosultap-sodium, azadirachtin, Bacillus spec., Beauveria spec., codlemone, Metarrhizium spec., Paecilomyces spec., thuringiensin, Verticillium spec., aluminum phosphide, methyl bromide, sulfuryl fluoride, cryolite, flonicamid, pymetrozine, clofentezine, etoxazole, hexythiazox, amidoflumet, benclothiaz, benzoximate, bifenazate, bromopropylate, buprofezin, chinomethionat, chlordimeform, chlorobenzilate, chloropicrin, clothiazoben, cycloprene, dicyclanil, fenoxacrim, fentrifanil, flubenzimine, flufenerim, flutenzin, gossyplure, hydramethylnone, japonilure, metoxadiazone, petroleum, piperonyl butoxide, potassium oleate, pyridalyl, sulfluramid, tetradifon, tetrasul, triarathene, verbutin.

Insektizide, die bevorzugt gemeinsam mit den Herbiziden eingesetzt werden können, sind beispielsweise folgende:

Acetamiprid, Acrinathrin, Aldicarb, Amitraz, Acinphos-methyl, Cyfluthrin, Carbaryl, Cypermethrin, Deltamethrin, Endosulfan, Ethoprophos, Fenamiphos, Fenthion, Fipronil, Imidacloprid, Methamidophos, Methiocarb, Niclosamide, Oxydemeton-methyl, Prothiophos, Silafluofen, Thiacloprid, Thiodicarb, Tralomethrin, Triazophos, Trichlorfon, Triflumuron, Terbufos, Fonofos, Phorate, Chlorpyriphos, Carbofuran, Tefluthrin.

Die erfindungsgemäßen Wirkstoffkombinationen sind zur Bekämpfung eines breiten Unkrautspektrums im Nichtkulturland, auf Wegen, Gleisanlagen, Industrieflächen ("industrial weed control") oder in Plantagenkulturen wie gemäßigten, subtropischen und tropischen Klimaten oder Geographien geeignet. Beispiele für Plantagenkulturen sind Ölpalme, Nüsse (z. B. Mandeln, Haselnüsse, Walnüsse, Macademia), Kokosnuss, Beeren, Ölpalme, Gummibaum, Citrus (z. B. Orange, Zitrone, Mandarine), Bananen, Ananas, Baumwolle, Zuckerrohr, Tee, Kaffee, Kakao und Ähnliches. Ebenso sind sie für die Anwendung im Obstbau (z. B. Kernobst wie Apfel, Birne, Kirsche, Mango, Kiwi) und Weinbau geeignet. Die Mittel können auch zur Saatvorbereitung ("burn-down-" "no-till"- oder "zero-till"-Methode) oder zur Behandlung nach der Ernte ("chemical fallow") eingesetzt werden. Die Anwendungsmöglichkeiten der Wirkstoffkombinationen erstrecken sich auch zur Unkrautkontrolle in Baumkulturen, z. B. jungen Christbaumkulturen oder Eukalyptus-Anlagen, jeweils vor der Einpflanzung oder nach der Verpflanzung (auch mit Überkopfbehandlung, "over-top"). Auch können die Mittel in ausgewählten Kulturen wirtschaftlich wirtschaftlich bedeutenden Kulturen wie Getreide (Weizen, Gerste, Roggen, Hafer, Hirse, Mais und Reis), Zuckerrübe, Zuckerrohr, Raps, Baumwolle, Soja, Kartoffel, Tomate, Erbse und anderen Gemüsesorten eingesetzt werden. Bei Anwendung der Wirkstoffe (A) und (B) in Pflanzenkulturen wie Getreide und Mais ist es je nach Pflanzenkultur zweckmäßig, ab bestimmter Aufwandmengen einen Safener zu applizieren, um Schäden an der Kulturpflanze zu reduzieren oder zu vermeiden.

Die erfindungsgemäßen herbiziden Wirkstoffkombinationen in den jeweiligen Anwendungsformen (= herbiziden Mittel) weisen Synergien hinsichtlich der Herbizidwirkung und Selektivität und günstige Wirkung bezüglich des Unkrautspektums auf. Sie weisen eine ausgezeichnete herbizide Wirksamkeit gegen ein breites Spektrum wirtschaftlich wichtiger monokotyler und dikotyler annueller Schadpflanzen auf. Auch schwer bekämpfbare perennierende Schadpflanzen, die aus Rhizomen, Wurzelstöcken oder anderen Dauerorganen austreiben, werden durch die Wirkstoffe gut erfaßt.

Zur Anwendung können die Wirkstoffkombinationen auf die Pflanzen (z.B.

Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche), ausgebracht werden.

Dabei können die Substanzen im Vorsaat- (ggf. auch durch Einarbeitung in den Boden), Vorauflauf- oder Nachauflaufverfahren ausgebracht werden. Bevorzugt ist die Anwendung im frühen Nachsaat-Vorauflaufverfahren oder

im Nachauflaufverfahren von Plantagenkulturen gegen noch nicht aufgelaufene oder bereits aufgelaufene Schadpflanzen. Die Anwendung kann auch in Unkrautmanagment-Systemen (weed-management) mit geteilten mehrfachen Anwendungen (Sequenzanwendungen, "sequentials") integriert werden.

Im Einzelnen seien beispielhaft einige Vertreter der mono- und dikotylen Unkrautflora genannt, die durch die erfindungsgemäßen Wirkstoffkombinationen kontrolliert werden können, ohne dass durch die Nennung eine Beschränkung auf bestimmte Arten erfolgen soll.

Auf der Seite der monokotylen Unkrautarten werden z.B. Aegilops, Agropyron, Agrostis, Alopecurus, Apera, Avena, Brachicaria, Bromus, Cynodon, Dactyloctenium, Digitaria, Echinochloa, Eleocharis, Eleusine, Eragrostis, Eriochloa, Festuca, Fimbristylis, Imperata, Ischaemum, Heteranthera, Imperata, Ischaemum, Leptochloa, Lolium, Monochoria, Panicum, Paspalum, Phalaris, Phleum, Poa, Rottboellia, Sagittaria, Scirpus, Setaria, Sorghum, Sphenoclea und Cyperus-arten von der annuellen Gruppe erfasst.

Bei dikotylen Unkrautarten erstreckt sich das Wirkungsspektrum auf Arten wie z.B. Abutilon, Amaranthus, Ambrosia, Anoda, Anthemis, Aphanes, Artemisia, Atriplex, Bellis, Bidens, Capsella, Carduus, Cassia, Centaurea, Chenopodium, Cirsium, Convolvulus, Datura, Desmodium, Emex, Erysimum, Euphorbia, Galeopsis, Galinsoga, Galium, Hibiscus, Ipomoea, Kochia, Lamium, Lepidium, Lindernia, Matricaria, Mentha, Mercurialis, Mullugo, Myosotis, Papaver, Pharbitis, Plantago, Polygonum, Portulaca, Ranunculus, Raphanus, Rorippa, Rotala, Rumex, Salsola, Senecio, Sesbania, Sida, Sinapis, Solanum, Sonchus, Sphenoclea, Stellaria, Taraxacum, Thlaspi, Trifolium, Urtica, Veronica, Viola, Xanthium.

Werden die erfindungsgemäßen Wirkstoffkombinationen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt nach der Behandlung ein Wachstumsstop ein und die Schadpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, dass die in den Kombinationen verwendeten und wirksamen Dosierungen von Verbindungen (A) und (B) so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Mit dem kombinierten Einsatz der Herbizide (A) und (B) werden anwendungstechnische Eigenschaften erreicht, die über das hinausgehen, was aufgrund der bekannten Eigenschaften der Einzelherbizide für deren Kombination zu erwarten war. Beispielsweise übertreffen die herbiziden Wirkungen bei einer bestimmten Schadpflanzenspezies den Erwartungswert, wie nach Standardverfahren, z. B. gemäß Colby (siehe weiter unten) oder anderen Extrapolationsverfahren, abgeschätzt werden kann.

Die synergistischen Effekte erlauben daher beispielsweise eine Reduktion der Aufwandmengen der Einzelwirkstoffe, eine höhere Wirkungsstärke bei gleicher Aufwandmenge, die Kontrolle bislang nicht erfasster Arten von Schadpflanzen (Lücken), eine erhöhte Residualwirkung, eine erhöhte Langzeitwirkung, eine erhöhte Wirkungsgeschwindigkeit, eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Obgleich die erfindungsgemäßen Kombinationen eine ausgezeichnete herbizide Aktivität gegenüber mono- und dikotylen Unkräutern aufweisen, werden viele wirtschaftlich bedeutende Kulturpflanzen abhängig von der Struktur der jeweiligen erfindungsgemäßen Wirkstoffkombinationen und deren Aufwandmenge nur unwesentlich oder gar nicht geschädigt. Wirtschaftlich bedeutende Kulturen sind dabei z.B. dikotyle Kulturen der Gattungen Arachis, Beta, Brassica, Cucumis, Cucurbita, Helianthus, Daucus, Glycine, Gossypium, Ipomoea, Lactuca, Linum, Lycopersicon, Nicotiana, Phaseolus, Pisum, Solanum, Vicia, oder monokotyle Kulturen der Gattungen Allium, Ananas, Asparagus, Avena, Hordeum, Oryza, Panicum, Saccharum, Secale, Sorghum, Triticale, Triticum und Zea.

Darüberhinaus weisen die erfindungsgemäßen Mittel teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativem Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten Pflanzenkulturen oder noch zu entwickelnden, durch konventionelle Mutagenese veränderten oder gentechnisch veränderten, toleranten Kulturpflanzen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt. Weitere besondere Eigenschaften können in einer Toleranz oder Resistenz gegen abiotische Stressoren z. B. Hitze, Kälte, Trockenheit, Salz und ultraviolette Strahlung liegen.

Vorzugsweise können die erfindungsgemäßen Wirkstoffkombinationen als Herbizide in Nutzpflanzenkulturen eingesetzt werden, welche gegenüber den phytotoxischen Wirkungen der Herbizide resistent sind bzw. gentechnisch resistent gemacht worden sind.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).
- gentechnisch veränderte Kulturpflanzen mit neuen Inhalts- oder Sekundärstoffen z. B. neuen Phytoalexinen, die eine erhöhte Krankheitsresistenz verursachen (EPA 309862, EPA0464461)
- gentechnisch veränderte Pflanzen mit reduzierter Photorespiration, die höhere Erträge und höhere Stresstoleranz aufweisen (EPA 0305398).
- Transgene Kulturpflanzen, die pharmazeutisch oder diagnostisch wichtige Proteine produzieren ("molecular pharming")
- transgene Kulturpflanzen, die sich durch höhere Erträge oder bessere Qualitat auszeichnen
- transgene Kulturpflanzen die sich durch eine Kombinationen z. B. der o. g. neuen Eigenschaften auszeichnen ("gene stacking")

Zahlreiche molekularbiologische Techniken, mit denen neue transgene Pflanzen mit veränderten Eigenschaften hergestellt werden können, sind im Prinzip bekannt; siehe z. B. I. Potrykus und G. Spangenberg (eds.) Gene Transfer to Plants, Springer Lab Manual (1995), Springer Verlag Berlin, Heidelberg oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z. B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu

erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Vorzugsweise können die erfindungsgemäßen Wirkstoffkombinationen in transgenen Kulturen eingesetzt werden, welche gegen die eingesetzten Wirkstoffe tolerant sind bzw. tolerant gemacht worden sind.

Vorzugsweise können die erfindungsgemäßen Wirkstoffkombinationen auch in transgenen Kulturen eingesetzt werden, welche gegen Wuchsstoffe, wie z. B. Dicamba oder gegen Herbizide, die essentielle Pflanzenenzyme, z. B. Acetolactatsynthasen (ALS), EPSP Synthasen, Glutaminsynthasen (GS) oder Hydoxyphenylpyruvat Dioxygenasen (HPPD) hemmen, respektive gegen Herbizide aus der Gruppe der Sulfonylharnstoffe, der Glyphosate, Glufosinate oder Benzoylisoxazole und analogen Wirkstoffe, resistent sind.

Gegenstand der Erfindung ist deshalb auch ein Verfahren zur Bekämpfung von unerwünschtem Pflanzenwuchs, gegebenenfalls in Nutzpflanzenkulturen, vorzugsweise im Nichtkulturland oder in Plantagenkulturen, **dadurch gekennzeichnet, dass** man ein oder mehrere Herbizide des Typs (A) mit einem oder mehreren Herbiziden des Typs (B) auf die Schadpflanzen, Pflanzenteile oder Pflanzensamen (Saatgut) davon oder die Anbaufläche appliziert.

Gegenstand der Erfindung ist auch die Verwendung der neuen Kombinationen aus Verbindungen (A)+(B) zur Bekämpfung von Schadpflanzen, gegebenenfalls in Nutzpflanzenkulturen, vorzugsweise in Nichtkulturland und Plantagenkulturen.

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemischphysikalischen Parameter vorgegeben sind. Als allgemeine Formulierungsmöglichkeiten kommen beispielsweise in Frage: Spritzpulver (WP), wasserlösliche Pulver (SP), emulgierbare Konzentrate (EC), wasserlösliche Konzentrate, wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Öldispersionen (OD), Suspoemulsionen, Suspensionskonzentrate (SC), ölmischbare Lösungen, Kapselsuspensionen (CS), Stäubemittel (DP), Beizmittel, Granulate zur Boden- oder Streuapplikation, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln oder Wachse.

Gegenstand der Erfindung sind deshalb auch herbizide und pflanzenwachstumsregulierende Mittel, welche die erfindungsgemäßen Wirkstoffkombinationen enthalten.

Die einzelnen Formulierungstypen sind im Prinzip bekannt und werden beispielsweise beschrieben in: Winnacker-Küchler, "Chemische Technologie", Band 7, C. Hanser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1963; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hanser Verlag München, 4. Aufl. 1986.

Auf der Basis dieser Formulierungen lassen sich auch Kombinationen mit anderen pestizid wirksamen Stoffen, wie anderen Herbiziden, Fungiziden, Insektiziden oder anderen Schädlingsbekämpfungsmitteln (z. B. Akarizide, Nematizide, Molluskizide, Rodentizide, Aphizide, Avizide, Larvizide, Ovizide, Bakterizide, Viruzide, etc.), sowie Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen wie Hammermühlen, Gebläsemühlen und Luftstrahlmühlen feingemahlen und gleichzeitig oder anschließend mit den Formulierungshilfsmitteln vermischt.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z.B. Sorbitanfettsäureester oder wie z. B. Polyoxyethylensorbitanfettsäureester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls Tensiden, wie sie z.B. oben bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 0,2 bis 95 Gew.-%, Wirkstoffe der Typen (A) und/oder (B), wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration etwa 1 bis 90 Gew.-%, betragen, vorzugsweise 5 bis 80 Gewichtsprozent.

Staubförmige Formulierungen enthalten meistens 5 bis 20 Gew.-% an Wirkstoff, versprühbare Lösungen enthalten etwa 0.05 bis 80, vorzugsweise 2 bis 50 Gewichtsprozent (Gew.-%) Wirkstoff.

Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 1 und 95 Gew.-%, vorzugsweise zwischen 10 und 80 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gewichsteile (= Gew.-Teile) eines Wirkstoffs (A) oder (B) oder eines Wirkstoffgemischs (A) + (B) (und gegebenenfalls weiterer Wirkstoffkomponenten) und/oder deren Salze und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirkstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirkstoffgemischs mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis 277 °C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirkstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man
75 Gew.-Teile eines Wirkstoffs/Wirkstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin
mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man
25 Gew.-Teile eines Wirkstoffs/Wirkstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

1. Unkrautwirkung im Vorauflauf

Samen bzw. Rhizomstücke von mono- und dikotylen Unkrautpflanzen werden in Töpfen in sandiger Lehmerde ausgelegt und mit Erde abgedeckt. Die in Form von konzentrierten wäßrigen Lösungen, benetzbaren Pulvern oder Emulsionskonzentraten formulierten Mittel werden dann als wäßrige Lösung, Suspension bzw. Emulsion mit einer Wasseraufwandmenge von umgerechnet 300 bis 800 l/ha in unterschiedlichen Dosierungen auf die Oberfläche der Abdekkerde appliziert. Nach der Behandlung werden die Töpfe im Gewächshaus aufgestellt und unter guten Wachstumsbedingungen für die Unkräuter gehalten. Die optische Bonitur der Pflanzen- bzw. Auflaufschäden erfolgt nach dem Auflaufen der Versuchspflanzen nach einer Versuchszeit von 3 bis 4 Wochen im Vergleich zu unbehandelten Kontrollen. Wie die Testergebnisse zeigen, weisen die erfindungsgemäßen Mittel eine gute herbizide Vorauflaufwirksamkeit gegen ein breites Spektrum von Ungräsern und Unkräutern auf.

Bonitur und Bewertung der synergistischen Herbizidwirkungen:

Die herbizide Wirksamkeit der Wirkstoffe bzw. Wirkstoffmischungen wurde anhand der behandelten Töpfe (Böden) im Vergleich zu unbehandelten Kontrollen visuell bonitiert. Dabei wurde Schädigung und Entwicklung aller oberirdischen Pflanzenteile erfaßt. Die Bonitierung erfolgte nach einer Prozentskala (100% Wirkung = alle Plfanzen abgestorben bzw. nicht aufgelaufen; 50 % Wirkung = 50% der Pflanzen und grünen Pflanzenteile abgestorben bzw. nicht aufgelaufen; 0 % Wirkung = keine erkennbare Wirkung = wie Kontrollparzelle). Die Boniturwerte von jeweils 2

Wiederholungen (Töpfen) wurden gemittelt.

Bei der Anwendung der erfindungsgemäßen Kombinationen werden häufig herbizide Wirkungen an einer Schadpflanzenspezies beobachtet, die die formale Summe der Wirkungen der enthaltenen Herbizide bei alleiniger Applikation übertreffen. Alternativ kann in manchen Fällen beobachtet werden, dass eine geringere Aufwandmenge für die Herbizid-Kombination benötigt wird, um im Vergleich zu den Einzelpräparaten dieselbe Wirkung bei einer Schadpflanzenspezies zu erzielen. Derartige Wirkungssteigerungen bzw. Effektivitätssteigerungen oder Einsparungen an Aufwandmenge sind ein starker Hinweis auf synergistische Wirkung.

Wenn die beobachteten Wirkungswerte bereits die formale Summe der Werte zu den Versuchen mit Einzelapplikationen übertreffen, dann übertreffen sie den Erwartungswert nach Colby ebenfalls, der sich nach folgender Formel errechnet und ebenfalls als Hinweis auf Synergismus angesehen wird (vgl. S. R. Colby; in Weeds 15 (1967) S. 20 bis 22):

$$E = A+B-(A \cdot B/100)$$

Dabei bedeuten:

A = Wirkung des Wirkstoffs (A) in % bei einer Aufwandmenge von a g AS/ha;
B = Wirkung des Wirkstoffs (B) in % bei einer Aufwandmenge von b g AS/ha;
E = Erwartungswert der Wirkung der Kombination (A)+(B) in % bei der kombinierten Aufwandmenge a+b g AS/ha.

Die beobachteten Werte der Versuche zeigen bei geeigneten niedrigen Dosierungen eine Wirkung der Kombinationen, die über den Erwartungswerten nach Colby liegen.

2. Unkrautwirkung im Nachauflauf

Samen bzw. Rhizomstücke von mono- und dikotylen Unkräutern werden in Töpfen in sandigem Lehmboden ausgelegt, mit Erde abgedeckt und im Gewächshaus unter guten Wachstumsbedingungen (Temperatur, Luftfeuchtigkeit, Wasserversorgung) angezogen. Drei Wochen nach der Aussaat werden die Versuchspflanzen im Dreiblattstadium mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 300 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert (Bonitur wie in Beispiel 1). Die erfindungsgemäßen Mittel weisen auch im Nachauflauf eine gute herbizide Wirksamkeit gegen ein breites Spektrum wirtschaftlich wichtiger Ungräser und Unkräuter auf.

Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby (vgl. Bonitur in Beispiel 1) liegen.

3. Herbizide Wirkung im Vor- und Nachauflauf (Feldversuche)

Entsprechend den Gewächshausversuchen der Abschnitte 1 und 2 wurden die Versuche auf Parzellen in Freiland durchgeführt. Die Bonitur erfolgte analog den Versuchen in Abschnitten 1 und 2.

4. Herbizide Wirkung und Kulturpflanzenverträglichkeit (Feldversuche)

Kulturpflanzen wurden im Freiland auf Parzellen unter natürlichen Freilandbedingungen herangezogen, wobei Samen oder Rhizomstücke von typischen Schadpflanzen ausgelegt worden waren bzw. die natürliche Verunkrautung genutzt wurde. Die Behandlung mit den erfindungsgemäßen Mitteln erfolgte nach dem Auflaufen der Schadpflanzen und der Kulturpflanzen in der Regel im 2 bis 4-Blattstadium; teilweise (wie angegeben) erfolgte die Applikation einzelner Wirkstoffe oder Wirkstoffkombinationen preemergent oder als Sequenzbehandlung teilweise preemergent und/oder postemergent. Im Falle von Plantagenkulturen wurde in der Regel nur der Boden zwischen den einzelnen Kulturpflanzen mit den Wirkstoffen behandelt.

Nach der Anwendung, z. B. 2, 4, 6 und 8 Wochen nach Applikation wurde die Wirkung der Präparate optisch im Vergleich zu unbehandelten Kontrollen bonitiert (vgl. Bonitur in Beispiel 1). Die erfindungsgemäßen Mittel weisen auch im Feldversuch eine synergistische herbizide Wirksamkeit gegen ein breites Spektrum wirtschaftlich wichtiger

Ungräser und Unkräuter auf. Der Vergleich zeigte, dass die erfindungsgemäßen Kombinationen meist mehr, teilweise erheblich mehr herbizide Wirkung aufweisen als die Summe der Wirkungen der Einzelherbizide und weist deshalb auf einen Synergismus hin. Außerdem lagen die Wirkungen in wesentlichen Abschnitten des Boniturzeitraums über den Erwartungswerten nach Colby (vgl. Bonitur in Beispiel 1) und weisen deshalb ebenfalls auf einen Synergismus hin. Die Kulturpflanzen dagegen wurden infolge der Behandlungen mit den herbiziden Mitteln nicht oder nur unwesentlich geschädigt.

5. Spezielle Versuchsbeispiele

Folgenden Abkürzungen werden in der Beschreibung und den nachfolgenden Tabellen verwendet:

g AS/ha = Gramm Aktivsubstanz (= 100% Wirkstoff) pro Hektar;

Die Summe der Wirkungen der Einzelapplikationen ist unter $E^A$ angegeben; Erwartungswerte nach Colby sind jeweils unter $E^C$ angegeben;

Beispiel 5.1

Entsprechend dem allgemeinen Beispiel 2 (Nachauflaufverfahren) wurden bestimmte Kombinationen auf ihre herbizide Wirkung getestet. Die Ergebnisse sind in Tabelle 4 zusammengefasst.

Tabelle 4

| Wirkstoff(e) | Aufwandmenge [g AS/ha] | Herbizide Wirkung [%] an Ipomoea hederifolia |
|---|---|---|
| (A21) | 0,5<br>0,2 | 45<br>0 |
| (B1.1.2) | 2,0<br>0,5 | 50<br>5 |
| (A21) + (B1.1.2) | 0,2 + 0,5 | 67<br>($E^A$ = 0 + 5, $E^C$ = 0 + 5) |

Abkürzungen in Tabelle 2:
Bedingungen: Topfversuch/Gewächshaus, Applikation im Vorauflauf, Auswertung 27 Tage nach Behandlung
AS = Aktivsubstanz (bezogen auf 100% Wirkstoff)
(A21) = Verbindung (A21) aus Tabelle 1 = 2-Amino-4-[(1*R*, 2*S*)-2,6-dimethylindan-1-ylamino]-6-[(1*R*)-1-fluoroethyl]-1,3,5-triazin
(B1.1.2) = Thiencarbazone-methyl = 4-[(4,5-Dihydro-3-methoxy-4-methyl-5-oxo-1*H*-1,2,4-triazol-1-yl)-carbonyl-sulfamoyl]-5-methylthiophen-3-carbonsäuremethylester

**Patentansprüche**

**1.** Herbizid-Kombination mit einem wirksamen Gehalt an Komponenten (A) und (B), wobei Komponente (A) für einen oder mehrere herbizide Wirkstoffe der Formel (I) oder deren Salze [Herbizide (A)] steht,

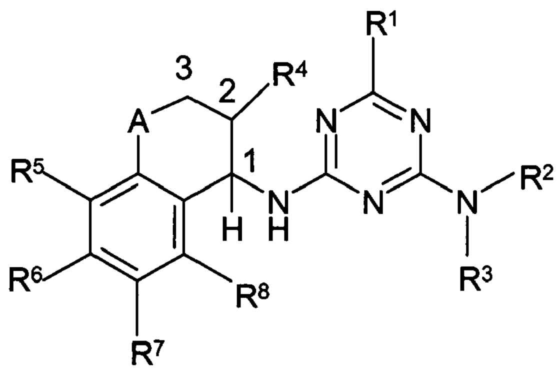

(I)

worin

$R^1$ H oder eine Gruppe der Formel $CZ^1Z^2Z^3$, wobei

$Z^1$ H, Halogen, $(C_1-C_6)$Alkyl, $(C_1-C_6)$Haloalkyl, $[(C_1-C_4)$Alkoxy]- $(C_1-C_6)$alkyl, $(C_3-C_6)$Cycloalkyl, das unsubstituiert oder durch einen oder mehrere Reste aus der Gruppe Halogen, $(C_1-C_4)$Alkyl und $(C_1-C_4)$ Haloalkyl substituiert ist, oder $(C_2-C_6)$Alkenyl, $(C_2-C_6)$Alkinyl, $(C_2-C_6)$Haloalkenyl, $(C_4-C_6)$Cycloalkenyl, $(C_4-C_6)$Halocycloalkenyl, $(C_1-C_6)$Alkoxy oder $(C_1-C_6)$Haloalkoxy,
$Z^2$ H, Halogen, $(C_1-C_6)$Alkyl oder $(C_1-C_4)$Alkoxy; oder
$Z^1$ und $Z^2$ zusammen mit dem Kohlenstoffatom der Gruppe $CZ^1Z^2Z^3$ einen $(C_3-C_6)$Cycloalkylrest oder $(C_4-C_6)$Cycloalkenylrest, wobei jeder der beiden letztgenannten Reste unsubstituiert oder durch einen oder mehrere Reste aus der Gruppe $(C_1-C_4)$Alkyl substituiert ist, und
$Z^3$ H, $(C_1-C_6)$Alkyl, $(C_1-C_4)$Alkoxy oder Halogen

bedeuten,
$R^2$ und $R^3$ jeweils unabhängig voneinander H, $(C_1-C_4)$Alkyl, $(C_1-C_4)$Haloalkyl, $(C_3-C_4)$Alkenyl, $(C_3-C_4)$Haloalkenyl, $(C_3-C_4)$Alkinyl, $(C_3-C_4)$Haloalkinyl oder einen Acylrest,
$R^4$ H, $(C_1-C_6)$Alkyl oder $(C_1-C_6)$Alkoxy,
$R^5$, $R^6$, $R^7$ und $R^8$ jeweils unabhängig voneinander H, $(C_1-C_4)$Alkyl, $(C_1-C_3)$Haloalkyl, Halogen, $(C_1-C_3)$Alkoxy, $(C_1-C_3)$Haloalkoxy oder Cyano und
A eine divalente Gruppe der Formel $CH_2$ oder O oder eine direkte Bindung

bedeuten,
und Komponente (B) für einen oder mehrere herbizide Wirkstoffe (B) aus der Gruppe der herbiziden Wirkstoffe (B1), (B2) und (B3) steht, wobei die herbiziden Wirkstoffe

(B1) herbizide Wirkstoffe, welche besonders für die postemergente Applikation gegen monokotyle oder dikotyle Schadpflanzen geeignet sind, ausgewählt aus der Gruppe

(B1.1) Thiencarbazone und dessen Ester und Salze,
(B1.2) Tembotrione und dessen Salze,
(B1.3) [[3-[2-Chlor-5-[3,6-dihydro-3-methyl-2,6-dioxo-4-(trifluormethyl)-1(2H)-pyrimidinyl]-4-fluorphenoxy]-2-pyridinyl]oxy]-essigsäureethylester (SYN-523)
(B1.4) Pyroxsulam und dessen Salze,
(B1.5) Penoxsulam und dessen Salze
(B1.6) 4-Hydroxy-3-[[2-[(2-methoxy-ethoxy)-methyl]-6-trifluoromethyl-3-pyridinyl]-carbonyl]-bicyclo[3.2.1]oct-3-en-2-on (SYN-449) und dessen Salze,

(B2) herbizide Wirkstoffe, welche besonders für die postemergente Applikation gegen dikotyle Schadpflanzen geeignet sind, ausgewählt aus der Gruppe

(B2.1) Pyrasulfotole und dessen Salze,
(B2.2) Trifloxysulfuron und dessen Salze,
(B2.3) Saflufenacil und dessen Salze,

(B2.4) Aminopyralid und dessen Salze,
(B2.5) Ethofumesate,
(B2.6) Aminocyclopyrachlor und dessen Salze und Ester und

(B3) herbizide Wirkstoffe, welche besonders für die preemergente Applikation gegen monokotyle oder dikotyle Schadpflanzen geeignet sind, ausgewählt aus der Gruppe

(B3.1) Pyroxasulfone (KIH-485)

bedeuten.

**2.** Herbizid-Kombination nach Anspruch 1, **dadurch gekennzeichnet, dass**

$R^1$ H oder eine Gruppe der Formel $CZ^1Z^2Z^3$, worin

$Z^1$ H, Halogen, $(C_1-C_4)$Alkyl, $(C_1-C_4)$Haloalkyl, $[(C_1-C_4)$Alkoxy]- $(C_1-C_6)$alkyl, $(C_3-C_6)$Cycloalkyl, das unsubstitutiert oder durch einen oder mehrere Reste aus der Gruppe $(C_1-C_4)$Alkyl substituiert ist, oder $(C_2-C_4)$alkenyl, $(C_2-C_4)$alkinyl, $(C_1-C_4)$Alkoxy oder $(C_1-C_4)$Haloalkoxy;
$Z^2$ H, Halogen, $(C_1-C_4)$Alkyl oder
$Z^1$ und $Z^2$ zusammen mit dem an die Reste gebundenen Kohlenstoffatom einen $(C_3-C_6)$Cycloalkylrest und
$Z^3$ H, $(C_1-C_4)$Alkyl, $(C_1-C_2)$Alkoxy oder Halogen, bedeuten,

$R^2$ H, $(C_1-C_4)$Alkyl, $(C_1-C_4)$Haloalkyl, $(C_3-C_4)$Alkenyl, $(C_3-C_4)$Haloalkenyl, $(C_3-C_4)$Alkinyl, $(C_3-C_4)$Haloalkinyl oder einen Acylrest mit 1 bis 12 C- Atomen,
$R^3$ H, $(C_1-C_4)$Alkyl oder $(C_1-C_4)$Haloalkyl,
$R^4$ H, $(C_1-C_3)$Alkyl oder $(C_1-C_3)$Alkoxy;
$R^5$, $R^6$, $R^7$ und $R^8$ jeweils unabhängig voneinander H, $(C_1-C_3)$Alkyl, Halogen, $(C_1-C_3)$Alkoxy,
A eine divalente Gruppe der Formel $CH_2$ oder O oder eine direkte Bindung, vorzugsweise $CH_2$ oder eine direkte Bindung, insbesondere eine direkte Bindung,

bedeuten.

**3.** Herbizid-Kombination nach Anspruch 1 oder 2, **dadurch gekennzeichnet, dass** Komponente (B) einen oder mehrere Wirkstoffe, ausgewählt ist aus der Gruppe (B1.1.2) Thiencarbazone-methyl, (B1.2.1) Tembotrione, (B1.3) SYN-523, (B1.4.1) Pyroxsulam, (B1.5.1) Penoxsulam, (B1.6.1) SYN-449, (B2.1.1) Pyrasulfotole, (B2.2.2) Trifloxysulfuron-natriumsalz (B2.3.1) Saflufenacil, (B2.4.1) Aminopyralid, (B2.5) Ethofumesate, (B2.6) Aminocyclopyrachlor und dessen Salze und Ester und (B3.1) Pyroxasulfone, bedeutet.

**4.** Herbizid-Kombination nach einem der Ansprüche 1 bis 3, **dadurch gekennzeichnet, dass** sie die Wirkstoffkomponenten (A) und (B) in einem Gewichtsverhältnis von 1:100000 bis 2000:1 enthält.

**5.** Herbizid-Kombination nach einem der Ansprüche 1 bis 3, **dadurch gekennzeichnet, dass** sie die Wirkstoffkomponenten (A) und (B) in einem Gewichtsverhältnis von 1:40000 bis 750:1 enthält.

**6.** Herbizid-Kombination nach einem der Ansprüche 1 bis 5, **dadurch gekennzeichnet, dass** sie eine oder mehrere weitere Komponenten aus der Gruppe enthaltend Pflanzenschutzmittelwirkstoffe anderer Art enthält.

**7.** Herbizides Mittel, **dadurch gekennzeichnet, dass** es die Herbizid-Kombination gemäß einem der Ansprüche 1 bis 6 und ein oder mehrere im Pflanzenschutz übliche Zusatzstoffe enthält.

**8.** Verfahren zur Bekämpfung von Schadpflanzen oder zur Wachstumsregulierung von Pflanzen, **dadurch gekennzeichnet, dass** man die Wirkstoffkomponenten der Herbizid-Kombination, definiert gemäß einem der Ansprüche 1 bis 6, gemeinsam oder getrennt im Vorauflauf, Nachauflauf oder im Vor- und Nachauflauf auf die Pflanzen, Pflanzenteile, Pflanzensamen oder die Anbaufläche appliziert.

**9.** Verfahren gemäß Anspruch 8, **dadurch gekennzeichnet, dass** die Herbizidkomponente (A) in einer Aufwandmenge von 0,01 bis 2000 g Aktivsubstanz pro Hektar und die Herbizidkomponente (B) in einer Aufwandmenge von 0,01 bis 1000 g Aktivsubstanz pro Hektar appliziert werden.

**10.** Verfahren nach Anspruch 8 oder 9 zur Bekämpfung von Schadpflanzen auf Nichtkulturland oder in Plantagenkulturen.

**11.** Verfahren nach einem der Ansprüche 8 bis 10, **dadurch gekennzeichnet, dass** man die Wirkstoffe der Herbizid-Kombination in Form eines herbiziden Mittels, welches ein oder mehrere im Pflanzenschutz übliche Zusatzstoffe enthält, gegebenenfalls nach Verdünnen mit Wasser, appliziert.

**12.** Verwendung der nach einem der Ansprüche 1 bis 6 definierten Herbizid-Kombination zur Bekämpfung von Schadpflanzen oder zur Wachstumsregulierung von Pflanzen.

Europäisches Patentamt
European Patent Office
Office européen des brevets

# EUROPÄISCHER RECHERCHENBERICHT

Nummer der Anmeldung
EP 08 00 3156

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | WO 2006/007947 A (BAYER CROPSCIENCE GMBH [DE]; HACKER ERWIN [DE]; ROSE ECKHARD [DE]; DIE) 26. Januar 2006 (2006-01-26)<br>* Zusammenfassung *<br>* Seite 3, Absatz 2 - Seite 4 *<br>* Tabelle 1; Verbindungen B2.1.7,B2.1.8,B2.2.11,B3.2.2 *<br>----- | 1-12 | INV.<br>A01N43/68<br>A01N47/38<br>A01N47/36<br>A01N43/90<br>A01N43/80<br>A01N43/56<br>A01N43/54<br>A01N43/40<br>A01N43/12<br>A01N41/10<br>A01P13/00 |
| Y | WO 2004/080171 A (BASF AG [DE]; WITSCHEL MATTHIAS [DE]; ZAGAR CYRILL [DE]; LANDES ANDREA) 23. September 2004 (2004-09-23)<br>* Zusammenfassung *<br>* Seite 12, Zeile 19 - Seite 13 *<br>----- | 1-12 | |
| Y | WO 2007/079965 A (BAYER CROPSCIENCE AG [DE]; ENDO KEIJI [JP]; SHIRAKURA SHINICHI [JP]; N) 19. Juli 2007 (2007-07-19)<br>* Zusammenfassung; Tabelle 2 *<br>----- | 1-12 | |
| D,Y | DE 196 07 450 A1 (HOECHST SCHERING AGREVO GMBH [DE]) 4. September 1997 (1997-09-04)<br>* Zusammenfassung *<br>* Seite 2, Zeile 5 - Zeile 12 *<br>* Seite 32, Zeile 40 - Seite 33, Zeile 32; Verbindungen 2,3,38,43,199,200,231,240 *<br>----- | 1-12 | RECHERCHIERTE SACHGEBIETE (IPC)<br>A01N |
| D,A | WO 00/16627 A (HOECHST SCHERING AGREVO GMBH [DE]; HACKER ERWIN [DE]; BIERINGER HERMAN) 30. März 2000 (2000-03-30)<br>* Zusammenfassung *<br>* Beispiel 22 *<br>----- | 1-12 | |

Der vorliegende Recherchenbericht wurde für alle Patentansprüche erstellt

| Recherchenort | Abschlußdatum der Recherche | Prüfer |
|---|---|---|
| München | 28. Oktober 2008 | Molina de Alba, José |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

2

EPO FORM 1503 03.82 (P04C03)

Europäisches Patentamt
European Patent Office
Office européen des brevets

Nummer der Anmeldung
EP 08 00 3156

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☒ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

1-12 (teil)

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches Patentamt
European Patent Office
Office européen des brevets

# MANGELNDE EINHEITLICHKEIT DER ERFINDUNG ERGÄNZUNGSBLATT B

Nummer der Anmeldung
EP 08 00 3156

Nach Auffassung der Recherchenabteilung entspricht die vorliegendeeuropäische Patentanmeldung nicht den Anforderungen an die Einheitlichkeit der Erfindungund enthält mehrere Erfindungen oder Gruppen von Erfindungen, nämlich:

1. Ansprüche: 1-12(teil)

   Herbizid-Kombination wie in Anspruch 1, wobei die Komponente (B) Thiencarbazone ist.

   ---

2. Ansprüche: 1-12(teil)

   Herbizid-Kombination wie in Anspruch 1, wobei die Komponente (B) Tembotrione oder SYN-449 ist.

   ---

3. Ansprüche: 1-12(teil)

   Herbizid-Kombination wie in Anspruch 1, wobei die Komponente (B) SYN-523 oder Saflufenacil ist.

   ---

4. Ansprüche: 1-12(teil)

   Herbizid-Kombination wie in Anspruch 1, wobei die Komponente (B) Pyroxulam oder Penoxulam ist.

   ---

5. Ansprüche: 1-12(teil)

   Herbizid-Kombination wie in Anspruch 1, wobei die Komponente (B) Pyrasulfotole oder Pyroxasulfone ist.

   ---

6. Ansprüche: 1-12(teil)

   Herbizid-Kombination wie in Anspruch 1, wobei die Komponente (B) Trifloxysulfuron ist.

   ---

7. Ansprüche: 1-12(teil)

   Herbizid-Kombination wie in Anspruch 1, wobei die Komponente (B) Aminopyralid ist.

   ---

8. Ansprüche: 1-12(teil)

   Herbizid-Kombination wie in Anspruch 1, wobei die Komponente (B) Ethofumesate ist.

   ---

9. Ansprüche: 1-12(teil)

Europäisches Patentamt
European Patent Office
Office européen des brevets

# MANGELNDE EINHEITLICHKEIT DER ERFINDUNG ERGÄNZUNGSBLATT B

Nummer der Anmeldung
EP 08 00 3156

Nach Auffassung der Recherchenabteilung entspricht die vorliegendeeuropäische Patentanmeldung nicht den Anforderungen an die Einheitlichkeit der Erfindungund enthält mehrere Erfindungen oder Gruppen von Erfindungen, nämlich:

Herbizid-Kombination wie in Anspruch 1, wobei die Komponente (B) Aminocyclopyrachlor ist.

---

## ANHANG ZUM EUROPÄISCHEN RECHERCHENBERICHT ÜBER DIE EUROPÄISCHE PATENTANMELDUNG NR. EP 08 00 3156

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2008

| Im Recherchenbericht angeführtes Patentdokument | Datum der Veröffentlichung | Mitglied(er) der Patentfamilie | Datum der Veröffentlichung |
|---|---|---|---|
| WO 2006007947 A | 26-01-2006 | AR 049984 A1 | 20-09-2006 |
| | | AT 387090 T | 15-03-2008 |
| | | AU 2005263406 A1 | 26-01-2006 |
| | | BR PI0513459 A | 06-05-2008 |
| | | CA 2574137 A1 | 26-01-2006 |
| | | CN 1997279 A | 11-07-2007 |
| | | DE 102004034571 A1 | 23-02-2006 |
| | | DK 1771071 T3 | 23-06-2008 |
| | | EP 1771071 A1 | 11-04-2007 |
| | | ES 2301024 T3 | 16-06-2008 |
| | | JP 2008506642 T | 06-03-2008 |
| | | US 2006019829 A1 | 26-01-2006 |
| | | US 2006014642 A1 | 19-01-2006 |
| WO 2004080171 A | 23-09-2004 | AU 2004218837 A1 | 23-09-2004 |
| | | BR PI0408201 A | 14-02-2006 |
| | | CA 2518621 A1 | 23-09-2004 |
| | | CN 1761395 A | 19-04-2006 |
| | | EP 1605760 A2 | 21-12-2005 |
| | | JP 2006520341 T | 07-09-2006 |
| | | KR 20050115906 A | 08-12-2005 |
| | | MX PA05009112 A | 20-10-2005 |
| WO 2007079965 A | 19-07-2007 | AR 058966 A1 | 05-03-2008 |
| | | EP 1976384 A2 | 08-10-2008 |
| | | JP 2007186460 A | 26-07-2007 |
| | | US 2007167328 A1 | 19-07-2007 |
| DE 19607450 A1 | 04-09-1997 | AU 714187 B2 | 23-12-1999 |
| | | AU 1769397 A | 16-09-1997 |
| | | BG 64096 B1 | 31-12-2003 |
| | | BG 102706 A | 30-04-1999 |
| | | BR 9707781 A | 27-07-1999 |
| | | CA 2248338 A1 | 04-09-1997 |
| | | CN 1212687 A | 31-03-1999 |
| | | CZ 9802761 A3 | 16-12-1998 |
| | | WO 9731904 A1 | 04-09-1997 |
| | | EP 0885201 A1 | 23-12-1998 |
| | | HU 9901113 A2 | 28-07-1999 |
| | | ID 16056 A | 28-08-1997 |
| | | JP 2000505462 T | 09-05-2000 |
| | | PL 328660 A1 | 15-02-1999 |
| | | RU 2314297 C2 | 10-01-2008 |
| | | TR 9801714 T2 | 21-12-1998 |
| | | US 6069114 A | 30-05-2000 |
| | | ZA 9701642 A | 25-11-1997 |

EPO FORM P0461

Für nähere Einzelheiten zu diesem Anhang : siehe Amtsblatt des Europäischen Patentamts, Nr.12/82

**ANHANG ZUM EUROPÄISCHEN RECHERCHENBERICHT ÜBER DIE EUROPÄISCHE PATENTANMELDUNG NR.** EP 08 00 3156

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2008

| Im Recherchenbericht angeführtes Patentdokument | Datum der Veröffentlichung | Mitglied(er) der Patentfamilie | Datum der Veröffentlichung |
|---|---|---|---|
| WO 0016627 A | 30-03-2000 | AT 315336 T | 15-02-2006 |
| | | AU 772607 B2 | 06-05-2004 |
| | | AU 5979699 A | 10-04-2000 |
| | | BG 65251 B1 | 31-10-2007 |
| | | BR 9914496 A | 26-06-2001 |
| | | CA 2344394 A1 | 30-03-2000 |
| | | CN 1317931 A | 17-10-2001 |
| | | DE 19842894 A1 | 23-03-2000 |
| | | EP 1113720 A1 | 11-07-2001 |
| | | ES 2257099 T3 | 16-07-2006 |
| | | HR 20010193 A2 | 30-04-2002 |
| | | HU 0104269 A2 | 28-03-2002 |
| | | ID 29884 A | 18-10-2001 |
| | | JP 2002526428 T | 20-08-2002 |
| | | NZ 510192 A | 19-12-2003 |
| | | PL 346878 A1 | 11-03-2002 |
| | | PT 1113720 T | 31-05-2006 |
| | | SK 3772001 A3 | 11-09-2001 |
| | | TR 200100781 T2 | 22-10-2001 |
| | | UA 72746 C2 | 17-09-2001 |
| | | ZA 200102106 A | 14-10-2002 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9731904 A
- US 6069114 A
- WO 0016627 A
- WO 2006007947 A
- WO 0105788 A
- WO 0021924 A
- WO 2006061562 A
- EP 1122244 A
- WO 2006097322 A
- WO 0194339 A
- WO 2001083459 A
- WO 199838856 A
- WO 199813361 A
- WO 1999000020 A
- RU 15525
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A
- EP 309862 A
- EP 0464461 A
- EP 0305398 A


### In der Beschreibung aufgeführte Nicht-Patentliteratur


- The Pesticide Manual. British Crop Protection Council, 2006
- *Weed Research,* 1986, vol. 26, 441-445
- The Pesticide Manual. The British Crop Protection Council and the Royal Soc. of Chemistry, 2006
- e-Pesticide Manual. 2006
- Gene Transfer to Plants. Springer Lab Manual, 1995
- **Heidelberg ; Christou.** Trends in Plant Science. Springer Verlag Berlin, 1996, vol. 1, 423-431
- **Sambrook et al.** Molecular Cloning, A Laboratory Manual. Cold Spring Harbor Laboratory Press, Cold Spring Harbor, 1989
- **Winnacker.** Gene und Klone. VCH Weinheim, 1996
- **Braun et al.** *EMBO J.,* 1992, vol. 11, 3219-3227
- **Wolter et al.** *Proc. Natl. Acad. Sci. USA,* 1988, vol. 85, 846-850
- **Sonnewald et al.** *Plant J.,* 1991, vol. 1, 95-106
- **Winnacker-Küchler.** Chemische Technologie. C. Hanser Verlag München, 1986, vol. 7
- **van Valkenburg.** Pesticides Formulations. Marcel Dekker N.Y, 1973
- **K. Martens.** Spray Drying Handbook. G. Goodwin Ltd, 1979
- Handbook of Insecticide Dust Diluents and Carriers. Caldwell N.J,
- **H.v. Olphen.** Introduction to Clay Colloid Chemistry. J. Wiley & Sons
- **Marsden.** Solvents Guide. Interscience, 1963
- **McCutcheon's.** Detergents and Emulsifiers Annual. MC Publ. Corp,
- **Sisley ; Wood.** Encyclopedia of Surface Active Egents. Chem. Publ. Co. Inc, 1964
- **Schönfeldt.** Grenzflächenaktive Äthylenoxidaddukte. Wiss. Verlagsgesellschaft, 1976
- **Winnacker-Küchler.** Chemische Technologie. C. Hanser Verlag, 1986, vol. 7
- **S. R. Colby.** *Weeds,* 1967, vol. 15, 20-22